(19) **Europäisches Patentamt / European Patent Office / Office européen des brevets**

(11) **EP 4 648 482 A1**

(12) **EUROPEAN PATENT APPLICATION**
published in accordance with Art. 153(4) EPC

(43) Date of publication:
**12.11.2025 Bulletin 2025/46**

(21) Application number: **24760106.5**

(22) Date of filing: **05.02.2024**

(51) International Patent Classification (IPC):
*H04W 40/02* (2009.01)      *H04W 4/38* (2018.01)
*H04W 40/12* (2009.01)      *H04W 40/24* (2009.01)
*H04W 84/18* (2009.01)

(52) Cooperative Patent Classification (CPC):
H04W 4/38; H04W 40/02; H04W 40/12;
H04W 40/24; H04W 84/18

(86) International application number:
**PCT/JP2024/003775**

(87) International publication number:
**WO 2024/176800 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.02.2023 PCT/JP2023/006694**

(71) Applicant: **MITSUBISHI ELECTRIC CORPORATION**
**Chiyoda-ku**
**Tokyo 100-8310 (JP)**

(72) Inventors:
• KAWASHIMA, Yuki
  Tokyo 100-8310 (JP)
• SHIROKURA, Yoshihiko
  Tokyo 100-8310 (JP)
• KINOSHITA, Yusuke
  Tokyo 100-8310 (JP)
• MATSUTAKA, Yasushi
  Tokyo 100-8310 (JP)
• WATANABE, Taiki
  Tokyo 100-8310 (JP)
• FUKASAWA, Shohei
  Tokyo 100-8310 (JP)

(74) Representative: **Pfenning, Meinig & Partner mbB**
**Patent- und Rechtsanwälte**
**Theresienhöhe 11a**
**80339 München (DE)**

(54) **SLAVE APPARATUS, MASTER APPARATUS, COMMUNICATION SYSTEM, COMMUNICATION METHOD, AND PROGRAM**

(57)   In a slave unit connected to a wireless mesh network, a second communication device (200) that receives a control message from a neighboring node, a protocol decision unit (330) that decides whether to process the control message with a first protocol or a second protocol, and an upward route construction unit (360) that calculates a first rank value in accordance with the first protocol and a second rank value in accordance with the second protocol using the route information contained in the control message, selects a master node from the neighboring nodes based on the first rank value and the second rank value, and records the ID of the master node in a routing table (902).

Fig. 6

**Description**

**Technical Field**

The present disclosure relates to a slave unit, a master unit, and a communication system.

**Background Art**

There has been used a wireless mesh network for a sensor network to collect environmental information and to collect meter readings of power consumption by smart meters. In the wireless mesh network, a collection device to collect data and slave units autonomously construct a network by using a wireless device.

In the future, it is less likely to be dealt with the existent communication system of smart meters, and a next-generation smart meter in a communication system different from the existing communication systems is likely to be required.

As a routing protocol of wireless mesh networks, RPL (routing protocol for low-power and lossy networks) is specified in Non-Patent Literature 1 as an Internet Standard.

There is a request in the wireless mesh network using the RPL to realize acceleration of collection cycles and widening of the bandwidth of communication while maintaining the data collection function of a wireless mesh network that has been already constructed.

Patent Literature 1 proposes a method to select a communication path by converting signal strength values to calculate the quality value of routes by the wireless communication systems depending on the wireless communication systems.

**Citation List**

**Patent Literature**

**Patent Literature** 1: JP6752383 B1

**Non-Patent Literature**

**Non-Patent Literature** 1: IFTF(Internet Engineering Task Force) Trust, T. Winter, et al., "RPL: IPv6 Routing Protocol for Low Power and Lossy Networks", IETF, RFC (Request for Comments): 6550, ISSN: 2070-1721, March 2012 <URL: https://www.rfc-editor.org/rfc/rfc6550>, (Searched on Jan. 25th, 2023)

**Summary of Invention**

**Technical Problem**

The present disclosure is aimed at making it possible to select the most preferable communication system between communication units when a communication unit capable of using a plurality of types of communication systems and a communication unit only capable of using one type of communication system both exist.

**Solution to Problem**

There is provided according to the present disclosure a slave unit connected to a wireless mesh network constructed based on a first rank value calculated by a first protocol includes:

a communication device to receive one or more control messages indicating route information including rank information of a node, from one or more neighboring nodes;
a protocol decision unit to decide to perform a process in accordance with a second protocol with respect to the rank information;
an upward route construction unit to calculate a second rank value using the rank information in accordance with the second protocol based on a decision result by the protocol decision unit, to select one node from among the one or more neighboring nodes based on one or more second rank values as a master node, and to record in a routing table an ID of the master node and the second rank value calculated using rank information of the master node; and
a multi-hop communication unit to create a notification message to notify of the ID of the master node recorded in the routing table, and to transmit the notification message to a master unit.

## Advantageous Effects of Invention

In the present disclosure, it is possible to select a preferable communication system from among a plurality of kinds of communication systems since an upward route construction unit calculates a second rank value in accordance with a second protocol so as to select a more preferable communication system than with a first rank value in accordance with a first protocol.

## Brief Description of Drawings

Fig. 1 is a configuration diagram of a communication system 501 according to a first embodiment;
Fig. 2 is a configuration diagram of a first collection device 10 according to the first embodiment;
Fig. 3 is a configuration diagram of a first slave unit 10x according to the first embodiment;
Fig. 4 is a configuration diagram of a communication system 502 according to the first embodiment;
Fig. 5 is a configuration diagram of a second collection device 20 according to the first embodiment;
Fig. 6 is a configuration diagram of a second slave unit 20x according to the first embodiment;
Fig. 7 is a configuration diagram of a third slave unit 30x according to the first embodiment;
Fig. 8 is a diagram illustrating a sequence in a case of entering of a first slave unit 10a, a second slave unit 20d and a third slave unit 30e according to the first embodiment;
Fig. 9 is a diagram illustrating a rank table 903 according to the first embodiment;
Fig. 10 is a diagram expressing an RPL rank 1 retained by a routing table 902 of the first slave unit 10a and an ID of a master node;
Fig. 11 is a diagram expressing a downward routing table 901 managed by a second collection device 20 according to the first embodiment;
Fig. 12 is a diagram illustrating a wireless system bitmap and a source routing header assigned to a downward message addressed to the first slave unit 10a in the second collection device 20 according to the first embodiment;
Fig. 13 is a diagram illustrating a routing table 902 retained by the second slave unit 20d according to the first embodiment;
Fig. 14 is a diagram expressing a downward routing table 901 managed by the second collection device 20 according to the first embodiment;
Fig. 15 is a diagram illustrating a wireless system bitmap and a source routing header assigned to a downward message addressed to the second slave unit 20d in the second collection device 20 according to the first embodiment;
Fig. 16 is a diagram illustrating a routing table 902 retained by the third slave unit 30e according to the first embodiment;
Fig. 17 is a diagram illustrating a downward routing table 901 managed by the second collection device 20 according to the first embodiment;
Fig. 18 is a diagram illustrating a wireless system bitmap and a source routing header assigned to a downward message addressed to the third slave unit 30e in the second collection device 20 according to the first embodiment;
Fig. 19 is a diagram illustrating a sequence in a case of entering of a second slave unit 20b, a first slave unit 10f, a second slave unit 20g and a third slave unit 30h according to the first embodiment;
Fig. 20 is a diagram illustrating a routing table 902 retained by the second slave unit 20b according to the first embodiment;
Fig. 21 is a diagram expressing a downward routing table 901 managed by the second collection device 20 according to the first embodiment;
Fig. 22 is a diagram illustrating a wireless system bitmap and a source routing header assigned to a downward message addressed to the second slave unit 20b in the second collection device 20 according to the first embodiment;
Fig. 23 is a diagram expressing an RPL rank 1 retained by a routing table 902 of the first slave unit 10f and an ID of a master node selected according to the first embodiment;
Fig. 24 is a diagram expressing a downward routing table 901 managed by the second collection device 20 according to the first embodiment;
Fig. 25 is a diagram illustrating a wireless system bitmap and a source routing header assigned to a downward message addressed to the first slave unit 10f in the second collection device 20 according to the first embodiment;
Fig. 26 is a diagram illustrating a routing table 902 retained by the second slave unit 20g according to the first embodiment;
Fig. 27 is a diagram illustrating a downward routing table 901 managed by the second collection device 20 according to the first embodiment;
Fig. 28 is a diagram illustrating a wireless system bitmap and a source routing header assigned to a downward message addressed to the second slave unit 20g in the second collection device 20 according to the first embodiment;

Fig. 29 is a diagram illustrating a routing table 902 retained by the third slave unit 30h according to the first embodiment;

Fig. 30 is a diagram expressing a downward routing table 901 managed by the second collection device 20 according to the first embodiment;

Fig. 31 is a diagram illustrating a wireless system bitmap and a source routing header assigned to a downward message addressed to the third slave unit 30h in the second collection device 20 according to the first embodiment;

Fig. 32 is a diagram illustrating a sequence in a case of entering of a third slave unit 30c and a second slave unit 20i according to the first embodiment;

Fig. 33 is a diagram illustrating a routing table 902 retained by the third slave unit 30c according to the first embodiment;

Fig. 34 is a diagram expressing a downward routing table 901 managed by the second collection device 20 according to the first embodiment;

Fig. 35 is a diagram illustrating a wireless system bitmap and a source routing header assigned to a downward message addressed to the third slave unit 30c in the second collection device 20 according to the first embodiment;

Fig. 36 is a diagram illustrating a routing table 902 retained by the second slave unit 20i according to the first embodiment;

Fig. 37 is a diagram expressing a downward routing table 901 managed by the second collection device 20 according to the first embodiment;

Fig. 38 is a diagram illustrating a wireless system bitmap and a source routing header assigned to a downward message addressed to the second slave unit 20i in the second collection device 20 according to the first embodiment;

Fig. 39 is a flowchart of selecting a master node in the second slave unit and the third slave unit according to a second embodiment;

Fig. 40 is a diagram illustrating a situation in which the second slave unit 20d enters a wireless mesh network configured by the second collection device 20, the first slave unit 10a, the second slave unit 20b and the second slave unit 20c according to the second embodiment;

Fig. 41 is a diagram illustrating a situation in which the second slave unit 20d enters the wireless mesh network configured by the second collection device 20, the first slave unit 10a, the second slave unit 20b and the third slave unit 30c according to the second embodiment;

Fig. 42 is a diagram illustrating a situation in which the second slave unit 20d enters the wireless mesh network configured by the second collection device 20, the first slave unit 10a and the second slave units 20b, 20c and 20e according to the second embodiment;

Fig. 43 is a diagram illustrating a situation in which the second slave unit 20d enters the wireless mesh network configured by the second collection device 20, the first slave unit 10a and the second slave units 20b, 20c and 20e according to the second embodiment;

Fig. 44 is a diagram illustrating a situation in which the second slave unit 20d enters the wireless mesh network configured by the second collection device 20, the first slave unit 10a and the third slave units 30b, 30c and 30e according to the second embodiment;

Fig. 45 is a diagram illustrating a situation in which the second slave unit 20d enters the wireless mesh network configured by the second collection device 20, the first slave unit 10a and the third slave units 30b, 30c and 30e according to the second embodiment;

Fig. 46 is a diagram illustrating a situation in which the second slave unit 20d enters a wireless mesh network configured by the second collection device 20 and the first slave units 10a, 10b, 10c and 10e according to the second embodiment;

Fig. 47 is a diagram illustrating a state in which the first slave unit 10x is replaced with the second slave unit 20x and the third slave unit 30x in a communication system 503 according to a third embodiment;

Fig. 48 is a diagram illustrating a sequence to transmit DIO-2 and DIO-1 in the second collection device 20, the second slave units 20b, 20f and 20g, and the third slave unit 30h in Fig. 47 according to the third embodiment;

Fig. 49 is a configuration diagram of a communication system 504 according to a fourth embodiment and a fifth embodiment;

Fig. 50 is a diagram illustrating a Hop-by-Hop extension header assigned to an upward message by a slave unit according to the fourth embodiment;

Fig. 51 is a diagram illustrating a wireless system bitmap and a source routing header assigned to a downward message addressed to a second slave unit 20b in the second collection device 20 according to the fourth embodiment;

Fig. 52 is a diagram illustrating a Hop-by-Hop extension header assigned to an upward message by a slave unit according to the fourth embodiment;

Fig. 53 is a diagram illustrating a wireless system bitmap and a source routing header assigned to a downward message addressed to a second slave unit 20r in the second collection device 20 according to the fourth embodiment;

Fig. 54 is a diagram illustrating a Hop-by-Hop extension header assigned to an upward message by a slave unit according to the fifth embodiment; and

Fig. 55 is a diagram illustrating a wireless system bitmap and a source routing header assigned to a downward message addressed to the second slave unit 20r in the second collection device 20 according to the fifth embodiment.

**Description of Embodiments**

Hereinafter, description will be made on embodiments of the present disclosure using diagrams. In the drawings, the same or the corresponding elements are denoted by the same reference signs. In description of the embodiments, explanation of the same or the corresponding elements is appropriately omitted or simplified.

● Description of Terms

Node: A master unit and a slave unit.

Neighboring node: A node placed within a communication range where radio waves reach, and a node capable of communicating that has already entered a network.

Master unit: A wireless device of a root node. This corresponds to a first collection device 10 and a second collection device 20.

Slave unit: A wireless device of a node. This corresponds to a first slave unit 10x, a second slave unit 20x and a third slave unit 30x.

Rank value: A value expressing a relative position (distance) from a master device to a slave unit. A value of route quality representing the route quality from a collection device to a slave unit. A value that increases as the number of hops in a route from the master unit to the slave unit increases. This corresponds to an RPL rank.

First rank value: A rank value calculated in accordance with a first protocol. This corresponds to an RPL rank 1. In this specification, the first rank value set as an initial value in the master unit is 128.

Second rank value: A rank value calculated in accordance with a second protocol. This corresponds to an RPL rank 2. In this specification, the second rank value set as an initial value in the master unit is 32.

MinimumHopRankIncrease: A minimum increase value of a rank from a master node to a slave node. The value stored beforehand in each node.

MinimumHopRankIncrease-1: A first minimum increase value used for calculation of the first rank value. In this specification, 128 is used as the first minimum increase value with respect to use of a low-transmission rate wireless system.

MinimumHopRankIncrease-2: A second minimum increase value used for calculation of the second rank value. In this specification, 32 is used as the second minimum increase value with respect to use of a high-transmission rate wireless system. The first minimum increase value (128) is a value weighted by four times the second minimum increase value (32).

Control message: A message transmitted from a neighboring node to invite entering as a slave node. A message including route information related to construction of a route. This corresponds to DIO-1 and DIO-2.

First rank information: Information of a transmission-source node to allow calculation of the first rank value. The first rank value of the transmission-source node indicated in the control message and MinimumHopRankIncrease-1.

Second rank information: Information of the transmission-source node to allow calculation of the second rank value. The second rank value of the transmission-source node indicated in a control message and MinimumHopRankIncrease-2.

First control message: A control message including the first rank value of the transmission-source node of the control message and MinimumHopRankIncrease-1. This corresponds to DIO-1.

Second control message: A control message including the second rank value of the transmission-source node of the control message and MinimumHopRankIncrease-2. This corresponds to DIO-2.

Protocol: A communication protocol implemented by a master unit or a slave unit, or an algorithm to implement a communication protocol.

First Protocol: A protocol to calculate the first rank value (RPL rank 1) using a first rank value (RPL rank 1) of a neighboring node, and select a master unit by the smallest first rank value (RPL rank 1). Further, a protocol to notify the neighboring node only of the first rank value (RPL rank 1). A protocol implemented in the first slave unit 10x.

Second Protocol: A protocol to calculate the second rank value (RPL rank 2) using a second rank value (RPL rank 2) of a neighboring node, and select a master unit by the second rank value (RPL rank 2). Further, a protocol to select a communication system with a master unit. Furthermore, a protocol to notify the neighboring node of the first rank value (RPL rank 1) calculated in accordance with the first protocol and the second rank value (RPL rank 2) calculated in accordance with the second protocol. A protocol implemented in the second slave unit 20x and the third slave unit 30x.

Upward route construction unit: A module to select one node from among one or more neighboring nodes as the master node, and select a communication system with the master node. This includes a first upward route construction unit and a second upward route construction unit.

First upward route construction unit: A route construction unit supporting the first protocol. A module to calculate the first rank value based on the first rank information of the transmission-source node.

Second upward route construction unit: A route construction unit supporting the second protocol. A module to calculate the second rank value based on the second rank information of the transmission-source node.

Multi-hop communication unit: A communication unit to implement a protocol. This includes a first multi-hop communication unit and a second multi-hop communication unit.

First multi-hop communication unit: A communication unit to implement the first protocol.

Second multi-hop communication unit: A communication unit to implement the second protocol.

Communication system: A communication system used in a part of a physical layer and a data link layer. A wireless system used between nodes. The communication system is different if the communication speed, the modulation system or the transmission output system is different.

First communication system: A communication system used by a first PHY 102 and a first MAC 103. This corresponds to a first PHY/MAC. A specific example is a wireless system with a low-transmission rate.

Second communication system: A communication system used by a second PHY 202 and a second MAC 203. This corresponds to a second PHY/MAC. A specific example is a wireless system with a high-transmission rate.

Node ID: An identifier to identify a wireless device, such as an MAC address. In this specification, symbols such as 10a, 10b or the like is used as the ID.

First Embodiment

In the first embodiment, description will be made on a communication system 501 in which communication units (slave units) mounted on a plurality of smart meters configure a wireless mesh network with communication routes to a collection device (master unit) in one communication system.

Then, description will be made on a case in which communication units configuring a multi-hop network indicated for the communication system 501 are randomly replaced with new communication units implementing a new communication system in a communication system 502. Especially, description will be made on a case of constructing a multi-hop network taking advantage of the new communication system while maintaining the multi-hop communication of the existing communication units.

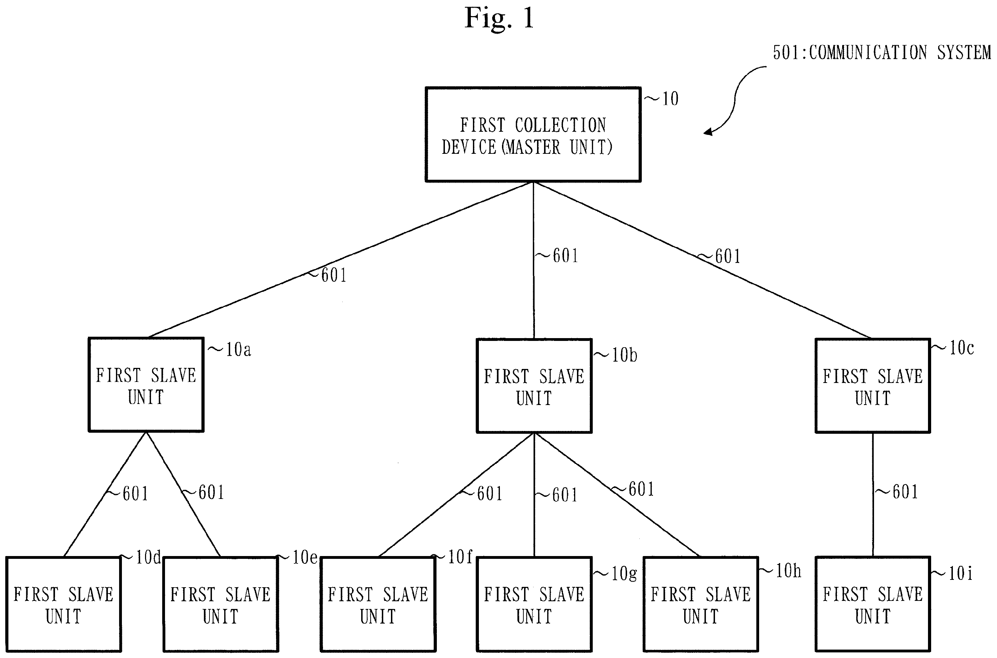

Fig. 1 is a configuration diagram of the communication system 501 being a premise of this disclosure.

The communication system 501 is a wireless mesh network configured by connecting the first collection device 10 and a plurality of first slave units 10a, 10b, ... and 10i with a wireless link 601. Hereinafter, the symbols of 10a, 10b, ... and 10i may be simply denoted by 10x.

In the communication system 501, the first communication device 100 and the first slave units 10x perform multi-hop communication based only on the first protocol.

The communication system 501 includes the first collection device 10 and a plurality of first slave units 10x connected to the first collection device 10 in a multi-hop system.

The communication system 501 configures the multi-hop system by the multi-hop system by the first collection device 10 and the plurality of first slave units 10x.

The first collection device 10 and the plurality of first slave units 10x are wireless communication units, and may simply be denoted as nodes.

A concrete example of the first slave units 10x is a smart meter.

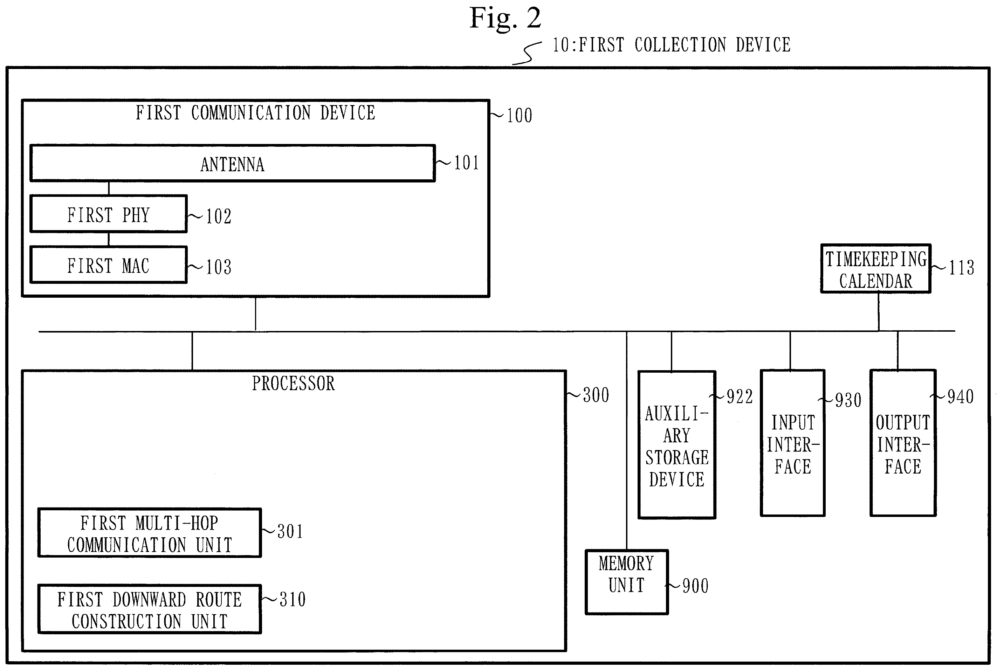

Fig. 2 is a configuration diagram of the first collection device 10.

The first collection device 10 includes an antenna 101 to receive wireless signals, the first PHY 102 to digitalize wireless signals of the wireless link 601 and the first MAC 103 to perform media access control, in the first communication device 100 to communicate with the first slave units 10x.

"PHY" is a physical layer in the OSI (Open Systems Interconnection) hierarchical model. "PHY" is an abbreviation for "physical layer". "PHY" means a circuit (physical layer device) to implement functions of the physical layer.

"MAC" is a communication protocol that is a part of the data link layer in the OSI hierarchical model. "MAC" is an abbreviation for Medium Access Control. "MAC" means a circuit (data link layer device) to implement functions of a communication protocol that constitutes a part of the data link layer.

The first collection device 10 is equipped with a timekeeping calendar 113 to acquire the date and time.

The first collection device 10 is equipped with a processor 300 including a first multi-hop communication unit 301 and a first downward route construction unit 310.

The first collection device 10 is equipped with a memory unit 900 and an auxiliary storage device 922 to record an ID of a slave unit existing in a downward route constructed by the first downward route construction unit 310 and several types of option setting.

The first collection device 10 is equipped with an input interface 930 and an output interface 940.

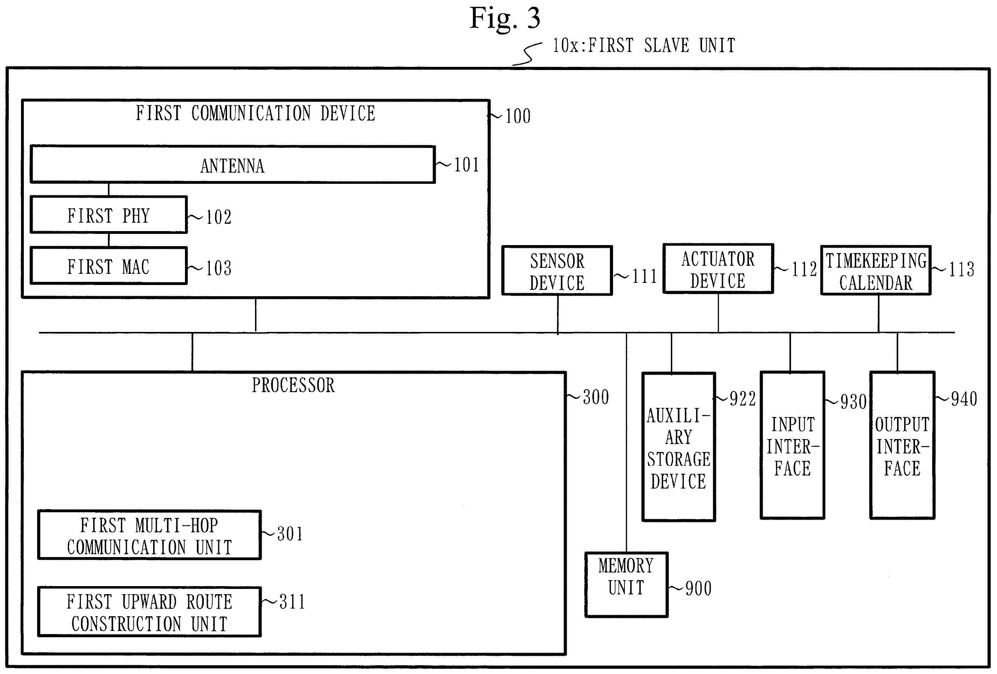

Fig. 3 is a configuration diagram of a first slave unit 10x.

The first slave unit 10x includes the antenna 101 to receive wireless signals in the first communication device 100 to communicate with the first collection device 10 and other first slave units.

The first slave unit 10x includes the first PHY 102 to digitalize wireless signals and the first MAC 103 to perform media access control in the first communication device 100.

The first slave unit 10x is equipped with a sensor device 111 to perform sensing, an actuator device 112 to perform operation from a slave unit, and a timekeeping calendar 113 to obtain the date and time.

The first slave unit 10x is equipped with the processor 300 including the first multi-hop communication unit 301 and the first upward route construction unit 311.

The first slave unit 10x is equipped with a memory unit 900 and an auxiliary storage device 922 to record a next hop node to the first collection device 10 selected by route construction and the several types of option setting.

The first slave unit 10x is equipped with the input interface 930 and the output interface 940.

The operation of the first slave unit 10x in constructing a multi-hop communication path will be described.

The first multi-hop communication unit 301 transmits a DIS (DODAG information solicitation) message to request route construction of a multi-hop communication path at an arbitrary timing.

The first multi-hop communication unit 301 decides whether a DIO (DODAG information object) message is received from a neighboring node after a certain delay.

When the first multi-hop communication unit 301 receives the DIO message being a route construction response message to respond to the DIS message from the first slave unit within a certain period of time, the first multi-hop communication unit 301 delivers the DIO message to the first upward route construction unit 311.

The first upward route construction unit 311 calculates rank values of the first slave units 10x from the information included in the DIO messages.

The first upward route construction unit 311 selects a node for which the smallest rank value can be calculated from among neighboring nodes as the master node, and records the ID and the rank value of the master node in an associated manner.

The first multi-hop communication unit 301 notifies the first communication device 100 of the ID of the master node.

The first communication device 100 records the set of the ID of the master node and the slave node.

The protocol used by the communication system 501 is called the first protocol.

The rank value used by the communication system 501 is called the first rank value.

The communication system used by the first PHY 102 and the first MAC 103 is called the first communication system.

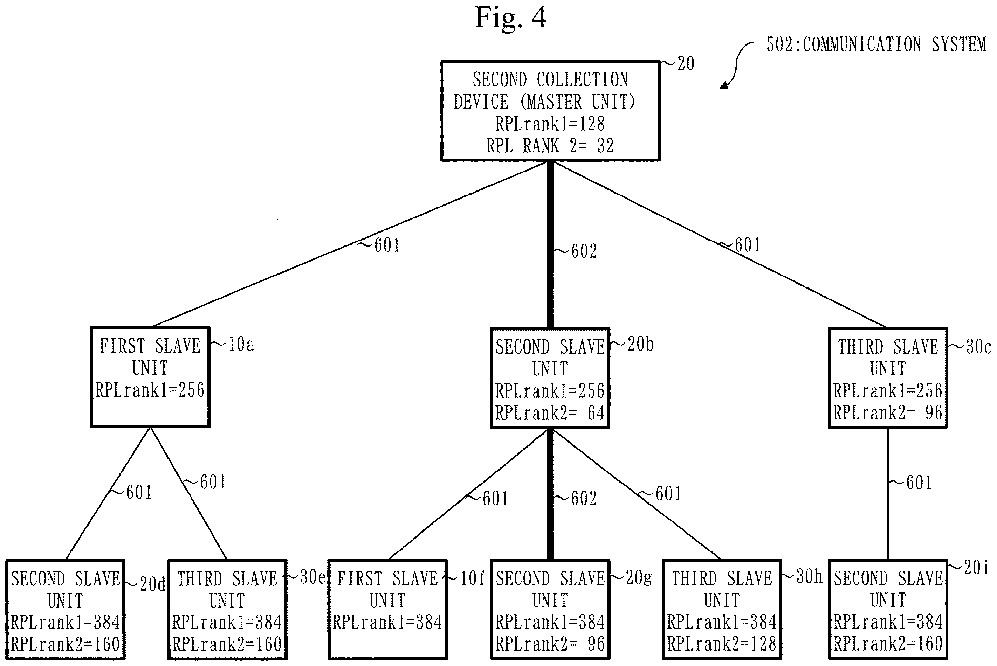

Fig. 4 is a configuration diagram of the communication system 502.

The communication system 502 is a wireless mesh network configured by connecting the second collection device 20, the first slave units 10x, the second slave units 20x and the third slave units 30x with the wireless links 601 or the wireless links 602 with transmission rates higher than those of the wireless links 601.

The first slave units 10x perform multi-hop communication in accordance with the first protocol as in the communication system 501.

The second communication device 200, the second slave units 20x and the third slave units 30x perform multi-hop communication in accordance with the second protocol.

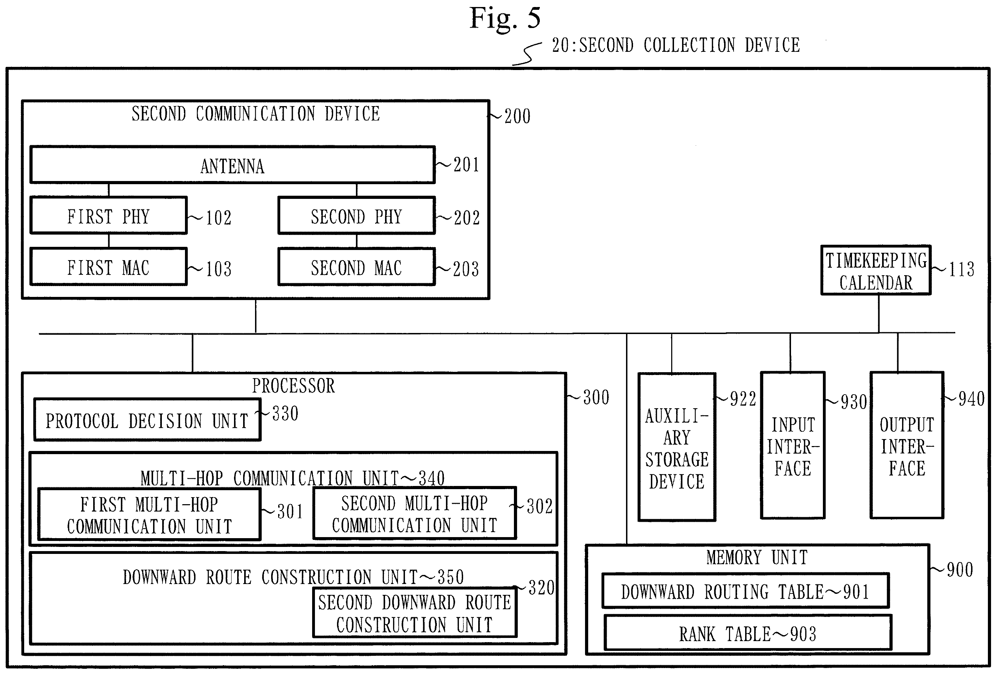

Fig. 5 is a configuration diagram of the second collection device 20.

The second collection device 20 includes an antenna 201 to receive wireless signals in the second communication device 200 to communicate with the first slave units 10x, the second slave units 20x and the third slave units 30x.

The second collection device 20 includes the first PHY 102 to digitalize wireless signals of the wireless link 601 and the first MAC 103 to perform media access control, in the second communication device 200.

The second collection device 20 includes the second PHY 202 to digitalize wireless signals of the wireless links 602 capable of communicating with transmission rates higher than those of the wireless links 601, and the second MAC 203 to perform media access control. The communication system used by the second PHY 202 and the second MAC 203 is called the second communication system.

The second collection device 20 includes the first multi-hop communication unit 301, the second multi-hop communication unit 302 and the second downward route construction unit 320, in the processor 300.

The second collection device 20 includes a protocol decision unit 330 to decide first multi-hop communication and second multi-hop communication in the processor 300.

The multi-hop communication unit 340 includes the first multi-hop communication unit 301 and the second multi-hop communication unit 302.

The downward route construction unit 350 includes a second downward route construction unit 320.

The second collection device 20 implements the second protocol by the protocol decision unit 330, the multi-hop communication unit 340 and the downward route construction unit 350.

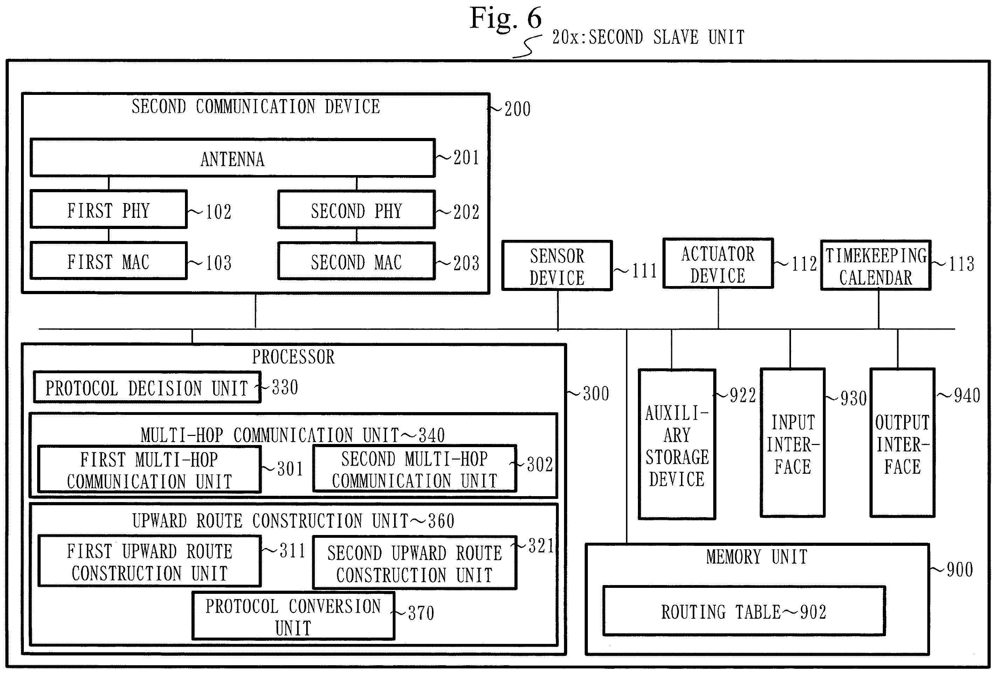

Fig. 6 is a configuration diagram of a second slave unit 20x.

The second slave unit 20x includes the antenna 201 to receive wireless signals in the second communication device 200 to communicate with the second collection device, the first slave units 10x, the second slave units 20x and the third slave units 30x.

The second slave unit 20x includes the first PHY 102 to digitalize wireless signals of the wireless links 601, the first MAC 103 to perform media access control, the second PHY 202 to digitalize wireless signals of the wireless links 602, and the second MAC 203 to perform media access control, in the second communication device 200.

The second slave unit 20x includes the first multi-hop communication unit 301, the first upward route construction unit 311, the second multi-hop communication unit 302 and the second upward route construction unit 321, in the processor 300.

The second slave unit 20x includes a protocol decision unit 330 to decide the first multi-hop communication and the second multi-hop communication, and a protocol conversion unit 370 to perform conversion between an RPL rank value used in the first multi-hop communication and an RPL rank value used in the second multi-hop communication, in the processor 300.

The multi-hop communication unit 340 includes the first multi-hop communication unit 301 and the second multi-hop communication unit 302.

The upward route construction unit 360 includes the first upward route construction unit 311, the second upward route construction unit 321 and the protocol conversion unit 370.

The second slave unit 20x implements the second protocol by the protocol decision unit 330, the multi-hop communication unit 340 and the upward route construction unit 360.

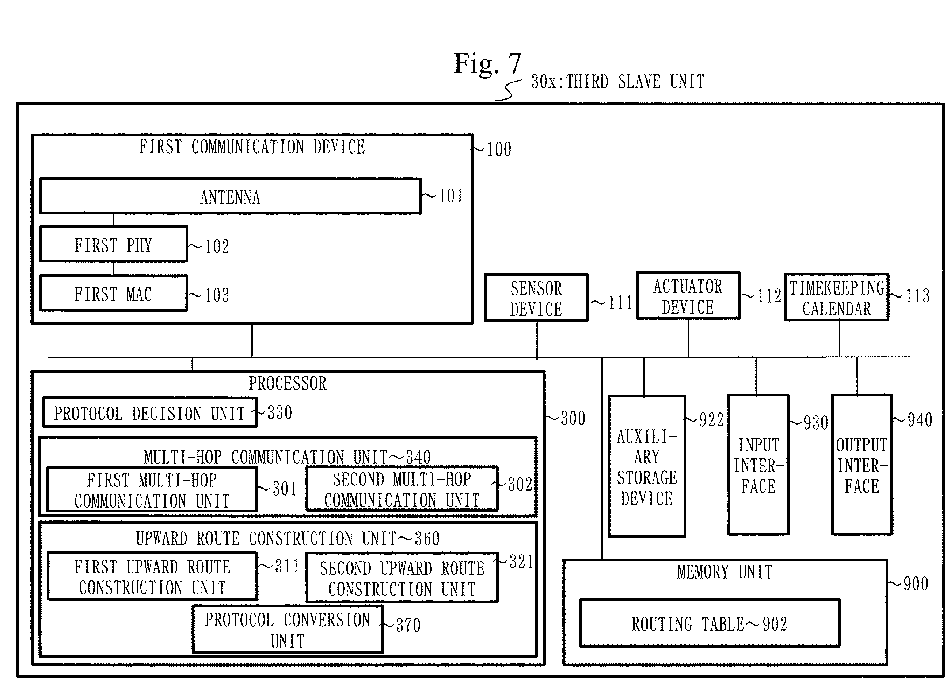

Fig. 7 is a configuration diagram of a third slave unit 30x.

The third slave unit does not include the second PHY 202 and the second MAC 203 as differences from the second slave unit in Fig. 6. Therefore, the third slave unit 30x is incapable of performing the second communication system.

The third slave unit 30x includes the first multi-hop communication unit 301, the first upward route construction unit 311, the second multi-hop communication unit 302 and the second upward route construction unit 321, in the processor 300.

The third slave unit 30x includes a protocol decision unit 330 to decide the first multi-hop communication and the second multi-hop communication and the protocol conversion unit 370 to perform conversion between an RPL rank value used in the first multi-hop communication and an RPL rank value used in the second multi-hop communication.

Therefore, the third slave unit 30x is capable of implementing the second protocol.

The meaning of each wireless unit will be described below.

The first collection device 10 and the first slave units 10x are existing wireless units to be replaced.

The second collection device 20 and the second slave units 20x are new wireless units after replacement.

The third slave units 30x use the hardware of the first slave units 10x as they are, in which the software of the first slave units 10x is versioned up to be able to process the second protocol.

The specification of each wireless unit will be described below.

The first communication device 10

First communication system: possible
Second communication system: impossible
First protocol: possible
Second protocol: impossible
First rank value RPL rank 1: store
Second rank value RPL rank 2: does not store
MinimumHopRankIncrease-1: stored beforehand
MinimumHopRankIncrease-2: does not store
Control message DIO-1: creatable
Control message DIO-2: uncreatable
Notification message DAO-1: processable
Notification message DAO-2: processed as DAO-1

The second collection device 20

First communication system: possible
Second communication system: possible

First protocol: possible
Second protocol: possible
First rank value of own node: store (known values for the second slave units 20x and the third slave units 30x)
Second rank value of own node: store (known values for the second slave units 20x and the third slave units 30x)
MinimumHopRankIncrease-1: stored beforehand (known values for the second slave units 20x and the third slave units 30x)
MinimumHopRankIncrease-2: stored beforehand (known values for the second slave units 20x and the third slave units 30x)
Control message DIO-1: creatable
Control message DIO-2: creatable
Notification message DAO-1: processable
Notification message DAO-2: processable

The first slave unit 10x

First communication system: possible
Second communication system: impossible
First protocol: possible
Second protocol: impossible
First rank value of own node: store
Second rank value of own node: does not store
MinimumHopRankIncrease-1: stored beforehand
MinimumHopRankIncrease-2: does not store
Control message DIO-1: creatable
Control message DIO-2: uncreatable
Notification message DAO-1: creatable
Notification message DAO-2: uncreatable

The second slave unit 20x

First communication system: possible
Second communication system: possible
First protocol: possible
Second protocol: possible
First rank value of own node: store
Second rank value of own node: store
MinimumHopRankIncrease-1: stored beforehand
MinimumHopRankIncrease-2: stored beforehand
Control message DIO-1: creatable
Control message DIO-2: creatable
Notification message DAO-1: creatable
Notification message DAO-2: creatable

The third slave unit 30x

First communication system: possible
Second communication system: impossible
First protocol: possible
Second protocol: possible
First rank value of own node: store
Second rank value of own node: store
MinimumHopRankIncrease-1: stored beforehand
MinimumHopRankIncrease-2: stored beforehand
Control message DIO-1: creatable
Control message DIO-2: creatable
Notification message DAO-1: creatable
Notification message DAO-2: processable

Description of Method and Program

"Unit" of each unit of the first multi-hop communication unit 301, the first downward route construction unit 310, the first upward route construction unit 311, the second multi-hop communication unit 302, the second downward route construction unit 320, the second upward route construction unit 321 and the protocol conversion unit 370 may be replaced with "process", "procedure" or "step". Further, "process" of the first multi-hop communication unit 301, the first downward route construction unit 310, the first upward route construction unit 311, the second multi-hop communication unit 302, the second downward route construction unit 320, the second upward route construction unit 321 and the protocol conversion unit 370 may be replaced with "program", "program product" or "computer-readable recording medium in which a program is recorded".

A communication program causes a computer to perform each process, each procedure or each step that is "unit" of each unit of the above replaced with "process", "procedure" or "step".

Further, a communication method is a method performed by executing the communication program by each device of the communication system.

The communication program may be provided by being stored in a computer-readable nonvolatile recording medium. Further, the communication program may be provided as a program product.

The functions of the first multi-hop communication unit 301, the first downward route construction unit 310, the first upward route construction unit 311, the second multi-hop communication unit 302, the second downward route construction unit 320, the second upward route construction unit 321 and the protocol conversion unit 370 may be realized by one electronic circuit, or may be realized distributively by a plurality of electronic circuits.

As another variation, a part of the functions of the first multi-hop communication unit 301, the first downward route construction unit 310, the first upward route construction unit 311, the second multi-hop communication unit 302, the second downward route construction unit 320, the second upward route construction unit 321 and the protocol conversion unit 370 may be realized by an electronic circuit, and the remaining functions may be realized by software.

Further, as another variation, a part of or all of the functions of the first multi-hop communication unit 301, the first downward route construction unit 310, the first upward route construction unit 311, the second multi-hop communication unit 302, the second downward route construction unit 320, the second upward route construction unit 321 and the protocol conversion unit 370 may be realized by firmware.

Each of the processors and electronic circuits may be called processing circuitry. That is, the functions of the first multi-hop communication unit 301, the first downward route construction unit 310, the first upward route construction unit 311, the second multi-hop communication unit 302, the second downward route construction unit 320, the second upward route construction unit 321 and the protocol conversion unit 370 are realized by the processing circuitry.

Next, description will be made on the operation.

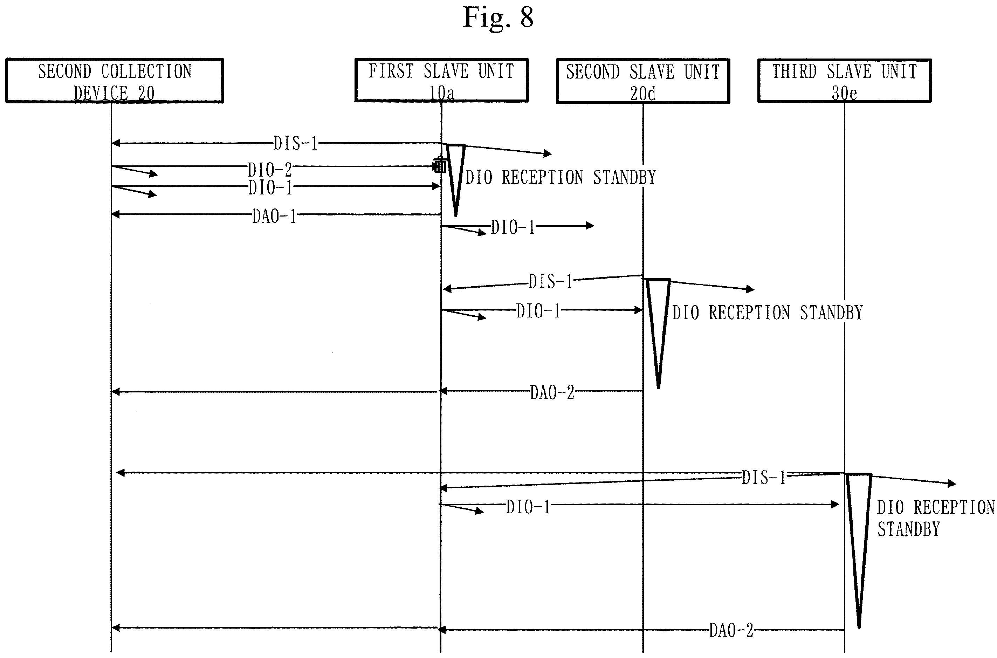

Fig. 8 illustrates a sequence in a case in which the first slave unit 10a, the second slave unit 20d and the third slave unit 30e enter the communication system 502 in Fig. 4.

● Case in which the first slave unit 10a enters the second collection device

Description will be made on a case in which the first slave unit 10a enters the communication system 502.

The first slave unit 10a creates a DIS (DODAG information solicitation) message in the first multi-hop communication unit 301. The first communication device 100 broadcasts DIS-1 in the first MAC 103 and the first PHY 102.

The second collection device 20 that has received the DIS-1 from the first slave unit 10a indicates the following route information in a DIO (DODAG information object) message (DIO-2) at the second multi-hop communication unit 302. The second communication device 200 responds to the DIS-1 by broadcasting the DIO-2 via the first MAC 103 and the first PHY 102.

\*RPL Rank 2 of own node
\*MinimumHopRankIncrease-2 used in the second multi-hop communication
\*Wireless system supported by own node (a wireless system (hereinafter denoted as the first PHY/MAC) in the first PHY 102 and the first MAC 103), and a wireless system (hereinafter denoted as the second PHY/MAC) in the second PHY 202 and the second MAC 203.
\*Device type of own node
\*Continuation number of high transmission rate from the second collection device

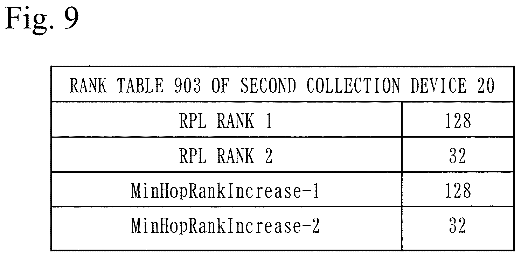

The second collection device 20 retains a rank table 903 as in Fig. 9, and broadcasts the DIO-2 after indicating the following route information in the DIO-2.

\*RPL rank 2 of own node = 32

*MinimumHopRankIncrease-2 = 32
*Wireless system = Second PHY/MAC
*Device Type = Second collection device
*Continuation of high-transmission rate = 0

Further, the second collection device 20 indicates the following route information in a DIO (DODAG information object) message (DIO-1) in the first multi-hop communication unit 301. The second communication device 200 responds to the DIS-1 by broadcasting the DIO-1 via the first MAC 103 and the first PHY 102.

*RPL rank 1 of own node
*MinimumHopRankIncrease-1 used in the first multi-hop communication

The second collection device 20 retains the rank table 903 as in Fig. 9, and broadcasts the DIO-1 after indicating the following route information in the DIO-1.

*RPL rank 1 = 128
*MinimumHopRankIncrease-1 = 128

The first slave unit 10a that has received the DIO-2 and the DIO-1 from the second collection device 20 discards the said DIO-2 as an undefined message, and decides to process the said DIO-1 in the first upward route construction unit 311.
The first upward route construction unit 311 of the first slave unit 10a calculates an RPL rank 1 of own node from:

the RPL rank 1 of the second collection device 20 indicated in the said DIO-1;
the MinimumHopRankIncrease-1 indicated in the said DIO-1; and
a metric, which is acquired at the time of receiving the said DIO-1, representing a state between wireless links of the second communication device 200 of the second collection device 20 and the first communication device 100 of the first slave unit 10a.

When the metric representing the state between the wireless links is 0, the first slave unit 10a calculates the RPL rank 1 of its own node as RPL rank 1 = 256 from:

RPL rank 1 = 128 and
MinimumHopRankIncrease-1 = 128

that are indicated in DIO-1 of the second collection device 20.
When the wait time for receiving the DIO-1 times out, the first slave unit 10a selects a node which makes the RPL rank 1 of the route from the second collection device 20 to the first slave unit 10a the smallest as an upward next hop (master node) to the second collection device 20, in the first upward route construction unit 311.

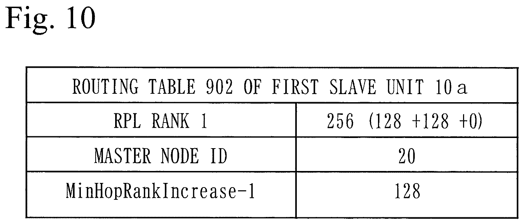

Fig. 10 expresses an RPL rank 1 and an ID of a master node selected that are retained by the routing table 902 of the first slave unit 10a when the second collection device 20 is selected as the master node.
Further, the first slave unit 10a creates a DAO (DODAG advertisement object) message (DAO-1) including the master node ID in the first multi-hop communication unit 301.
The first slave unit 10a transmits the DAO-1 to the second collection device, requests connection to the communication system 502, and completes the entering operation.
The second collection device 20 decides to process the DAO-1 received from the first slave unit 10a in the first multi-hop communication unit 301 and the second downward route construction unit 320 by the protocol decision unit 330.
The second downward route construction unit 320 decides the wireless system to be the first PHY/MAC since the type of the wireless link (wireless system) is not indicated in the DAO-1.
The second downward route construction unit 320 records the master node ID selected by the first slave unit 10a indicated in the DAO-1, and the type of the wireless link (wireless system) used for hop to the first slave unit 10a by the master node selected by the first slave unit 10a, in the downward routing table 901.

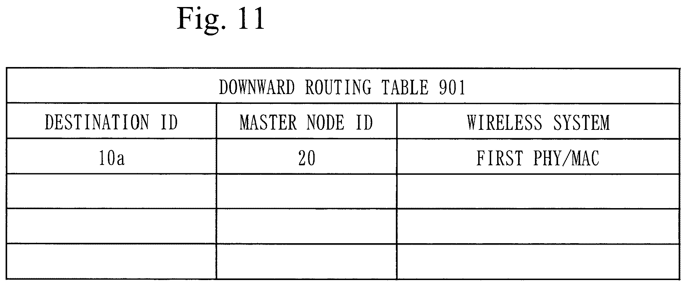

Fig. 11 expresses a downward routing table 901 managed by the second collection device 20.
When a downward message addressed to the first slave unit 10a is transmitted, the second collection device 20 confirms the node to be traversed from the second collection device 20 to the first slave unit 10a, and the wireless system specified using the said downward routing table 901. That is, the downward message from the second collection device 20 to the first slave unit 10a is transmitted to the first slave unit 10a by using the first PHY/MAC.

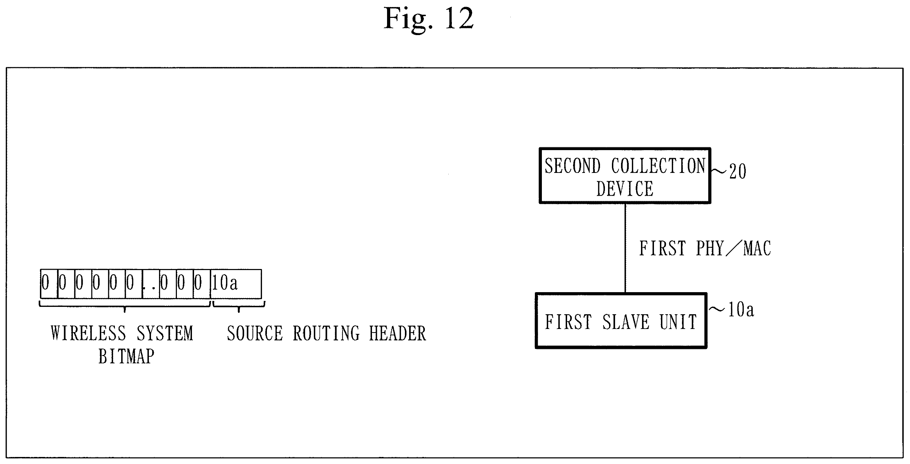

Fig. 12 illustrates a wireless system bitmap and a source routing header assigned to the downward message addressed to the first slave unit 10a in the second collection device 20.

The wireless system bitmap specifies the wireless system in an order of the first hop, the second hop, and so on from the leading bit using a reserved area that is disregarded as for the first slave unit. When the wireless system is the first PHY/MAC, it is specified as a bit number 0, and when the wireless system is the second PHY/MAC, it is specified as a bit number 1.

The source routing header lists the node IDs of the nodes to be traversed in the order of hops to the destination of the message.

When the downward message describing the said wireless system bitmap and the source routing header is received, the first slave unit 10a refers only to the source routing header while disregarding the wireless system bitmap, and transfers or receives the message.

● Case in which the second slave unit 20d enters via the first slave unit 10a

Description will be made on the operation of the second slave unit 20d to enter the communication system 502.

The second slave unit 20d creates a DIS (DODAG information solicitation) message (DIS-1) in the first multi-hop communication unit 301. The second communication device 200 broadcasts the DIS-1 via the first MAC 103 and the first PHY 102.

The first slave unit 10a that has received the DIS-1 from the second slave unit 20d indicates the following route information in the DIO (DODAG information object) message (DIO-1) in the first multi-hop communication unit 301. The first communication device 100 broadcasts the DIO-1 and responds to the DIS-1 via the first MAC 103 and the first PHY 102.

*RPL rank 1 of own node
*MinimumHopRankIncrease-1 used in the first multi-hop communication

The first slave unit 10a retains a routing table 902 as in Fig. 10, and broadcasts the DIO-1 after indicating the following route information in the DIO-1.

*RPL rank 1 = 256
*MinimumHopRankIncrease-1 = 128

The second slave unit 20d that has received the DIO-1 from the first slave unit 10a decides in the protocol decision unit 330 to process the said DIO-1 in the first upward route construction unit 311.

The first upward route construction unit 311 of the second slave unit 20d calculates an RPL rank 1 of own node from the following information.

*RPL rank 1 of the first slave unit 10a indicated in the said DIO-1
*Metric, which is acquired at the time of receiving the said DIO-1, describing a state between the wireless links of the first communication device 100 of the first slave unit 10a and the second communication device 200 of the second slave unit 20d
*MinimumHopRankIncrease-1 indicated in the said DIO-1

When the metric representing the state between the wireless links is 0, the second slave unit 20d calculates the RPL rank 1 of its own node as RPL rank 1 = 384 from:

RPL rank 1 = 256 and
MinimumHopRankIncrease-1 = 128

that are indicated in the DIO-1 of the first slave unit 10a.

Further, the second slave unit 20d calculates an RPL rank 2 from:

the information indicated in the DIO-1;
MinimumHopRankIncrease-2 = 32 retained beforehand as a parameter; and
the metric representing the state between the wireless links

by the protocol conversion unit 370.

The protocol conversion unit 370 transmits the RPL rank 2 to the second upward route construction unit 321.

The operation of the protocol conversion unit 370 is as the following.

Let us assume that an LQL (link quality level) is adopted as a metric to represent the state between wireless links in the communication system 502. The hop count from the second collection device 20 to the second slave unit 20d is calculated by the information indicated in the LQL. All the hops are assumed to "pass the first slave unit, and use the first MAC 103 and the first PHY 102 in a transmission rate than that of the second MAC 203 and the second PHY 202". By applying the weighting of low transmission rate to all hops, the RPL rank 2 is calculated as RPL rank 2 = 160 as follows.

RPL rank 2 = (RPL rank 2 (=32) of second collection device 20 + MinimumHopRankIncrease-2 (=32) × hop count (2) × weighting of low transmission rate (=2) + metric (=0)) = 160

When the wait time for receiving the DIO times out, the second slave unit 20d selects a node that makes the RPL rank 2 of the route from the second collection device 20 to the second slave unit 20d be the smallest as an upward next hop (master node) to the second collection device 20 by the second upward route construction unit 321.

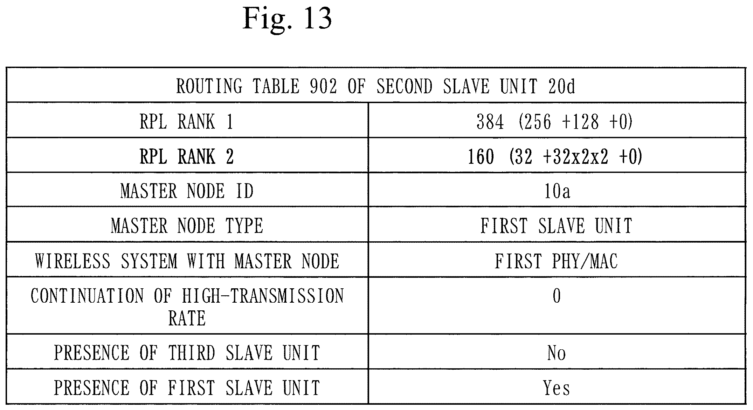

Fig. 13 illustrates a routing table 902 retained by the second slave unit 20d when the first slave unit 10a is selected as the master node.
The second slave unit 20d manages an RPL rank 1, an RPL rank 2, an ID of the master node selected by the RPL rank 2, a type of the master node, a wireless system with the master node, a continuation number of the high-transmission rate link (the second PHY 202 and the second MAC 203) from the second collection device 20, presence of a third slave unit in the route, and presence of a first slave unit in the route.
The routing table 902 of the second slave unit 20d is as follows.

   *RPL rank 1 = 384
   *RPL rank 2 = 160
   *Master node ID =10a
   *Type of master node = first slave unit
   *Wireless system with master node = first PHY/MAC
   *Continuation of high-transmission rate = 0 (detail is unknown since the master node is the first slave unit; however, it is set 0 as default)
   *Presence of third slave unit = No (detail is unknown since the master node is the first slave unit; however, it is set No as default)
   *Presence of first slave unit = Yes (since the master node is the first slave unit)

Further, the second slave unit 20d creates a DAO (DODAG advertisement object) message (DAO-2) including the ID of the master node, the node type of own node and the wireless system with the master node in the second multi-hop communication unit 302.
The second slave unit 20d transmits the said DAO-2 via the first slave unit 10a selected as the master node to the second collection device 20, requests connection with the communication system 502, and completes the entering operation.
The second collection device 20 decides to process the DAO-2 that has been received from the second slave unit 20d in the second multi-hop communication unit 302 and the second downward route construction unit 320 by the protocol decision unit 330.
The second downward route construction unit 320 records the master node ID selected by the second slave unit 20d indicated in the DAO-2 and the wireless system with the master node in the downward routing table 901.

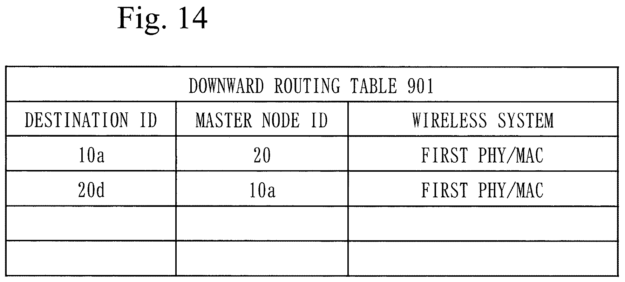

Fig. 14 expresses the downward routing table 901 managed by the second collection device 20.
When the second collection device 20 transmits a downward message addressed to the second slave unit 20d, the second collection device 20 traces the said downward routing table 901 to confirm the nodes to be traversed from the second collection device 20 to the second slave unit 20d, and the wireless systems specified. That is, the downward message from the second collection device 20 to the second slave unit 20d is transmitted to the first slave unit 10a using the first PHY/MAC, and transmitted to the second slave unit 20d using the first PHY/MAC.

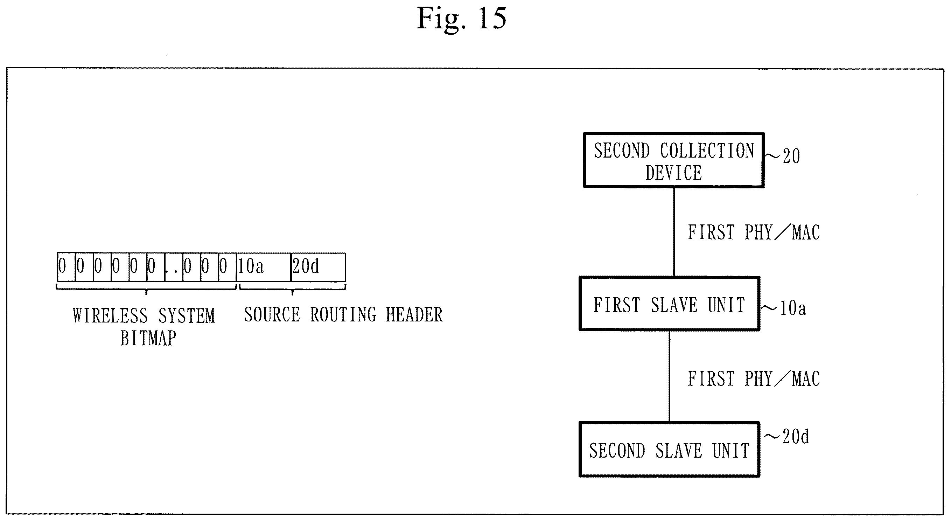

Fig. 15 illustrates a wireless system bitmap and a source routing header assigned to the downward message addressed to the second slave unit 20d in the second collection device 20.
The wireless system bitmap specifies the wireless system in the order of the first hop, the second hop, and so on from the leading bit using a reserved area that is disregarded as for the first slave unit. When the wireless system is the first PHY/MAC, it is specified as a bit number 0, and when the wireless system is the second PHY/MAC, it is specified as a bit number 1.
The source routing header lists the node IDs of the nodes to be traversed in the order of hops to the destination of the message.
When the first slave unit 10a receives the downward message indicating the said wireless system bitmap and the source routing header, the first slave unit 10a refers to the wireless system bitmap and the source routing header, and transfers the said message to the second slave unit 20d using the first PHY/MAC.

● Case in which the third slave unit 30e enters via the first slave unit 10a

Description will be made on an operation for the third slave unit 30e to enter the communication system 502.
The third slave unit 30e creates a DIS (DODAG information solicitation) message (DIS-1) in the first multi-hop communication unit 301. The first communication device 100 broadcasts the DIS-1 via the first MAC 103 and the first PHY 102.
The first slave unit 10a that has received the DIS-1 from the third slave unit 30e indicates the following route information in the DIO (DODAG information object) message (DIO-1) in the first multi-hop communication unit 301. The first communication device 100 broadcasts the DIO-1 and responds to the DIS-1 via the first MAC 103 and the first PHY 102.

*RPL rank 1 of own node
*MinimumHopRankIncrease-1 used in the first multi-hop communication

The first slave unit 10a retains the routing table 902 as in Fig. 10, and broadcasts the DIO-1 after indicating the following route information in the DIO-1.

*RPL rank 1 = 256
*MinimumHopRankIncrease-1 = 128

The third slave unit 30e that has received the DIO-1 from the first slave unit 10a decides in the protocol decision unit 330 to process the said DIO-1 by the first upward route construction unit 311. The first upward route construction unit 311 of the third slave unit 30e calculates an RPL rank 1 of its own node from the following information.

*RPL rank 1 of the first slave unit 10a indicated in the said DIO-1
*Metric, which is acquired at the time of receiving the said DIO-1, representing a state between wireless links of the first communication device 100 of the first slave unit 10a and the first communication device 100 of the third slave unit 30e
*MinimumHopRankIncrease-1 indicated in the said DIO-1

When the metric representing the state between the wireless links is 0, the third slave unit 30e calculates the RPL rank 1 of its own node as RPL rank 1 = 384 from:

RPL rank 1 = 256, and
MinimumHopRankIncrease-1 = 128

that are indicated in the DIO-1 of the first slave unit 10a.
Further, the third slave unit 30e calculates an RPL rank 2 from:

the information indicated in the DIO-1;
MinimumHopRankIncrease-2 =32 retained as a parameter beforehand; and
the metric representing the state between the wireless links

by the protocol conversion unit 370.
The protocol conversion unit 370 transmits the RPL rank 2 to the second upward route construction unit 321.
The operation of the protocol conversion unit 370 is as follows.
In the communication system 502, an LQL (link quality level) is assumed to be adopted as the metric to represent the state between wireless links. The hop count from the second collection device 20 to the third slave unit 30e is calculated from the information indicated in the LQL. All the hops are assumed to "pass the first slave unit, and use the first MAC 103 and the first PHY 102 in a transmission rate lower than that of the second MAC 203 and the second PHY 202". By applying the weighting of the low transmission rate to all the hops, the RPL rank 2 is calculated as RPL rank 2 = 160 as follows.

RPL rank 2 = (RPL rank 2 (=32) of second collection device 20 + MinimumHopRankIncrease-2 (=32) $\times$ hop count (2) $\times$ weighting of low transmission rate (=2) + metric (=0)) = 160

When the wait time for receiving the DIO times out, the third slave unit 30e selects a node that makes the RPL rank 2 of the route from the second collection device 20 to the third slave unit 30e be the smallest as an upward next hop (master node) to the second collection device 20 in the second upward route construction unit 321.

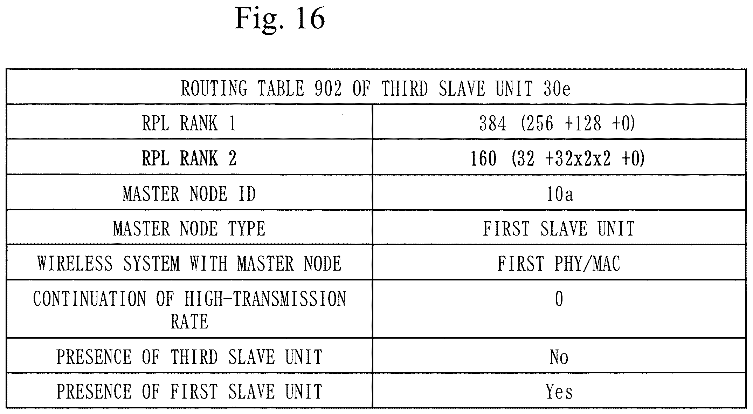

Fig. 16 illustrates a routing table 902 retained by the third slave unit 30e when the first slave unit 10a is selected as the master node.

The third slave unit 30e manages an RPL rank 1, an RPL rank 2, an ID of the master node selected by the RPL rank 2, a type of the master node, a wireless system with the master node, a continuation number of high-transmission rate link (the second PHY 202 and the second MAC 203) from the second collection device 20, presence of a third slave unit in the route, and presence of a first slave unit in the route.

The routing table 902 of the third slave unit 30e is as follows.

    *RPL rank 1 = 384
    *RPL rank 2 = 160
    *Master node ID = 10a
    *Type of master node = first slave unit
    *Wireless system with master node = first PHY/MAC
    *Continuation of high-transmission rate = 0 (detail is unknown since the master node is the first slave unit; however, it is set 0 as default)
    *Presence of third slave unit = No (detail is unknown since the master node is the first slave unit; however, it is set No as default)
    *Presence of first slave unit = Yes (since the master node is the first slave unit)

Further, the third slave unit 30e creates a DAO (DODAG advertisement object) message (DAO-2) including the ID of the master node, the node type of own node and the wireless system with the master node in the second multi-hop communication unit 302.

The third slave unit 30e transmits the said DAO-2 via the first slave unit 10a selected as the master node to the second collection device 20, requests connection with the communication system 502, and completes the entering operation.

The second collection device 20 decides to process the DAO-2 received from the third slave unit 30e in the second multi-hop communication unit 302 and the second downward route construction unit 320 by the protocol decision unit 330.

The second downward route construction unit 320 records the master node ID selected by the third slave unit 30e indicated in the DAO-2 and the wireless system with the master node in the downward routing table 901.

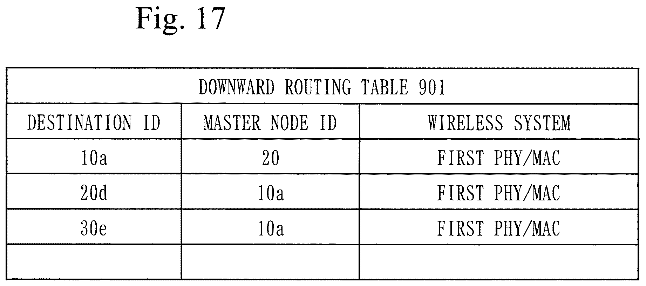

Fig. 17 expresses a downward routing table 901 managed by the second collection device 20.

When the second collection device 20 transmits a downward message addressed to the third slave unit 30e, the second collection device 20 traces the said downward routing table 901 to confirm the nodes to be traversed from the second collection device 20 to the third slave unit 30e, and the wireless systems specified. That is, the downward message from the second collection device 20 to the third slave unit 30e is transmitted to the first slave unit 10a using the first PHY/MAC, and transmitted to the third slave unit 30e using the first PHY/MAC.

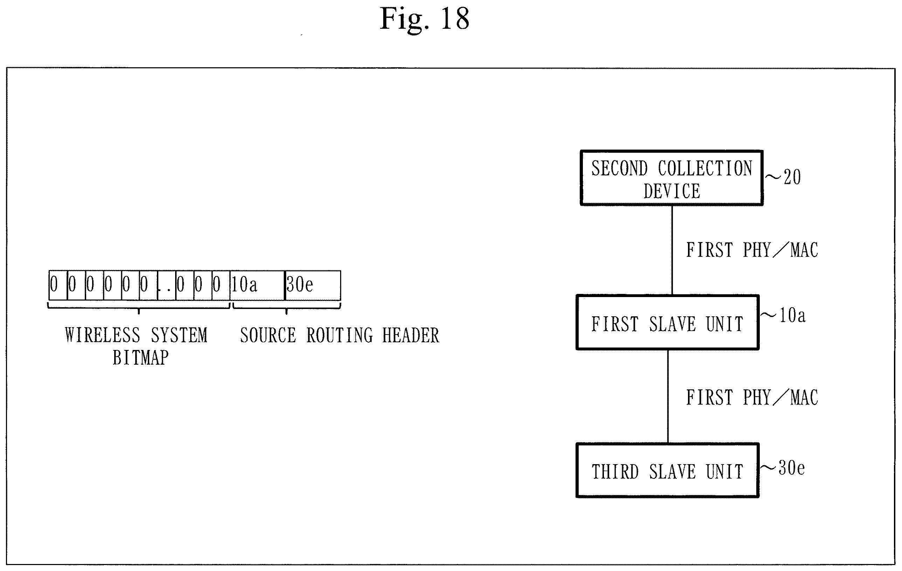

Fig. 18 illustrates a wireless system bitmap and a source routing header assigned to the downward message addressed to the third slave unit 30e in the second collection device 20.

The wireless system bitmap specifies a wireless system in the order of the first hop, the second hop, and so on from the leading bit using a reserved area that is disregarded as for the first slave unit. When the wireless system is the first PHY/MAC, it is specified as a bit number 0, and when the wireless system is the second PHY/MAC, it is specified as a bit number 1.

The source routing header lists the node IDs of the nodes traversed in the order of hops to the destination of the message.

When the first slave unit 10a receives the downward message indicating the said wireless system bitmap and the source routing header, the first slave unit 10a only refers to the source routing header while disregarding the wireless system bitmap, and transfers the said message to the third slave unit 30e using the first PHY/MAC.

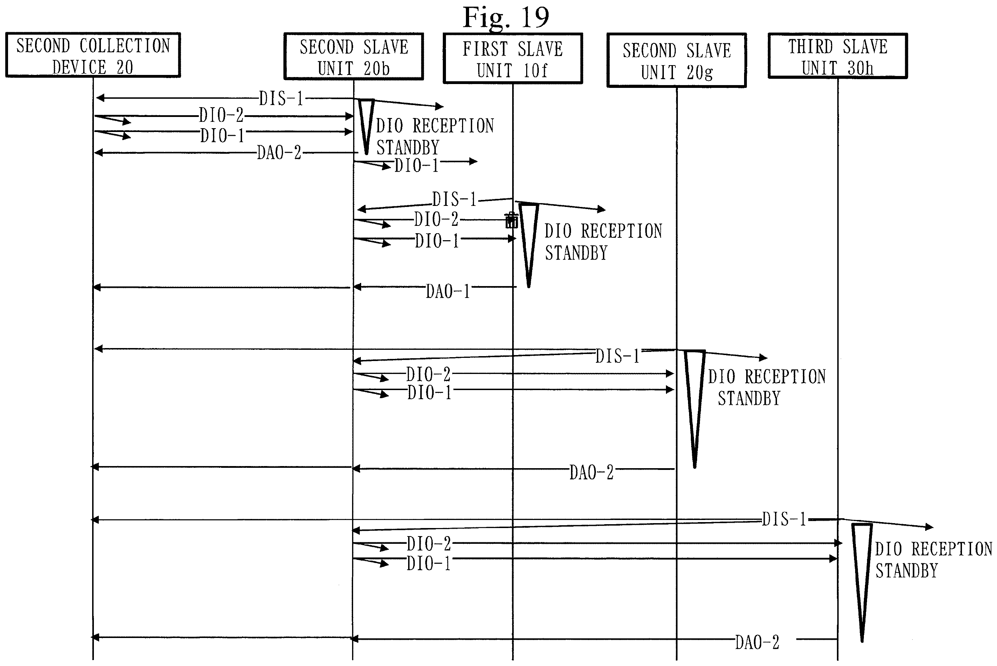

Fig. 19 illustrates a sequence in a case in which the second slave unit 20b, the first slave unit 10f, the second slave unit 20g and the third slave unit 30h enter the communication system 502 in Fig. 4.

● Case in which the second slave unit 20b enters via the second collection device 20

Description will be made on an operation for the second slave unit 20b to enter the communication system 502.

The second slave unit 20b creates a DIS (DODAG information solicitation) message (DIS-1) in the first multi-hop communication unit 301. The second communication device 200 broadcasts the DIS-1 via the first MAC 103 and the first PHY 102.

The second collection device 20 that has received the DIS-1 from the second slave unit 20b indicates the following route information in the DIO (DODAG information object) message (DIO-2) by the second multi-hop communication unit 302. The second communication device 200 broadcasts the DIO-2 and responds to the DIS-1 via the first MAC 103 and the first PHY 102.

*RPL rank 2 of own node
*MinimumHopRankIncrease-2 used in the second multi-hop communication
*Wireless systems supported by the own node (the first PHY 102 and the first MAC 103, and the second PHY 202 and the second MAC 203)
*Device type of the own node
*Continuation number of high-transmission rate from the second collection device 20

The second collection device 20 retains the rank table 903 as shown in Fig. 9, and indicates the following route information in the DIO-2, then broadcasts the DIO-2.

*RPL rank 2 = 32
*MinimumHopRankIncrease-2 = 32
*Wireless system = second PHY/MAC
*Device type = second collection device
*Continuation of high-transmission rate = 0

Further, the second collection device 20 indicates the following information in the DIO (DODAG Information Object) message (DIO-1) by the first multi-hop communication unit 301. The second communication device 200 broadcasts the DIO-1 and responds to the DIS-1 via the first MAC 103 and the first PHY 102.

*RPL rank 1 of own node
*MinimumHopRankIncrease-1 used in the first multi-hop communication

The second collection device 20 retains the rank table 903 as shown in Fig. 9, and broadcasts the DIS-1 after indicating the following route information in the DIO-1

*RPL rank 1 = 128
*MinimumHopRankIncrease-1 = 128

The second slave unit 20b that has received the DIO-2 and the DIO-1 from the second collection device 20 decides to process the said DIO-2 in the second multi-hop communication unit 302 and the second upward route construction unit 321, and to process the said DIO-1 in the first multi-hop communication unit 301 and the first upward route construction unit 311, by the protocol decision unit 330.

The second upward route construction unit 321 of the second slave unit 20b calculates an RPL rank 2 of the own node from:

the RPL rank 2 of the second collection device 20 indicated in the said DIO-2;
the MinimumHopRankIncrease-2 indicated in the said DIO-2; and
the metric representing the state between wireless links of the second communication device 200 of the second collection device 20 and the second communication device 200 of the second slave unit 20b acquired at the time of receiving the said DIO-2.

The second slave unit 20b calculates the RPL rank 2 as RPL rank 2 = 64 from the information indicated in the DIO-2 of the second collection device 20 and the metric of the wireless links as follows.

RPL rank 2 = (RPL rank 2 (=32) of the second collection device 20 + MinimumHopRankIncrease-2 (=32) + metric (=0)) = 64

The first upward route construction unit 311 of the second slave unit 20b calculates an RPL rank 1 of the own node from:

The RPL rank 1 of the second collection device 20 indicated in the said DIO-1;

the MinimumHopRankIncrease-1 indicated in the said DIO-1; and

the metric, which is acquired at the time of receiving the said DIO-1, representing the state between wireless links of the second communication device 200 of the second collection device 20 and the second communication device 200 of the second slave unit 20b.

When the metric representing the state between the wireless links is 0, the second slave unit 20b calculates the RPL rank 1 of the own node as RPL rank 1 = 256 from:

RPL rank 1 = 128, and

MinimumHopRankIncrease-1 = 128

that are indicated in the DIO-1 of the second collection device 20.

In some cases, the second slave unit 20b cannot receive the DIO-1 due to a communication failure. When the second slave unit 20b can only receive the DIO-2, the protocol conversion unit 370 calculates the hop count from the information indicated in the DIO-2, and calculates the RPL rank 1.

The operation of the protocol conversion unit 370 is as follows.

In the communication system 502, an LQL (Link Quality Level) is assumed to be adopted as the metric to represent the state between wireless links. The hop count from the second collection device 20 to the second slave unit 20b is calculated from the information indicated in the LQL. All the hops are assumed to "use the first MAC 103 and the first PHY 102 in a low transmission rate", and the RPL rank 1 is calculated as RPL rank 1 = 256 as follows.

RPL rank 1 = (RPL rank 1 (=128) of second collection device 20 + MinimumHopRankIncrease-1 (=128) $\times$ hop count (1) + metric (=0)) = 256

When the wait time for receiving the DIO times out, the second slave unit 20b selects a node that makes the RPL rank 2 of the route from the second collection device 20 to the second slave unit 20b be the smallest as an upward next hop (master node) to the second collection device 20 in the second upward route construction unit 321.

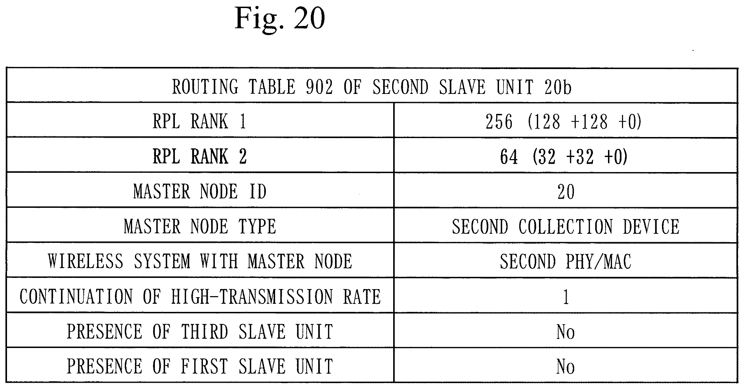

Fig. 20 illustrates a routing table 902 retained by the second slave unit 20b when the second collection device 20 is selected as the master node.

The second slave unit 20b manages an RPL rank 1, an RPL rank 2, an ID of the master node selected by the RPL rank 2, a type of the master node, a wireless system with the master node, a continuation number of a high-transmission rate link (the second PHY 202 and the second MAC 203) from the second collection device 20, presence of a third slave unit in the route, and presence of a first slave unit in the route.

The routing table 902 of the second slave unit 20b is as follows.

*RPL rank 1 = 256

*RPL rank 2 = 64

*Master node ID = 20

*Type of master node = second collection device

*Wireless system with master node = second PHY/MAC

*Continuation of high-transmission rate = 1

*Presence of third slave unit = No

*Presence of first slave unit = No

Further, the second slave unit 20b creates a DAO (DODAG advertisement object) message (DAO-2) including the ID of the master node, the node type of own node and the wireless system with the master node in the second multi-hop communication unit 302.

The second slave unit 20b transmits the said DAO-2 to the second collection device 20, requests connection with the communication system 502, and completes the entering operation.

The second collection device 20 decides to process the DAO-2 received from the second slave unit 20b in the second multi-hop communication unit 302 and the second downward route construction unit 320 by the protocol decision unit 330.

The second downward route construction unit 320 records the master node ID selected by the second slave unit 20b indicated in the DAO-2 and the wireless system with the master node in the downward routing table 901.

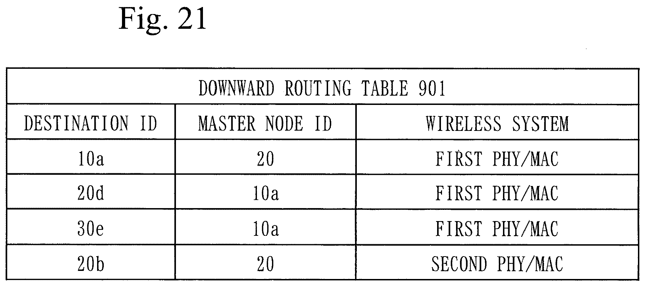

Fig. 21 expresses a downward routing table 901 managed by the second collection device 20.

When a downward message addressed to the second slave unit 20b is transmitted, the second collection device 20 traces the said downward routing table 901 to confirm the nodes to be traversed from the second collection device 20 to the second slave unit 20b, and the wireless systems specified. That is, the downward message from the second collection device 20 to the second slave unit 20b is transmitted to the second slave unit 20b using the second PHY/MAC.

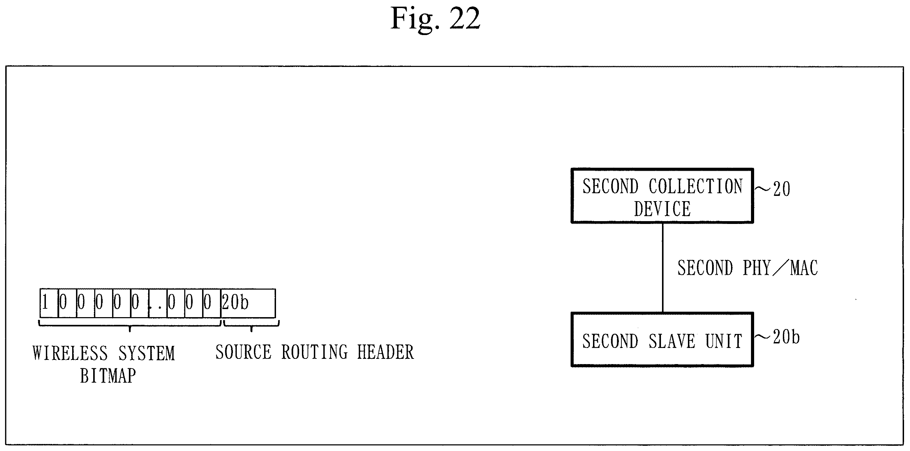

Fig. 22 illustrates a wireless system bitmap and a source routing header assigned to the downward message addressed to the second slave unit 20b in the second collection device 20.

The wireless system bitmap specifies the wireless system in the order of the first hop, the second hop, and so on from the leading bit using a reserved area that is disregarded as for the first slave unit. When the wireless system is the first PHY/MAC, the wireless system is specified as a bit number 0, and when the wireless system is the second PHY/MAC, it is specified as a bit number 1.

The source routing header lists the nodes ID of nodes traversed in the order of hops to the destination of the message.

When the downward message describing the said wireless system bitmap and the source routing header is received, the second slave unit 20b refers to the wireless system bitmap and the source routing header, and decides that the said message is addressed to the own node.

● Case in which the first slave unit 10f enters via the second slave unit 20b

Description will be made on the operation of the first slave unit 10f to enter the communication system 502.

The first slave unit 10f creates a DIS (DODAG information solicitation) message (DIS-1) in the first multi-hop communication unit 301. The first communication device 100 broadcasts the DIS-1 via the first MAC 103 and the first PHY 102.

The second slave unit 20b that has received DIS-1 from the first slave unit 10f indicates the following route information in the DIO (DODAG information object) message (DIO-2) in the second multi-hop communication unit 302. The second communication device 200 broadcasts the DIO-2 and responds to the DIS-2 via the first MAC 103 and the first PHY 102.

*RPL rank 2 of own node
*MininmumHopRankIncrease-2 used in the second multi-hop communication
*Wireless systems supported by the own node (the first PHY 102 and the first MAC 103, and the second PHY 202 and the second MAC 203)
*Device type of the own node
*Continuation number of high-transmission rate from the second collection device

The second slave unit 20b retains a routing table 902 as in Fig. 20, and broadcasts the DIO-2 after indicating the following route information in the DIO-2.

*RPL rank 2 = 64
*MinimumHopRankIncrease-2 = 32
*Wireless system = second PHY/MAC
*Device type = second slave unit
*Continuation of high-transmission rate = 1

Further, the second slave unit 20b indicates the following route information in a DIO (DODAG information object) message (DIO-1) by the first multi-hop communication unit 301. The second communication device 200 broadcasts the DIO-1 and responds to the DIS-1 via the first MAC 103 and the first PHY 102.

*RPL rank 1 of own node
*MinimumHopRankIncrease-1 used in the first multi-hop communication

The second slave unit 20b retains a routing table 902 as in Fig. 20, and broadcasts the DIO-1 after indicating the following information in the DIO-1.

*RPL rank 1 = 256
*MinimumHopRankIncrease-1 = 128

The first slave unit 10f that has received the DIO-2 and the DIO-1 from the second slave unit 20b discards the said DIO-2 as an undefined message, and decides to process the said DIO-1 in the first upward route construction unit 311.

The first upward route construction unit 311 of the first slave unit 10f calculates an RPL rank 1 of its own node from

the RPL rank 1 of the second slave unit 20b indicated in the said DIO-1, MinimumHopRankIncrease-1 indicated in the said DIO-1, and the metric, which is acquired at the time of receiving the said DIO-1, representing the state between wireless links between the second communication device 200 of the second slave unit 20b and the first communication device 100 of the first slave unit 10f.

When the metric representing the state between the wireless links is 0, the first slave unit 10f calculates the RPL rank 1 of its own node as RPL rank 1 = 384 from:

RPL rank 1 = 256, and
MinimumHopRankIncrease-1 = 128

that are indicated in the DIO-1 of the second slave unit 20b.

When the wait time for receiving the DIO-1 times out, the first slave unit 10f selects a node that makes the RPL rank 2 of the route from the second collection device 20 to the first slave unit 10f be the smallest as an upward next hop (master node) to the second collection device 20 in the first upward route construction unit 311.

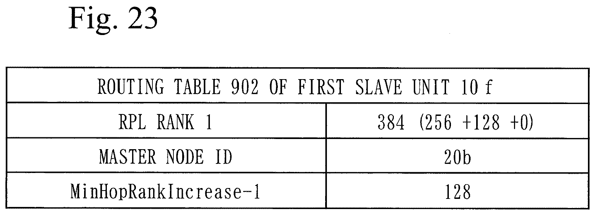

Fig. 23 expresses an RPL rank 1 retained in the routing table 902 of the first slave unit 10f and an ID of a master node selected when the second slave unit 20b is selected as the master node.

Further, the first slave unit 10a creates a DAO (DODAG advertisement object) message (DAO-1) including the master node ID in the first multi-hop communication unit 301.

The first slave unit 10f transmits the DAO-1 to the second collection device, requests connection to the communication system 502, and completes the entering operation.

The second collection device 20 decides to process the DAO-1 received from the first slave unit 10f in the first multi-hop communication unit 301 and the second downward route construction unit 320 by the protocol decision unit 330.

The second downward route construction unit 320 determines that the wireless system is the first PHY/MAC since the type of the wireless link (wireless system) is not indicated in the DAO-1.

The second downward route construction unit 320 records the master node ID selected by the first slave unit 10f indicated in the DIO-1, and the type of the wireless link (wireless system) used for hop to the first slave unit 10f by the master node in the downward routing table 901.

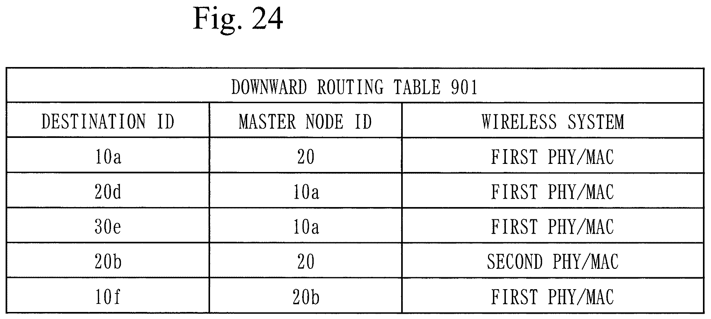

Fig. 24 expresses a downward routing table 901 managed by the second collection device 20.

When the second collection device 20 transmits a downward message addressed to the first slave unit 10f, the second collection device 20 confirms the nodes to be traversed from the second collection device 20 to the first slave unit 10f, and the wireless systems designated using the said downward routing table 901. That is, the downward message from the second collection device 20 to the first slave unit 10f is transmitted to the second slave unit 20b using the second PHY/MAC, and transmitted to the first slave unit 10f using the first PHY/MAC.

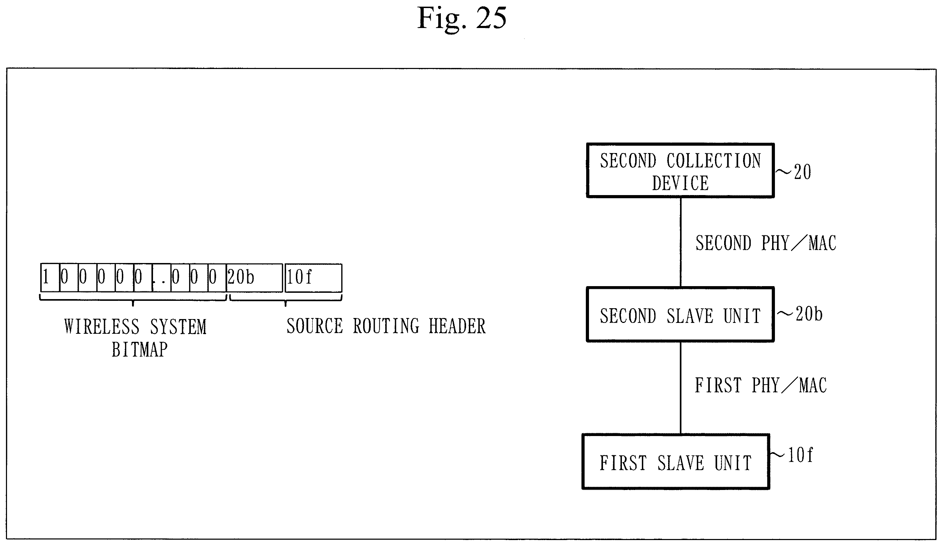

Fig. 25 illustrates a wireless system bitmap and a source routing header assigned to the downward message addressed to the first slave unit 10f in the second collection device 20.

The wireless system bitmap designates a wireless system in the order of the first hop, the second hop, and so on from the leading bit using a reserved area that is disregarded as for the first slave unit. When the wireless system is the first PHY/MAC, the wireless system is designated as a bit number 0, and when the wireless system is the second PHY/MAC, it is designated as a bit number 1.

The source routing header lists the node IDs of nodes to be traversed in the order of hops to the destination of the message.

When the downward message describing the said wireless system bitmap and the source routing header is received, the second slave unit 20b refers to the wireless system bitmap and the source routing header, and transfers the said message to the first slave unit 10f via the first PHY/MAC.

● Case in which the second slave unit 20g enters via the second slave unit 20b

Description will be made on the operation of the second slave unit 20g to enter the communication system 502.

The second slave unit 20g creates a DIS (DODAG information solicitation) message (DIS-1) in the first multi-hop communication unit 301. The second communication device 200 broadcasts the DIS-1 via the first MAC 103 and the first PHY 102.

The second slave unit 20b that has received the DIS-1 from the second slave unit 20g indicates the following route information in the DIO (DODAG information object) message (DIO-2) in the second multi-hop communication unit 302. The second communication device 200 broadcasts the DIO-2 and responds to the DIS-1 via the first MAC 103 and the first PHY 102.

*RPL rank 2 of own node
*MinimumHopRankIncrease-2 used in the second multi-hop communication

\*Wireless systems (the first PHY 102 and the first MAC 103, and the second PHY 202 and the second MAC 203) supported by own node

\*Device type of own node

\*Continuation number of high-transmission rate from the second collection device

The second slave unit 20b retains a routing table 902 as in Fig. 20, and broadcasts the DIO-2 after indicating the following route information in the DIO-2.

\*RPL rank 2 = 64

\*MinimumHopRankIncrease-2= 32

\*Wireless system = second PHY/MAC

\*Device type = second slave unit

\*Continuation of high-transmission rate = 1

Further, the second slave unit 20b indicates the following route information in the DIO (DODAG information object) message (DIO-1) by the first multi-hop communication unit 301. The second communication device 200 broadcasts the DIO-1 and responds to the DIS-1 via the first MAC 103 and the first PHY 102.

\*RPL rank 1 of its own node

\*MinimumHopRankIncrease-1 used in the first multi-hop communication

The second slave unit 20b retains the routing table 902 as in Fig. 20, and broadcasts the DIO-1 after indicating the following route information in the DIO-1.

\*RPL rank 1 = 256

\*MinimumHopRankIncrease-1 =128

The second slave unit 20g that has received the DIO-2 and the DIO-1 from the second slave unit 20b decides to process the said DIO-2 in the second multi-hop communication unit 302 and the second upward route construction unit 321, and to process the said DIO-1 in the first multi-hop communication unit 301 and the first upward route construction unit 311, by the protocol decision unit 330.

The second upward route construction unit 321 of the second slave unit 20g calculates an RPL rank 2 of its own node from:

the RPL rank 2 of the second slave unit 20b indicated in the said DIO-2;

the MinimumHopRankIncrease-2 indicated in the said DIO-2; and

the metric, which is acquired at the time of receiving the said DIO-2, describing a state between the wireless links of the second communication device 200 of the second slave unit 20b and the second communication device 200 of the second slave unit 20g.

The second slave unit 20g calculates the RPL rank 2 as RPL rank 2 = 96 from the information indicated in the DIO-2 of the second slave unit 20b and the metric of the wireless link as follows.

RPL rank 2 = (RPL rank 2 (=64) of the second slave unit 20b + MinimumHopRankIncrease-2 (=32) + metric (=0)) = 96

The first upward route construction unit 311 of the second slave unit 20g calculates an RPL rank 1 of its own node from:

the RPL rank 1 of the second slave unit 20b indicated in the said DIO-1;

the MinimumHopRankIncrease-1 indicated in the said DIO-1; and

the metric, which is acquired at the time of receiving the said DIO-1, describing a state between the wireless links of the second communication device 200 of the second slave unit 20b and the second communication device 200 of the second slave unit 20g.

When the metric representing the state between the wireless links is 0, the second slave unit 20g calculates the RPL rank 1 of its own node as RPL rank 1 = 384 from:

RPL rank 1 = 256; and
MinimumHopRankIncrease-1 = 128

that are indicated in DIO-1 of the second slave unit 20b.

When the wait time for receiving the DIO times out, the second slave unit 20g selects a node that makes the RPL rank 2 of the route from the second collection device 20 to the second slave unit 20g be the smallest as an upward next hop (master node) to the second collection device 20, in the second upward route construction unit 321.

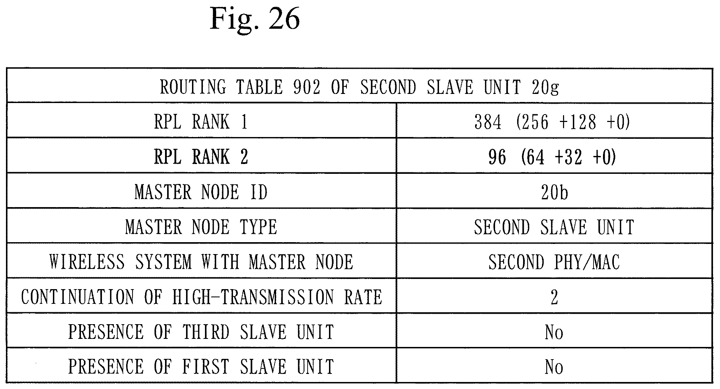

Fig. 26 illustrates a routing table 902 retained by the second slave unit 20g when the second slave unit 20b is selected as the master node.

The second slave unit 20g manages an RPL rank 1, an RPL rank 2, an ID of the master node selected by the RPL rank 2, a type of the master node, a wireless system with the master node, a continuation number of a high-transmission rate link (the second PHY 202 and the second MAC 203) from the second collection device 20, presence of a third slave unit in the route, and presence of a first slave unit in the route.

The routing table 902 of the second slave unit 20g is as follows.

*RPL rank 1 = 384
*RPL rank 2 = 96
*Master node ID = 20b
*Type of master node = second slave unit
*Wireless system with master node = second PHY/MAC
*Continuation of high-transmission rate = 2
*Presence of third slave unit = No
*Presence of first slave unit = No

Further, the second slave unit 20g creates a DAO (DODAG advertisement object) message (DAO-2) including the ID of the master node, the node type of its own node and the wireless system with the master node, in the second multi-hop communication unit 302.

The second slave unit 20g transmits the said DAO-2 to the second collection device 20, requests connection to the communication system 502, and completes the entering operation.

The second collection device 20 decides to process the DAO-2 received from the second slave unit 20g in the second multi-hop communication unit 302 and the second downward route construction unit 320 by the protocol decision unit 330.

The second downward route construction unit 320 records the master node ID selected by the second slave unit 20g indicated in the DAO-2 and the wireless system with the master node, in the downward routing table 901.

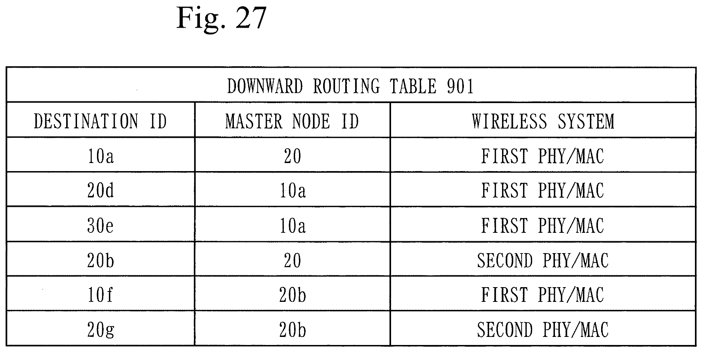

Fig. 27 expresses a downward routing table 901 managed by the second collection device 20.

When the second collection device 20 transmits a downward message addressed to the second slave unit 20g, the second collection device 20 traces the said downward routing table 901 to confirm the nodes to be traversed from the second collection device 20 to the second slave unit 20g, and the wireless systems designated. That is, the downward message from the second collection device 20 to the second slave unit 20g is transmitted to the second slave unit 20b using the second PHY/MAC, and transmitted to the second slave unit 20g using the second PHY/MAC.

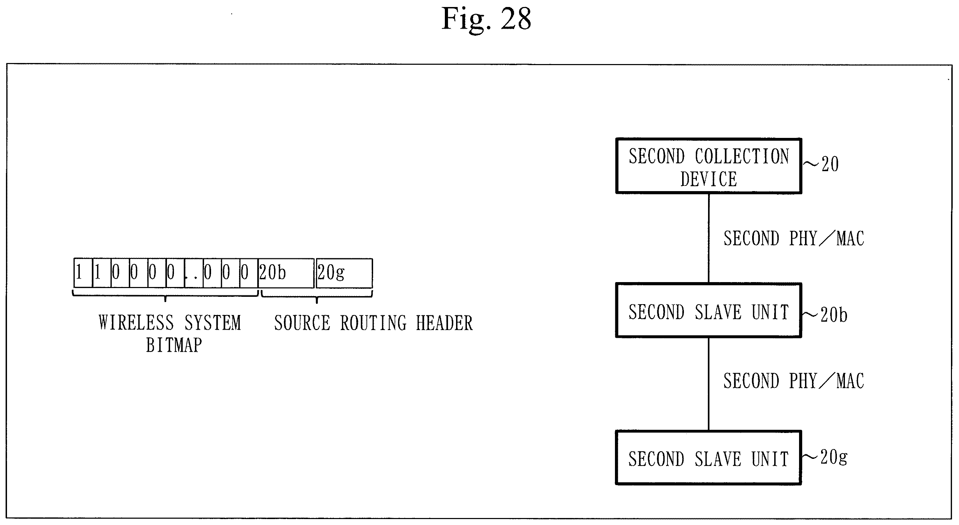

Fig. 28 illustrates a wireless system bitmap and a source routing header assigned to the downward message addressed to the second slave unit 20g in the second collection device 20.

The wireless system bitmap designates a wireless system in the order of the first hop, the second hop, and so on from the leading bit using a reserved area that is disregarded as for the first slave unit. When the wireless system is the first PHY/MAC, the wireless system is designated as a bit number 0, and when the wireless system is the second PHY/MAC, the wireless system is designated as a bit number 1.

The source routing header lists the node IDs of the nodes to be traversed in the order of hops to the destination of the message.

When the second slave unit 20b receives the downward message indicating the said wireless system bitmap and the source routing header, the second slave unit 20b refers to the wireless system bitmap and the source routing header, and transfers the said message to the second slave unit 20g using the second PHY/MAC.

●Case in which the third slave unit 30h enters via the second slave unit 20b

Description will be made on an operation for the third slave unit 30h to enter the communication system 502.

The third slave unit 30h creates a DIS (DODAG information solicitation) message (DIS-1) in the first multi-hop communication unit 301. The second communication device 200 broadcasts the DIS-1 via the first MAC 103 and the first PHY 102.

The second slave unit 20b that has received the DIS-1 from the third slave unit 30h indicates the following route information in the DIO (DODAG information object) message (DIO-2) by the second multi-hop communication unit 302. The second communication device 200 broadcasts the DIO-2 and responds to the DIS-1 via the first MAC 103 and the first PHY 102.

*RPL rank 2 of own node
*MinimumHopRankIncrease-2 used in the second multi-hop communication
*Wireless system supported by the node (the first PHY 102 and the first MAC 103, and the second PHY 202 and the second MAC 203)
*Device type of own node
*Continuation number of high-transmission rate from the second collection device

The second slave unit 20b retains the routing table 902 as in Fig. 20, and broadcasts the DIO-2 after indicating the following route information in the DIO-2.

*RPL rank 2 = 64
*MinimumHopRankIncrease-2 = 32
*Wireless system = Second PHY/MAC
*Device type = Second slave unit
*Continuation of high-transmission rate = 1

Further, the second slave unit 20b indicates the following route information in a DIO (DODAG Information Object) message (DIO-1) in the first multi-hop communication unit 301. The second communication device 200 responds to the DIS-1 by broadcasting the DIO-1 via the first MAC 103 and the first PHY 102 of the second communication device 200.

*RPL Rank 1 of own node

*MinimumHopRankIncrease-1 used in the first multi-hop communication

The slave unit 20b retains a routing table 902 as in Fig. 20, and broadcasts the DIO-1 after indicating the following route information in the DIO-1.

*RPL rank 1 = 256
*MinimumHopRankIncrease-1 = 128

The third slave unit 30h that has received the DIO-2 and the DIO-1 from the second slave unit 20b decides to process the said DIO-2 in the second multi-hop communication unit 302 and the second upward route construction unit 321, and to process the said DIO-1 in the first multi-hop communication unit 301 and the first upward route construction unit 311, by the protocol decision unit 330.

The second upward route construction unit 321 of the third slave unit 30h calculates an RPL rank 2 of the own node from:

the RPL rank 2 of the second slave unit 20b indicated in the said DIO-2;
the MinimumHopRankIncrease-2 indicated in the said DIO-2;
the metric, which is acquired at the time of receiving the said DIO-2, representing a state between wireless links of the second communication device 200 of the second slave unit 20b and the first communication device 100 of the third slave unit 30h; and
the weighting of using the first MAC 103 and the first PHY 102 in a transmission rate lower than that of the second MAC 203 and the second PHY 202.

The third slave unit 30h calculates an RPL rank 2 as RPL rank 2 = 128 from the information indicated in the DIO-2 of the second slave unit 20b and the metric of the wireless link as follows.

RPL rank 2 = (RPL rank 2 (=64) of second slave unit 20b + MinimumHopRankIncrease-2 (=32) × weighting of low transmission rate (=2) + metric (=0)) = 96

The first upward route construction unit 311 of the third slave unit 30h calculates an RPL rank 1 of the own node from:

> the RPL rank 1 of the second slave unit 20b indicated in the said DIO-1;
> the MinimumHopRankIncrease-1 indicated in the said DIO-1; and
> the metric, which is acquired at the time of receiving the said DIO-1, representing a state between wireless links of the second communication device 200 of the second slave unit 20b and the first communication device 100 of the third slave unit 30h.

When the metric representing the state between the wireless links is 0, the third slave unit 30h calculates an RPL rank 1 of the own node as RPL rank 1 = 384 from:

> RPL rank 1 = 256; and
> MinimumHopRankIncrease-1 = 128

that are indicated in the DIO-1 of the second slave unit 20b.

In some cases, the third slave unit 30h is incapable of receiving the DIO-1 due to a communication failure. When the third slave unit 30h can only receive the DIO-2, the protocol conversion unit 370 calculates a hop count from the information indicated in the DIO-2, and calculates an RPL rank 1.

The operation of the protocol conversion unit 370 is as follows.

In the communication system 502, an LQL (link quality level) is assumed to be adopted as the metric to represent the state between wireless links. The hop count from the second collection device 20 to the third slave unit 30h is calculated from the information indicated in the LQL. By assuming that all the hops "use the first MAC 103 and the first PHY 102 in the low transmission rate", the RPL rank 1 is calculated as RPL rank 1 = 256 as follows.

RPL rank 1 = (RPL rank 1 of second collection device 20 (=128) + MinimumHopRankIncrease-1 (=128) × hop count (2) + metric (=0)) = 384

When the wait time for receiving the DIO times out, the third slave unit 30h selects a node which makes the RPL rank 2 of the route from the second collection device 20 to the third slave unit 30h be the smallest as an upward next hop (master node) to the second collection device 20, in the second upward route construction unit 321.

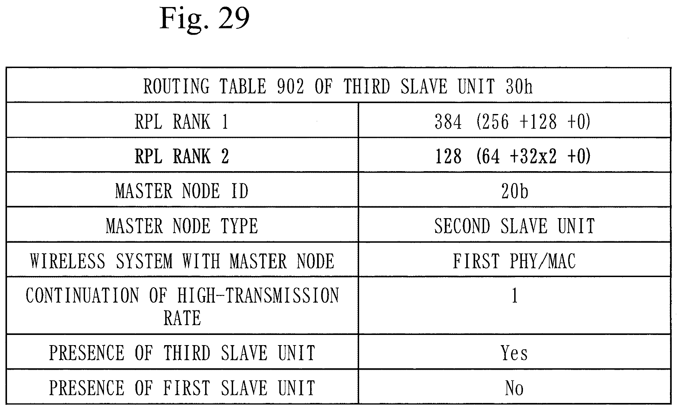

Fig. 29 illustrates a routing table 902 retained by the third slave unit 30h when the second slave unit 20b is selected as the master node.

The third slave unit 30h manages the RPL rank 1, the RPL rank 2, the ID of the master node selected by the RPL rank 2, the type of the master node, the wireless system with the master node, the continuation number of high-transmission rate link from the second collection device 20 (the second PHY 202 and the second MAC 203), presence of the third slave unit in the route, and presence of the first slave unit in the route.

The routing table 902 of the third slave unit 30h is as follows.

> *RPL rank 1 = 384
> *RPL rank 2 = 128
> *Master node ID = 20b
> *Type of master node = second slave unit
> *Wireless system with master node = first PHY/MAC
> *Continuation of high-transmission rate = 1
> *Presence of third slave unit = Yes
> *Presence of first slave unit = No

Furthermore, the third slave unit 30h creates a DAO (DODAG Advertisement Object) message (DAO-2) including the master node ID, the node type of its own node and the wireless system with the master node, in the second multi-hop communication unit 302.

The third slave unit 30h transmits the said DAO-2 to the second collection device 20, requests connection to the communication system 502, and completes the entering operation.

The second collection device 20 decides to process the DAO-2 received from the third slave unit 30h in the second multi-hop communication unit 302 and the second downward route construction unit 320 by the protocol decision unit 330.

The second downward route construction unit 320 records the master node ID selected by the third slave unit 30h indicated in the DAO-2, and the wireless system with the master node, in the downward routing table 901.

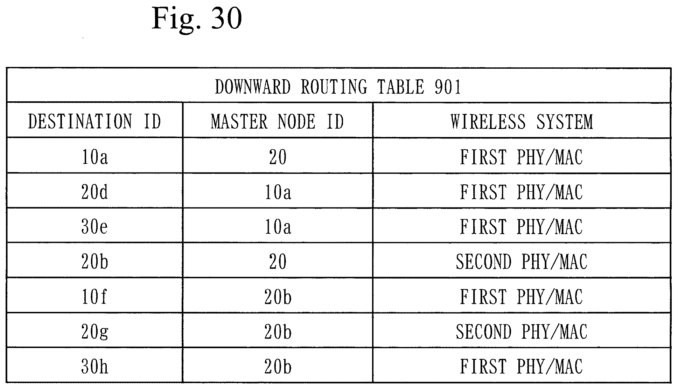

Fig. 30 expresses a downward routing table 901 managed by the second collection device 20.

When the second collection device 20 transmits a downward message addressed to the third slave unit 30h, the second collection device 20 traces the downward routing table 901 to confirm the nodes to be traversed from the second collection device 20 to the third slave unit 30h, and the wireless system designated. In other words, the downward message from the second collection device 20 to the third slave unit 30h is transmitted to the second slave unit 20b using the second PHY/MAC, and transmitted to the third slave unit 30h using the first PHY/MAC.

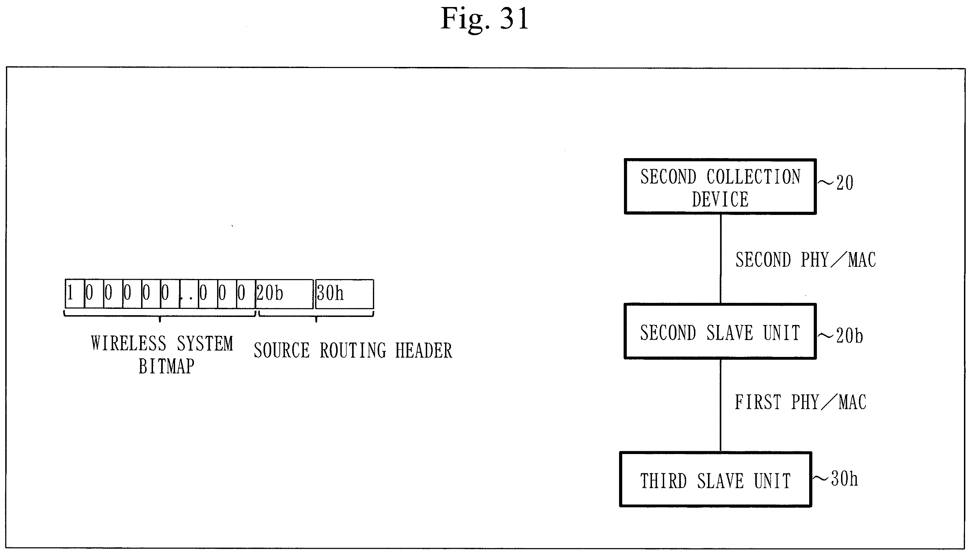

Fig. 31 illustrates a wireless system bitmap and a source routing header assigned to the downward message addressed to the second slave unit 20g in the second collection device 20.

The wireless system bitmap designates the wireless system in the order of the first hop, the second hop, and so on from the leading bit using a reserved area that is disregarded as for the first slave unit. When the wireless system is the first PHY/MAC, the wireless system is specified as a bit value 0, and when the wireless system is the second PHY/MAC, the wireless system is specified as a bit value 1.

The source routing header lists the node IDs of the nodes to be traversed in the order of hops to the destination of the message.

When the second slave unit 20b receives the downward message indicating the said wireless system bitmap and source routing header, the second slave unit 20b refers to the wireless system bitmap and the source routing header, and transfers the message to the third slave unit 30h using the first PHY/MAC.

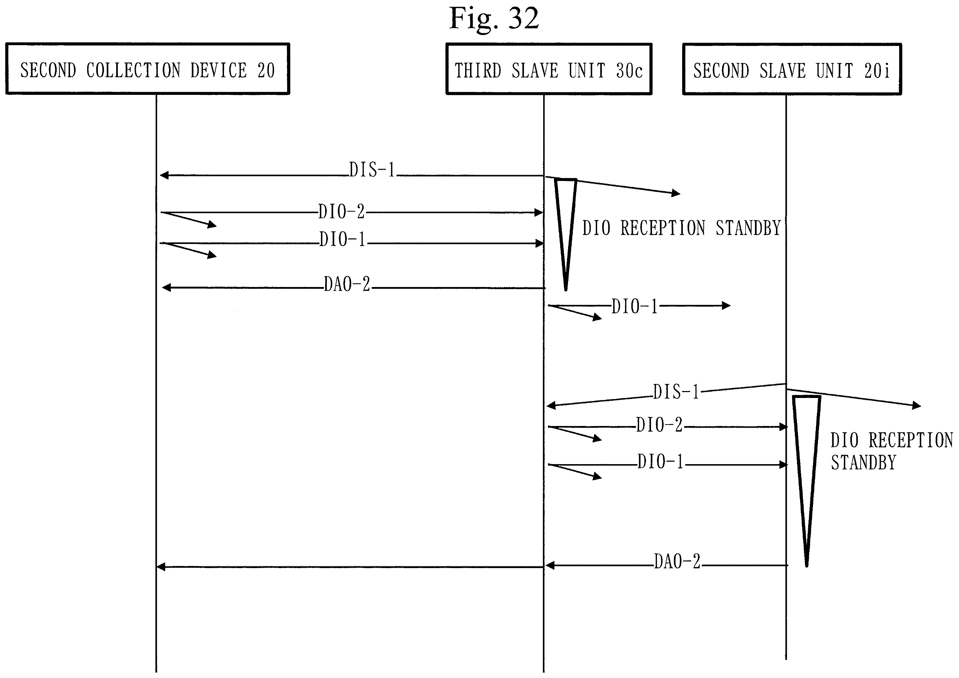

Fig. 32 shows a sequence in a case in which the third slave unit 30c and the second slave unit 20i enter the communication system 502 as in Fig. 4.

●When the third slave unit 30c enters the second collection device

The operation of the third slave unit 30c entering the communication system 502 is described.

The third slave unit 30c creates a DIS (DODAG Information Solicitation) message (DIS-1) in the first multi-hop communication unit 301. The second communication device 200 broadcasts the DIS-1 using the first MAC 103 and the first PHY 102.

The second collection device 20 that has received the DIS-1 from the third slave unit 30c indicates the following route information in the DIO (DODAG Information Object) message (DIO-2) by the second multi-hop communication unit 302. The second communication device 200 broadcasts the DIO-2 and responds to the DIS-1 via the first MAC 103 and the first PHY 102.

* RPL rank 2 of own node: RPL rank 2
* MinimumHopRankIncrease-2 used in the second multi-hop communication
* Wireless system supported by own node (the first PHY 102 and the first MAC 103, and the second PHY 202 and the second MAC 203)
* Device type of own node
* Continuation number of high-transmission rate from the second collection device

The second collection device 20 retains a rank table 903 as in Fig. 9, and broadcasts the DIO-2 after indicating the following route information in the DIO-2.

* RPL rank 2 = 32
* MinimumHopRankIncrease-2 = 32
* Wireless system = second PHY/MAC
* Device type = second collection device
* Continuation number of high-transmission rate = 0

Furthermore, the second collection device 20 indicates the following route information in the DIO (DODAG Information Object) message (DIO-1) by the first multi-hop communication unit 301. The second communication device 200 broadcasts the DIO-1 and responds to the DIS-1 via the first MAC 103 and the first PHY 102.

* RPL rank 1 of own node
* MinimumHopRankIncrease-1 used in the first multi-hop communication

The second collection device 20 retains a rank table 903 as in Fig. 9, and broadcasts the DIO-1 after indicating the following route information in the DIO-1.

* RPL rank 1 = 128

* MinimumHopRankIncrease-1 = 128

The third slave unit 30c that has received the DIO-2 and the DIO-1 from the second collection device 20 decides to process the DIO-2 in the second multi-hop communication unit 302 and the second upward route construction unit 321, and to process the DIO-1 in the first multi-hop communication unit 301 and the first upward route construction unit 311, by the protocol decision unit 330.

The second upward route construction unit 321 of the third slave unit 30c calculates the RPL rank 2 of its own node from:

the RPL rank 2 of the second collection device 20 indicated in the DIO-2;
the MinimumHopRankIncrease-2 indicated in the DIO-2;
the metric, which is acquired at the time of receiving the DIO-2, representing the state between the wireless links of the second communication device 200 of the second collection device 20 and the first communication device 100 of the third slave unit 30c, and
the weighting of using the first MAC 103 and the first PHY 102 in a transmission rate lower than that of the second MAC 203 and the second PHY 202.

The third slave unit 30c calculates the RPL rank 2 as RPL rank 2 = 96 from the information described in the DIO-2 of the second collection device 20 and the metric of the wireless link as follows:

RPL rank 2 = (RPL rank 2 of the second collection device 20 (=32) + MinimumHopRankIncrease-2 (=32) × weighting of low-transmission rate (=2) + metric (=0)) = 96

The first upward route construction unit 311 of the third slave unit 30c calculates the RPL rank 1 of its own node based on:

the RPL rank 1 of the second collection device 20 described in the DIO-1;
the MinimumHopRankIncrease-1 described in the DIO-1; and
the metric, which is acquired at the time of receiving the DIO-1, representing the state between the wireless links of the second communication device 200 of the second collection device 20 and the first communication device 100 of the third slave unit 30c.

When the metric representing the state between the wireless links is 0, the third slave unit 30c calculates the RPL rank 1 of its own node as RPL rank 1 = 256 from:

RPL rank 1 = 128, and
MinimumHopRankIncrease-1 = 128

described in the DIO-1 of the second collection device 20.

When the wait time for receiving the DIO times out, the third slave unit 30c selects a node which makes the RPL rank 2 of the route from the second collection device 20 to the third slave unit 30c be the smallest as an upward next hop (master node) to the second collection device 20, in the second upward route construction unit 321.

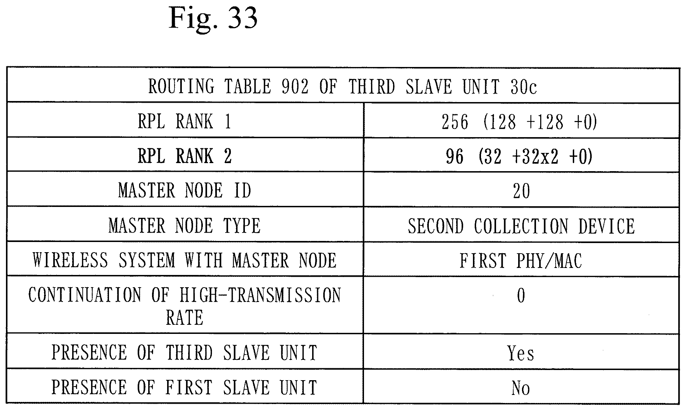

Fig. 33 illustrates a routing table 902 retained by the third slave unit 30c when the second collection device 20 is selected as the master node.

The third slave unit 30c manages the RPL rank 1, the RPL rank 2, the ID of the master node selected by the RPL rank 2, the type of master node, the wireless system with the master node, a continuation number of high-transmission rate link (the second PHY 202 and the second MAC 203) from the second collection device 20, presence of a third slave unit in the route, and presence of a first slave unit in the route.

The routing table 902 of the third slave unit 30c is as follows:

*RPL rank 1 = 256
*RPL rank 2 = 96
*Master node ID = 20
*Master node type = second collection device
*Wireless system with master node = first PHY/MAC
*Continuation of high-transmission rate = 0
*Presence of third slave unit = Yes

*Presence of first slave unit = No

Furthermore, the third slave unit 30c creates a DAO (DODAG Advertisement Object) message (DAO-2) including the master node ID, the node type of its own node, and the wireless system with the master node, in the second multi-hop communication unit 302.

The third slave unit 30c transmits the DAO-2 to the second collection device 20, requests connection to the communication system 502, and completes the entering operation.

The second collection device 20 decides to process the DAO-2 received from the third slave unit 30c in the second multi-hop communication unit 302 and the second downward route construction unit 320 by the protocol decision unit 330.

The second downward route construction unit 320 of the second collection device 20 records the master node ID selected by the third slave unit 30c indicated in the DAO-2 and the wireless system with the master node in the downward routing table 901.

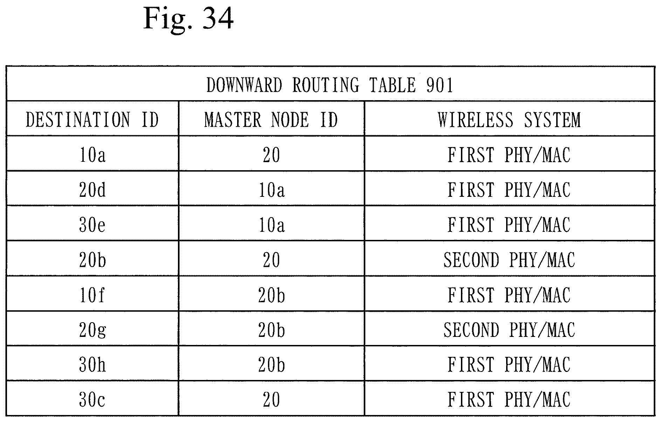

Fig. 34 expresses a downward routing table 901 managed by the second collection device 20.

When sending a downward message addressed to the third slave unit 30c, the second collection device 20 traces the downward routing table 901 to confirm the nodes to be traversed from the second collection device 20 to the third slave unit 30c, and the wireless systems designated. In other words, the downward message from the second collection device 20 to the third slave unit 30c is transmitted to the third slave unit 30c using the first PHY/MAC.

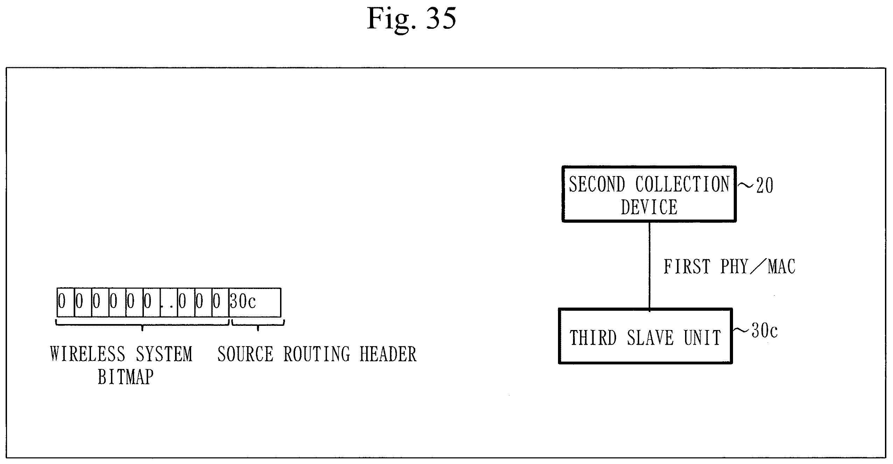

Fig. 35 illustrates the wireless system bitmap and the source routing header assigned to the downward message addressed to the third slave unit 30c in the second collection device 20.

The wireless system bitmap designates the wireless system in the order of the first hop, the second hop, and so on, from the leading bit using a reserved area that is disregarded as for the first slave unit. When the wireless system is the first PHY/MAC, the wireless system is specified as a bit value 0, and when the wireless system is the second PHY/MAC, the wireless system is specified as a bit value 1.

The source routing header lists the node IDs of the nodes to be traversed to the destination of the message in the order of hops.

When the third slave unit 30c receives a downward message indicating the wireless system bitmap and the source routing header, the third slave unit 30c refers to the wireless system bitmap and the source routing header, and decides that the message is addressed to its own node.

●When the second slave unit 20i enters via the third slave unit 30c

The operation of the second slave unit 20i entering the communication system 502 is described.

The second slave unit 20i creates a DIS (DODAG Information Solicitation) message (DIS-1) in the first multi-hop communication unit 301. The second communication device 200 broadcasts the DIS-1 via the first MAC 103 and the first PHY 102.

The third slave unit 30c that has received the DIS-1 from the second slave unit 20i indicates the following route information in the DIO (DODAG Information Object) message (DIO-2) by the second multi-hop communication unit 302. The second communication device 200 broadcasts the DIO-2 and responds to the DIS-1 via the first MAC 103 and the first PHY 102.

*RPL rank 2 of own node
*MinimumHopRankIncrease-2 used in the second multi-hop communication
*Wireless systems supported by own node (the first PHY 102 and the first MAC 103, and the second PHY 202 and the second MAC 203)
*Device type of own node
*Continuation number of high-transmission rate from the second collection device

The third slave unit 30c retains a routing table 902 as in Fig. 33, and broadcasts the DIO-2 after indicating the following route information in the DIO-2.

*RPL rank 2 = 96
*MinimumHopRankIncrease-2 = 32
*Wireless system = first PHY/MAC
*Device type = third slave unit
*Continuation of high-transmission rate = 0
*Presence of third slave unit = Yes
*Presence of first slave unit = No

Further, the third slave unit 30c indicates the following route information in a DIO (DODAG Information Object) message (DIO-1) in the first multi-hop communication unit 301. The second communication device 200 broadcasts the DIO-1 and responds to the DIS-1 via the first MAC 103 and the first PHY 102.

*RPL rank 1 of own node
*MinimumHopRankIncrease-1 used in first multi-hop communication

The third slave unit 30c retains a routing table 902 as in Fig. 33, and broadcasts the DIO-1 after indicating the following route information in the DIO-1.

*RPL rank 1 = 256
*MinimumHopRankIncrease-1 = 128

The second slave unit 20i that has received the DIO-2 and the DIO-1 from the third slave unit 30c decides to process the DIO-2 in the second multi-hop communication unit 302 and the second upward route construction unit 321, and to process the DIO-1 in the first multi-hop communication unit 301 and the first upward route construction unit 311 by the protocol decision unit 330.

The second upward route construction unit 321 of the second slave unit 20i calculates the RPL rank 2 of its own node from:

the RPL rank 2 of the third slave unit 30c indicated in the DIO-2;
the MinimumHopRankIncrease-2 indicated in the DIO-2;
the metric, which is acquired at the time of receiving the DIO-2, representing the state between the wireless links of the first communication device 100 of the third slave unit 30c and the second communication device 200 of the second slave unit 20i; and
the weighting of using the first MAC 103 and the first PHY 102 in a transmission rate lower than that of the second MAC 203 and the second PHY 202.

The second slave unit 20i calculates the RPL rank 2 as RPL rank 2 = 160 from the information indicated in the DIO-2 of the third slave unit 30c and the metric of the wireless link as follows:

RPL rank 2 = (RPL rank 2 of the third slave unit 30c (=96) + MinimumHopRankIncrease-2 (=32) $\times$ weighting of low-transmission rate (=2) + metric (=0)) = 160

The first upward route construction unit 311 of the second slave unit 20i calculates the RPL rank 1 of its own node from:

the RPL rank 1 of the third slave unit 30c indicated in the DIO-1;
the MinimumHopRankIncrease-1 indicated in the DIO-1; and
the metric, which is acquired at the time of receiving the DIO-1, representing the state between the wireless links of the first communication device 100 of the third slave unit 30c and the second communication device 200 of the second slave unit 20i.

When the metric representing the state between the wireless links is 0, the second slave unit 20i calculates the RPL rank 1 of its own node as RPL rank 1 = 384 from:

RPL rank 1 = 256, and
MinimumHopRankIncrease-1 = 128

that are indicated in the DIO-1 of the third slave unit 30c.

When the wait time for receiving the DIO times out, the second slave unit 20i selects a node which makes the RPL rank 2 of the route from the second collection device 20 to the second slave unit 20i be the smallest as an upward next hop (master node) to the second collection device 20, in the second upward route construction unit 321.

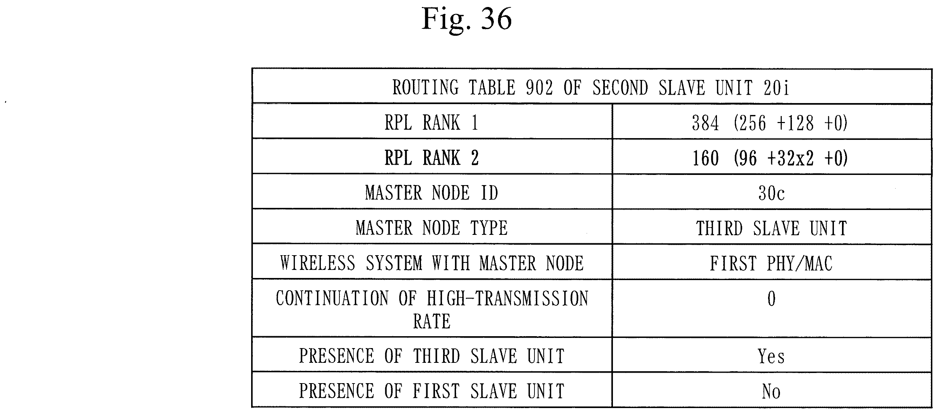

Fig. 36 illustrates a routing table 902 retained by the second slave unit 20i when the third slave unit 30c is selected as the master node.

The second slave unit 20i manages the RPL rank 1, the RPL rank 2, the ID of the master node selected by the RPL rank 2, the type of the master node, the wireless system with the master node, the continuation number of the high-transmission rate link (the second PHY 202 and the second MAC 203) from the second collection device 20, presence of a third slave unit in the route, and presence of a first slave unit in the route.

The routing table 902 of the second slave unit 20i is as follows:

    *RPL rank 1 = 384
    *RPL rank 2 = 160
    *master node ID = 30c
    *Type of master node = third slave unit
    *Wireless system with master node = first PHY/MAC
    *Continuation of high-transmission rate = 0
    *Presence of third slave unit = Yes
    *Presence of first slave unit = No

Furthermore, the second slave unit 20i creates a DAO (DODAG Advertisement Object) message (DAO-2) including the master node ID, the type of its own node, and the wireless system with the master node, in the second multi-hop communication unit 302.

The second slave unit 20i transmits the DAO-2 to the second collection device 20, requests connection to the communication system 502, and completes the entering operation.

The second collection device 20 decides to process the DAO-2 received from the second slave unit 20i in the second multi-hop communication unit 302 and the second downward route construction unit 320 by the protocol decision unit 330.

The second downward route construction unit 320 records the master node ID selected by the second slave unit 20g indicated in the DAO-2 and the wireless system with the master node, in the downward routing table 901.

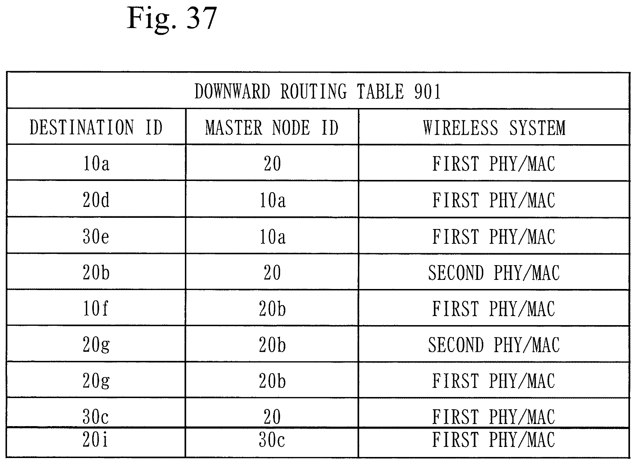

Fig. 37 expresses a downward routing table 901 managed by the second collection device 20.

When the second collection device 20 transmits a downward message addressed to the second slave unit 20i, the second collection device 20 traces the downward routing table 901 to confirm the nodes to be traversed from the second collection device 20 to the second slave unit 20i, and the wireless systems designated. In other words, the downward message from the second collection device 20 to the second slave unit 20i is transmitted to the third slave unit 30c using the first PHY/MAC, and to the second slave unit 20i using the first PHY/MAC.

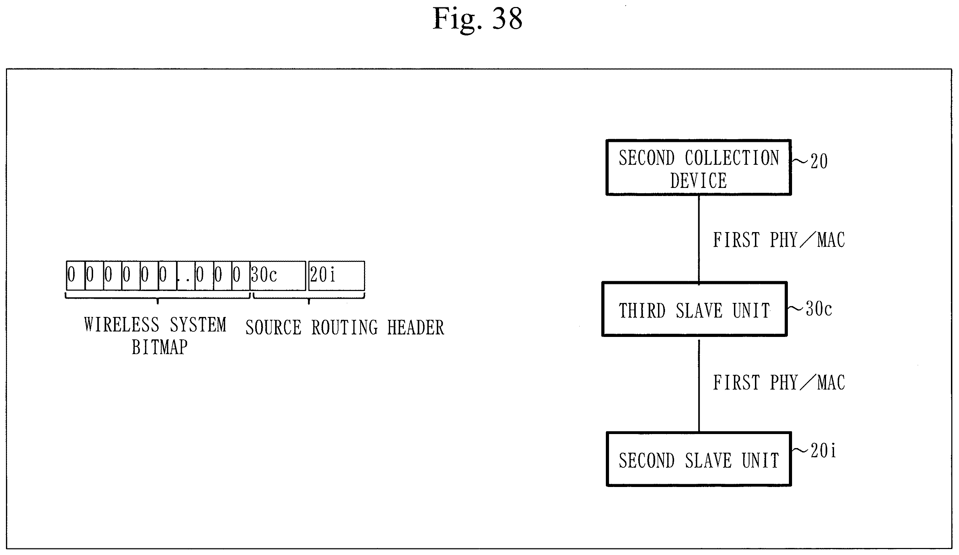

Fig. 38 shows the wireless system bitmap and source routing header assigned to the downward message addressed to the second slave unit 20i in the second collection device 20.

The wireless system bitmap specifies the wireless system in the order of the first hop, the second hop, and so on, from the leading bit using a reserved area that is disregarded as for the first slave unit. When the wireless system is the first PHY/MAC, it is specified as a bit value 0, and when the wireless system is the second PHY/MAC, it is specified as a bit value 1.

The source routing header lists the node IDs of the nodes traversed to the destination of the message in the order of hops.

When the third slave unit 30c receives a downward message with the wireless system bitmap and source routing header, it refers to the wireless system bitmap and the source routing header, and forwards the message to the second slave unit 20i using the first PHY/MAC.

● Selecting a master node of the second slave unit 20x (the second slave unit 20x > the third slave unit 30x > the first slave unit 10x)

In Fig. 4, even when the second slave unit 20g is capable of communicating with the first slave unit 10a and the third slave unit 30c besides the second slave unit 20b, the second slave unit 20g selects the second slave unit 20b as the master node.

    RPL rank 2 calculated from the first slave unit 10a = 160
    RPL rank 2 calculated from the second slave unit 20b = 96
    RPL rank 2 calculated from the third slave unit 30c = 160 (96 + 32 × 2)

Similarly, in Fig. 4, even when the second slave unit 20d is capable of communicating with the second slave unit 20b and the third slave unit 30c besides the first slave unit 10a, the second slave unit 20d selects the second slave unit 20b as the master node.

Similarly, in Fig. 4, even when the second slave unit 20i is capable of communicating with the first slave unit 10a and the second slave unit 20b besides the third slave unit 30c, the second slave unit 20i selects the second slave unit 20b as the master node.

In this way, the second slave unit 20x operating according to the second protocol is a wireless device with a higher probability of selecting the second slave unit 20x as the master node than the first slave unit 10x and the third slave unit 30x (the second slave unit 20x > the third slave unit 30x, the second slave unit 20x > the first slave unit 10x).

In Fig. 4, even when the second slave unit 20d is capable of communicating with the third slave unit 30c besides the first slave unit 10a, the second slave unit 20d selects the third slave unit 30c, with which the first slave unit 10a does not exist in the route from the master unit, as the master node.

> RPL rank 2 calculated from the first slave unit 10a = 160
> RPL rank 2 calculated from the third slave unit 30c = 160

In this way, the second slave unit 20x operating according to the second protocol is a wireless device with a higher probability of selecting the third slave unit 30x as the master node than the first slave unit 10x (the third slave unit 30x > the first slave unit 10x).

● Selecting a master node of the third slave unit 30x (the second slave unit 20x > the third slave unit 30x > the first slave unit 10x)

In Fig. 4, when the third slave unit 30e is capable of communicating with the second slave unit 20b and the third slave unit 30c besides the first slave unit 10a, the third slave unit 30e selects the second slave unit 20b as the master node.

> RPL rank 2 = 160 calculated from the first slave unit 10a
> RPL rank 2 = 128 calculated from the second slave unit 20b
> RPL rank 2 = 160 (96 + 32 $\times$ 2) calculated from the third slave unit 30c

Similarly, in Fig. 4, when the third slave unit 30h is capable of communicating with the first slave unit 10a and the third slave unit 30c besides the second slave unit 20b, the third slave unit 30h selects the second slave unit 20b as the master node.

In this way, the third slave unit 30x operating according to the second protocol is a wireless device with a higher probability of selecting the second slave unit 20x as the master node than the first slave unit 10x and the third slave unit 30x (the second slave unit 20x > the third slave unit 30x, the second slave unit 20x > the first slave unit 10x).

In Fig. 4, when the third slave unit 30e is capable of communicating with the third slave unit 30c besides the first slave unit 10a, the third slave unit 30e selects the third slave unit 30c with which the first slave unit 10a does not exist in the route from the master unit, as the master node.

> RPL rank 2 calculated from the first slave unit 10a = 160
> RPL rank 2 calculated from the third slave unit 30c = 160 (96 + 32 $\times$ 2)

In this way, the third slave unit 30x operating according to the second protocol is a wireless device with a higher probability of selecting the third slave unit 30x as the master node than the first slave unit 10x (the third slave unit 30x > the first slave unit 10x).

● Probability of being selected as a master node (the second slave unit 20x > the third slave unit 30x > the first slave unit 10x)

In Fig. 4, when the second slave unit 20d is capable of communicating with the second slave unit 20b besides the first slave unit 10a, the second slave unit 20d selects the second slave unit 20b as the master node.

> RPL rank 2 calculated from the first slave unit 10a = 160
> RPL rank 2 calculated from the second slave unit 20b =96

Similarly, in Fig. 4, when the third slave unit 30e is capable of communicating with the second slave unit 20b and the third slave unit 30c besides the first slave unit 10a, the third slave unit 30e selects the second slave unit 20b as the master node.

> RPL rank 2 calculated from the first slave unit 10a =160
> RPL rank 2 calculated from the second slave unit 20b =128
> RPL rank 2 calculated from the third slave unit 30c =160

In this way, the second slave unit 20x operating according to the second protocol is a wireless device with a higher probability of being selected as a master node than the first slave unit 10a and the third slave unit 30x (the second slave unit 20x > the third slave unit 30x, the second slave unit 20x > the first slave unit 10x).

In Fig. 4, when the second slave unit 20d is capable of communicating with the third slave unit 30c besides the first slave unit 10a, the second slave unit 20d selects the third slave unit 30c with which the first slave unit 10a does not exist in the route from the master unit, as the master node.

RPL rank 2 calculated from the first slave unit 10a = 160
RPL rank 2 calculated from the third slave unit 30c = 160

Similarly, in Fig. 4, when the third slave unit 30e is capable of communicating with the third slave unit 30c in addition to the first slave unit 10a, the third slave unit 30e selects the third slave unit 30c with which the first slave unit 10a does not exist in the route from the master unit, as the master node.

RPL rank 2 calculated from the first slave unit 10a = 160
RPL rank 2 calculated from the third slave unit 30c = 160

In this way, the third slave unit 30x operating according to the second protocol is a wireless device that is more likely to be selected as the master node than the first slave unit 10x (the third slave unit 30x > the first slave unit 10x).

Summary of First Embodiment

As described above, in First Embodiment, description has been made on the communication system 502 including the second collection device 20, the first slave units 10x, the second slave units 20x and the third slave units 30x.

Each of the second collection device 20, the second slave units 20x and the third slave units 30x transmits DIO-1, which includes an RPL rank 1 used in the first multi-hop communication of a first slave unit 10x, and DIO-2, which includes RPL rank 2 used in the second multi-hop communication of the second slave unit and third slave unit.

Therefore, construction of the second multi-hop communication and migration of the multi-hop network are made possible while maintaining the first multi-hop communication.

Additionally, the method of calculating the RPL rank 2 varies according to the second PHY/MAC (high-transmission rate) used by the second slave units 20x and the first PHY/MAC (low-transmission rate) used by the first slave units 10x and the third slave units 30x.

As a result, the radio used by the second slave unit with the second PHY/MAC (high-transmission rate) is more likely to be selected in the route to the second collection device, enabling improvement in the system throughput.

● Description on variations of First Embodiment

● Requesting only DIO-2

In this Embodiment, the second slave unit and the third slave unit entering the wireless mesh network transmit a DIS-1, and wait for responses of DIO-2 and DIO-1.

The second slave unit and third slave unit may transmit the DIS-2 to notify that their own nodes support the second multi-hop communication, thereby requiring only the DIO-2 from the second collection device, the second slave unit and the third slave unit supporting the second multi-hop communication. Furthermore, when a response to the DIS-2 is not obtained within a certain period, the second slave unit or the third slave unit may transmit the DIO-1 to wait for the DIO-1 from the first slave unit.

When the second slave unit and the third slave unit can only receive the DIO-2, the protocol conversion unit 370 is capable of calculating the hop count from the information described in the DIO-2, and calculate the RPL rank 1.

● Discarding DIO-1

In this Embodiment, the second slave unit and third slave unit process the DIO-1 transmitted by other second slave units and third slave units in the first multi-hop communication unit.

By including an identifier indicating that the transmission source is a second slave unit or a third slave unit in the DIO-1 of the second slave unit and the third slave unit being the transmission sources, the second slave unit and the third slave unit that have received the DIO-1 may discard the DIO-1 without processing it.

Alternatively, when the second slave unit and the third slave unit have received DIO-2 from another second slave unit or third slave unit, they may record the transmission-source node and choose not to process the DIO-1 transmitted from nodes that have already received the DIO-2.

Even when the second slave unit and the third slave unit can only receive the DIO-2, the protocol conversion unit 370 can calculate the hop count from the information described in the DIO-2 and calculate the RPL rank 1.

● Integration of DIO-1 and DIO-2

In this Embodiment, it has been described that DIO-2 is transmitted in the second multi-hop communication, and DIO-1 is transmitted in the first multi-hop communication.

When the first slave unit can disregard undefined RPL options, the second slave unit and the third slave unit may add route information, which is not present in the DIO-1 but only described in the DIO-2, as an RPL option in the DIO-1 and send the DIO-1 to construct a wireless mesh network for the second multi-hop communication and the first multi-hop communication. Alternatively, the second slave unit and the third slave unit may describe the route information, which is not present in the DIO-1 but only described in the DIO-2, in the reserved area of the DIO-1 that is disregarded as for the first slave unit, and transmit the DIO-1 to construct a wireless mesh network for the second multi-hop communication and first multi-hop communication.

● Format of the downward message

In the present embodiment, the wireless system (second PHY/MAC or first PHY/MAC) used in transmitting downward messages to slave units by the second collection device is specified in a bitmap format; however, a TLV (Type-Length-Value) format may be used.

● Continued use of the first collection device 10

In the present embodiment, the second collection device 20 was used as the DAGRoot of RPL; however, the first collection device 10 may also be used as the DAGRoot of RPL.

Even when the first collection device 10 is used, the second slave unit and the third slave unit are capable of calculating the RPL rank 2 from the contents described in the DIO-1 through the operation of the protocol conversion unit 370. Therefore, the DIO-2 and the DIO-1 can be transmitted downstream from the second slave unit and the third slave unit (when traffic to the collection device is considered upstream).

In this case, in the first collection device 10, the wireless system with the master node and the node type information notified by a DAO-2 from the second slave unit and the third slave unit are disregarded, and only the destination ID and the master node of that node are registered in the downward routing table 901. In this case, since the first collection device 10 is incapable of specifying the wireless system during downward traffic transmission, all nodes transfer downward traffic using the first PHY/MAC.

Therefore, it is possible to replace the first slave unit with the second slave unit or the third slave unit before replacing the first collection device 10 with the second collection device 20.

● Types of weighting

In the present embodiment, the transmission rate of the wireless link of the second slave unit is compared with the transmission rate of the wireless link of the first slave unit and the third slave unit, and the transmission rate of the wireless link of the first slave unit and the third slave unit is considered as a low-transmission rate.

In calculation of RPL rank 2, the RPL rank 2 has been calculated by multiplying the MinimumHopRankIncrease-2 by a coefficient (weighting of low-transmission rate); however, the RPL rank 2 may also be calculated in a manner of adding a cost for using the low-transmission rate.

● Weighting of RPL rank value

In the present embodiment, the RPL rank value was weighted (4 times weighting) based on the difference in transmission rates of the wireless links; however, the RPL rank value may also be weighted by packet loss rates, delays, throughputs, their average and variance, and so on.

● Types of RPL metrics

In the present embodiment, an LQL (Link Quality Level) for ranking according to the reception power level has been used as the RPL metric. Other metrics such as an ETX (Expected Transmission Count), a packet loss rate, delay, throughput, and remaining battery of the node may also be used.

● Type of Line

In the present embodiment, the case of wireless communication has been described; however, wired communication may be partially included.

Second Embodiment

In First Embodiment, the sequence for constructing a wireless mesh network with the second collection device 20, the first slave units10x, the second slave units 20x and the third slave units 30x has been described.

Description on different points from First Embodiment will be made in Second Embodiment.

In Second Embodiment, description will be made on selection of the master node using the RPL rank 2, which serves as an indicator for route selection in second multi-hop communication for the second slave units 20x and the third slave units 30x.

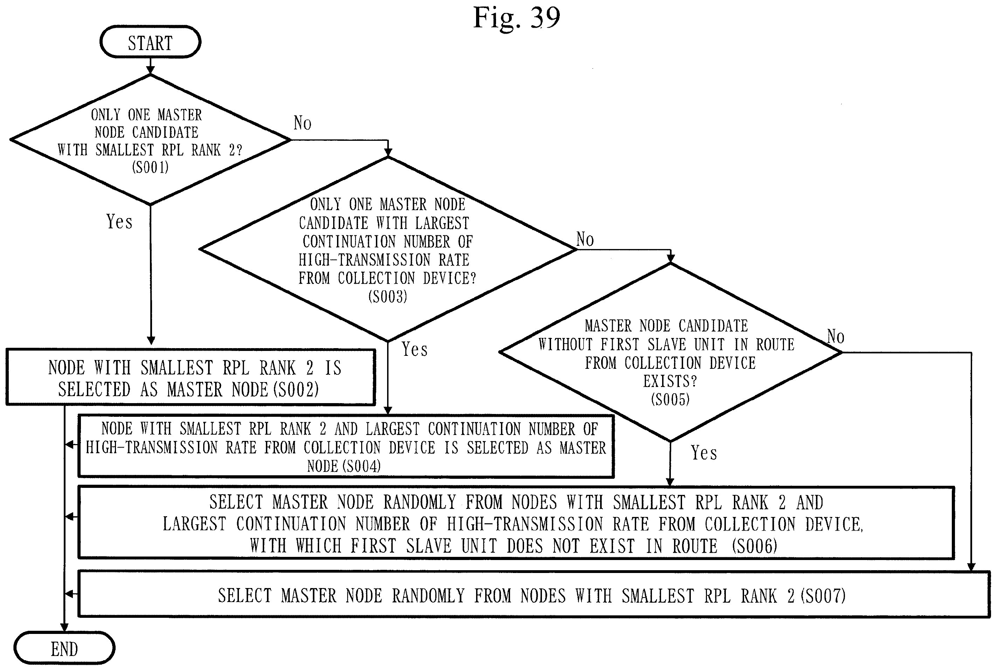

Fig. 39 is a flowchart of selecting a master node in the second slave unit and the third slave unit.

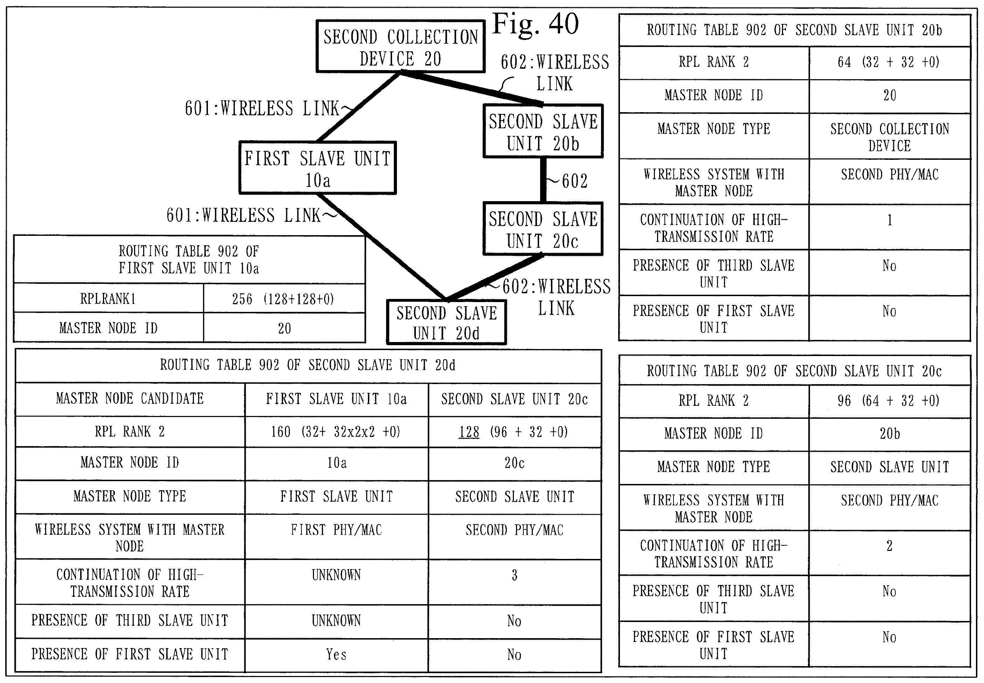

Fig. 40 illustrates a situation in which the second slave unit 20d enters the wireless mesh network configured by the second collection device 20, the first slave unit 10a, the second slave unit 20b and the second slave unit 20c.

The second slave unit 20d receives DIO-1 from the first slave unit 10a, and DIO-2 and DIO-1 from the second slave unit 20c through the process described in First Embodiment. The second slave unit 20d calculates an RPL rank 2 in a case of selecting the first slave unit 10a as the master node, and an RPL rank 2 in a case of selecting the second slave unit 20c as the master node.

The weighting is set to the weighting of low-transmission rate (=2) by using the wireless link 601. The RPL rank 2 in the case of selecting the first slave unit 10a as the master node is:

160 (rank of the second collection device (=32) + MinimumHopRankIncrease-2 (=32) × hop count (=2) × weighting of low-transmission rate (=2) + metric (=0)).

On the other hand, the RPL rank 2 in the case of selecting the second slave unit 20c as the master node is 128 (RPL rank 2 of the second slave unit 20c (=96) + MinimumHopRankIncrease-2 (=32) + metric (=0)).

Under these conditions, in the flowchart for selecting the master node in the second slave unit and the third slave unit in Fig. 39, Step S001 becomes Yes, and in Step S002, the second slave unit 20d selects the second slave unit 20c that makes RPL rank 2 be the smallest, as the master node.

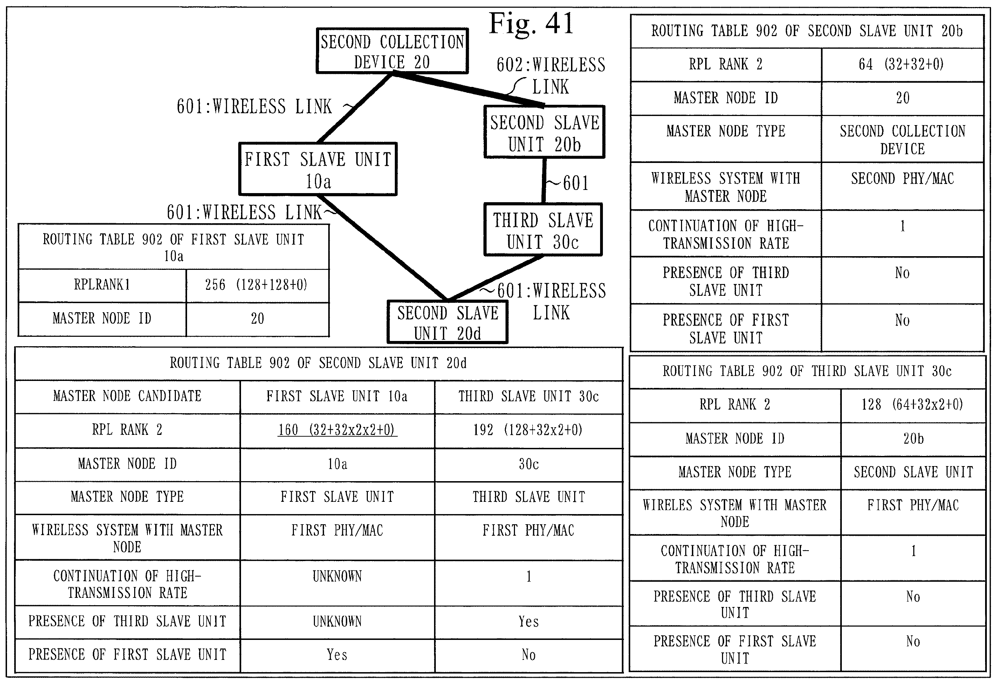

Fig. 41 illustrates a situation in which the second slave unit 20d enters the wireless mesh network configured by the second collection device 20, the first slave unit 10a, the second slave unit 20b and the third slave unit 30c.

The second slave unit 20d receives DIO-1 from the first slave unit 10a, and receives DIO-2 and DIO-1 from the third slave unit 30c through the process described in First Embodiment. The second slave unit 20d calculates the RPL rank 2 in the case of selecting the first slave unit 10a as the master node, and the RPL rank 2 in the case of selecting the third slave unit 30c as the master node.

The weighting is set to the weighting of low-transmission rate (=2) for using the wireless link 601. The RPL rank 2 in the case of selecting the first slave unit 10a as the master node is:

160 (rank of the second collection device (=32) + MinimumHopRankIncrease-2 (=32) × hop count (=2) × weighting of low-transmission rate (=2) + metric (=0)).

On the other hand, the RPL rank 2 in the case of selecting the third slave unit 30c as the master node is:

192 (RPL rank 2 of the third slave unit 30c (=128) + MinimumHopRankIncrease-2 (=32) × weighting of low-transmission rate (=2) + metric (=0)).

Under these conditions, in the flowchart for selecting the master node in the second slave unit and the third slave unit in Fig. 39, Step S001 becomes Yes, and in Step S002, the second slave unit 20d selects the first slave unit 10a that makes RPL rank 2 be the smallest, as the master node.

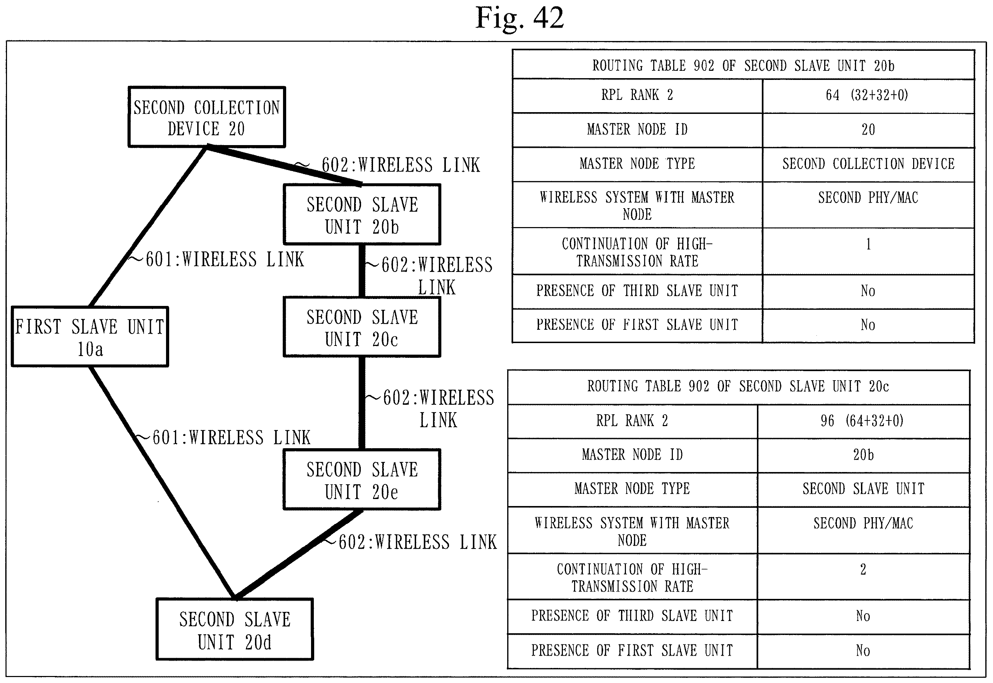

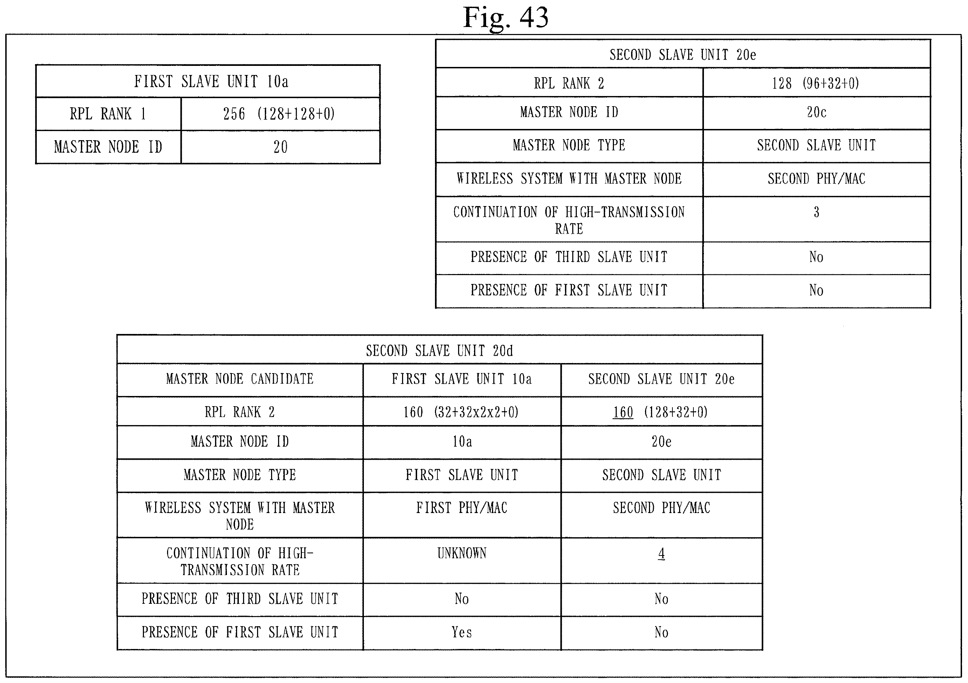

Fig. 42 and Fig. 43 illustrate a situation in which the second slave unit 20d enters the wireless mesh network configured by the second collection device 20, the first slave unit 10a and the second slave units 20b, 20c and 20e.

The second slave unit 20d receives DIO-1 from the first slave unit 10a, and receives DIO-2 and DIO-1 from the second slave unit 20e through the process described in First Embodiment. The second slave unit 20d calculates the RPL rank 2 in the case of selecting the first slave unit 10a as the master node, and the RPL rank 2 in the case of selecting the second slave unit 20e as the master node.

The weighting is set to the weighting of low-transmission rate (=2) for using the wireless link 601. The RPL rank 2 in the case of selecting the first slave unit 10a as the master node is:

160 (rank of the second collection device (=32) + MinimumHopRankIncrease-2 (=32) × hop count (=2) × weighting of low-transmission rate (=2) + metric (=0)).

On the other hand, the RPL rank2 in the case of selecting the second slave unit 20e as the master node is:

160 (RPL rank 2 of the second slave unit 20e (=128) + MinimumHopRankIncrease-2 (=32) + metric (=0)).

Under these conditions, in the flowchart for selecting the master node in the second slave unit and the third slave unit illustrated in Fig. 39, Step S001 becomes No, Step S003 becomes Yes, and in Step S004, the second slave unit 20d selects the second slave unit 20e that makes continuation number of high-transmission rate be the largest, as the master node.

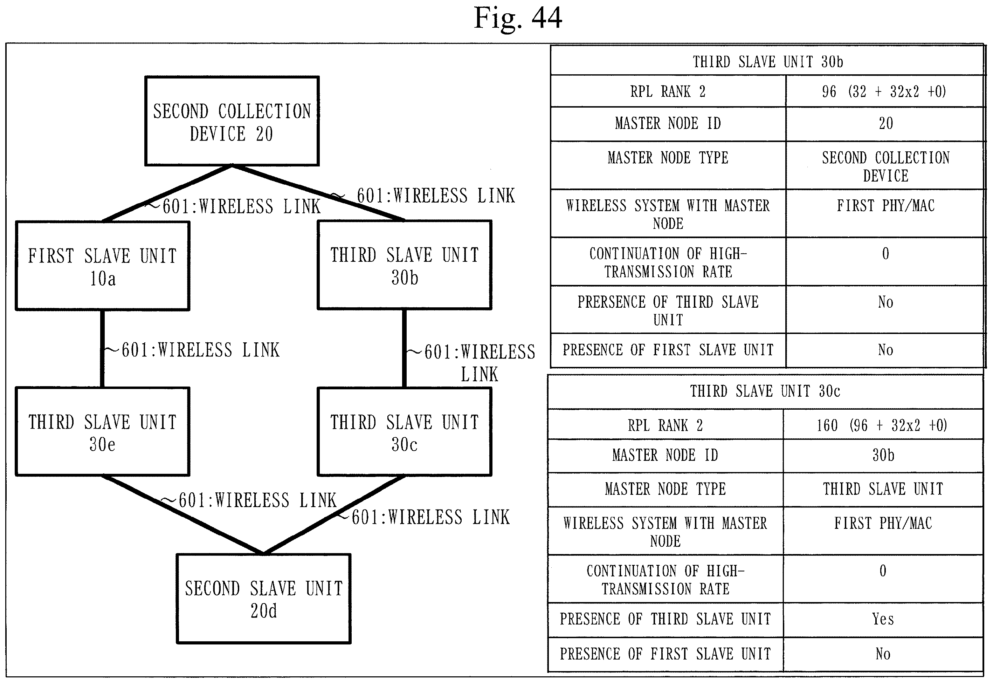

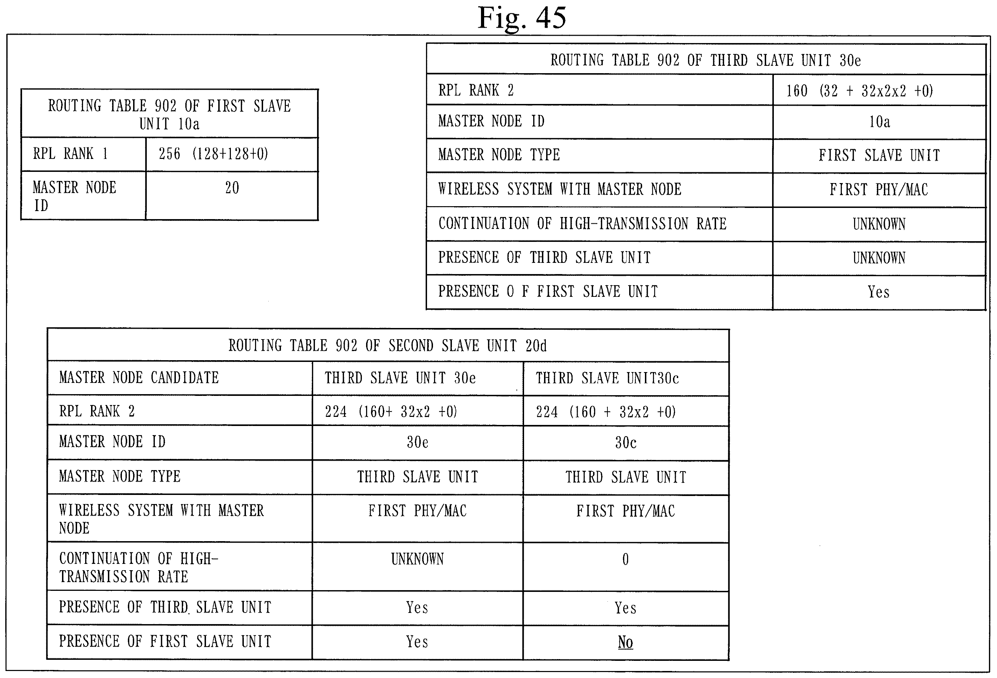

Fig. 44 and Fig. 45 illustrate the situation in which the second slave unit 20d enters the wireless mesh network configured by the second collection device 20, the first slave unit 10a and the third slave units 30b, 30c and 30e.

The second slave unit 20d receives DIO-2 and DIO-1 from the third slave units 30e and 30c through the process described in First Embodiment. The second slave unit 20d calculates the RPL rank 2 in the case of selecting the third slave unit 30e as the master node, and the RPL rank 2 in the case of selecting the third slave unit 30c as the master node.

The weighting is set to the weighting of low-transmission rate (=2) for using the wireless link 601. The RPL rank 2 when selecting the third slave unit 30e as the master node is 224 (RPL rank 2 of the third slave unit 30e (=160) + MinimumHopRankIncrease-2 (=32) × weighting of low-transmission rate (=2) + metric (=0)).

On the other hand, the RPL rank 2 in the case of selecting the third slave unit 30c as the master node is 224 (RPL rank 2 of the third slave unit 30c (=160) + MinimumHopRankIncrease-2 (=32) × weighting of low-transmission rate (=2) + metric (=0)).

Under these conditions, in the flowchart for selecting the master node in the second slave unit and the third slave unit illustrated in Fig. 39, Step S001 becomes No, Step S003 becomes No, Step S005 becomes Yes, and in Step S006, the second slave unit 20d selects the third slave unit 30c with which a first slave unit does not exist in the route, as the master node.

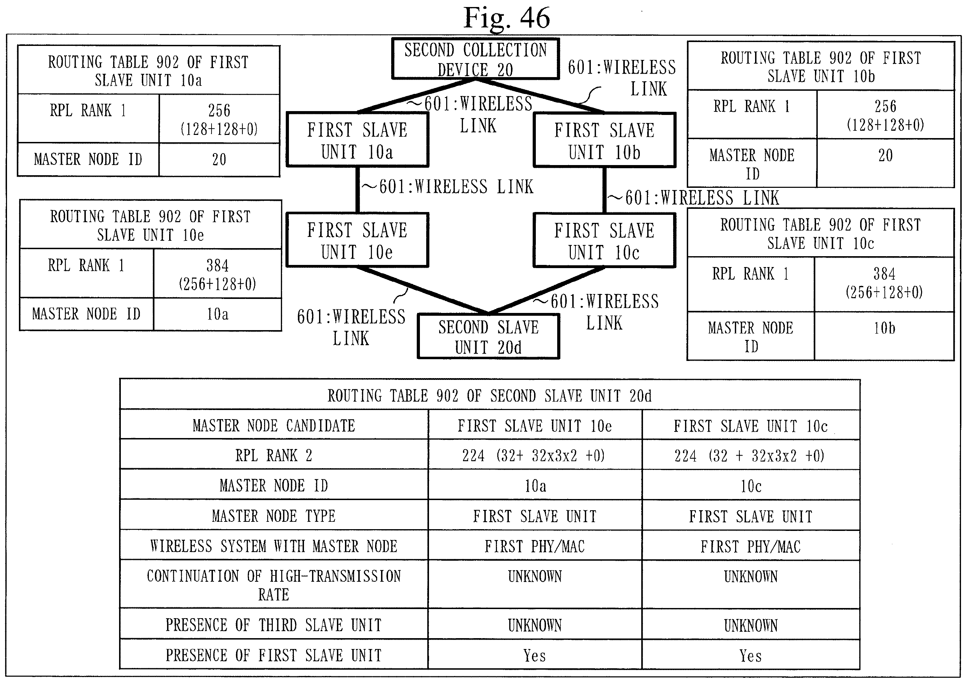

Fig. 46 illustrates the situation in which the second slave unit 20d enters the wireless mesh network configured by the second collection device 20 and the first slave units 10a, 10b, 10c and 10e.

The second slave unit 20d receives DIO-1 from the first slave units 10e and 10c through the process described in First Embodiment, and calculates the RPL rank 2 in the case of selecting the first slave unit 10e as the master node, and the RPL rank 2 in the case of selecting the first slave unit 10c as the master node.

The weighting is set to the weighting of low-transmission rate (=2) for using the wireless link 601. When the first slave unit 10e is selected as the master node, the RPL rank 2 is 224 (the RPL rank 2 of the second collection device 20 (=32) + MinimumHopRankIncrease-2 (=32) × weighting of low-transmission rate (=2) × hop count (=3) + metric (=0)).

Similarly, when the first slave unit 10c is selected as the master node, the RPL rank 2 becomes 224 (the RPL rank 2 of the second collection device 20 (=32) + MinimumHopRankIncrease-2 (=32) × weighting of low-transmission rate (=2) × hop count (=3) + metric (=0)).

Under these conditions, in the flowchart for selecting the master node in the second slave unit and third slave unit in Fig. 39, Step S001 becomes No, Step S003 becomes No, Step S005 becomes No, and in Step S007, the second slave unit 20d randomly selects either the first slave unit 10e or the first slave unit 10c as the master node.

As described above, in Second Embodiment, when selecting a master node based on the RPL rank 2, if there are multiple master node candidates with the same RPL rank 2 value, the continuation number of high-transmission rates from the second collection device 20 and the presence of the first slave unit in the route are used. By doing so, a route in which the vicinity of the second collection device 20 is composed of the wireless link 602 in a high-transmission rate is preferentially selected, and by avoiding a route through the first slave unit, which becomes a traffic bottleneck, it is possible to improve system throughput.

In Second Embodiment, an example is indicated where, if the RPL rank values of the routes from the node to the second collection device are the same, a route where the first slave unit does not exist is selected.

If there are a route with the same RPL rank value where the first slave unit exists and a route with the same RPL rank value where the third slave unit exists, either may be randomly selected.

Third Embodiment

In First Embodiment, description has been made on the sequence for node replacement from the first slave units 10x to the second slave units 20x and the third slave units 30x by transmitting DIO-2 and DIO-1.

In Third Embodiment, description will be made on the differences from First Embodiment 1.

In Third Embodiment, a method to stop transmission of DIO-1 in a network where node replacement is completed and the first slave unit does not exist.

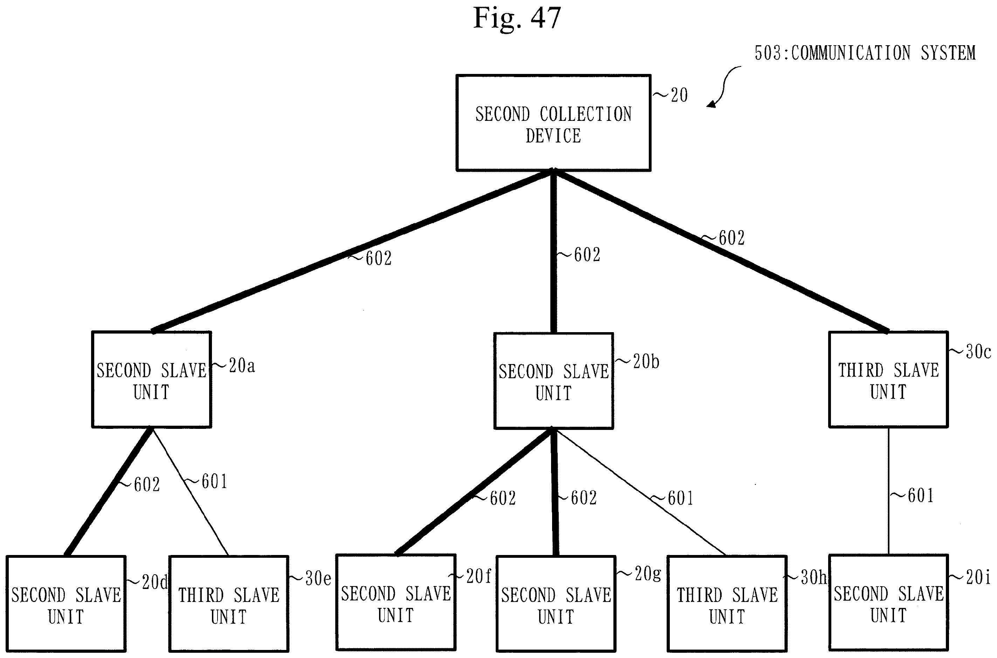

Fig. 47 illustrates the state of the communication system 503 where the first slave units 10x have been replaced with the second slave units 20x and the third slave units 30x in the communication system 502.

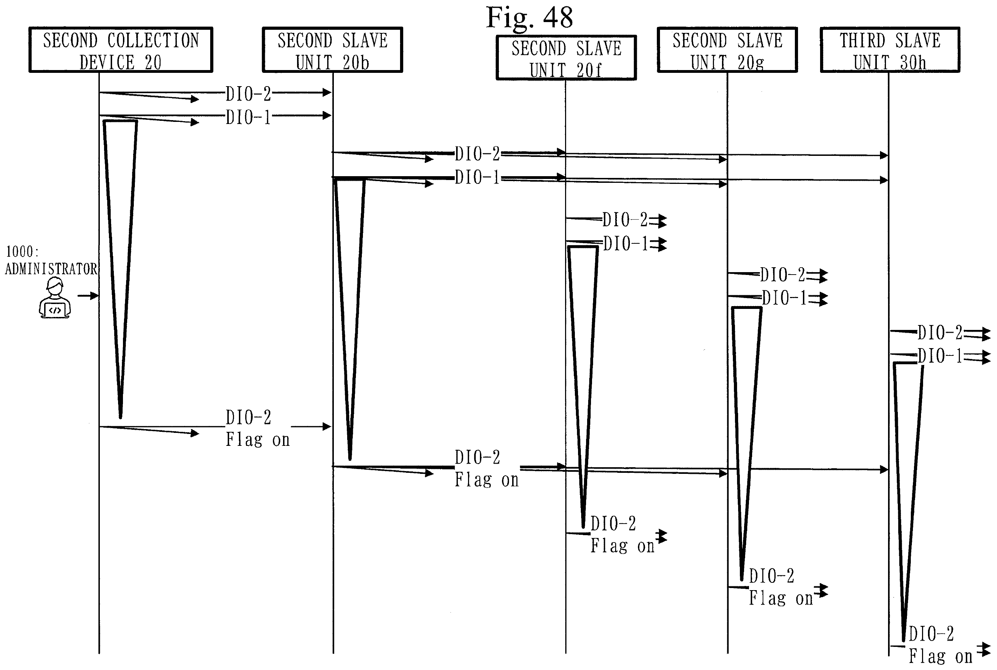

Fig. 48 illustrates the sequence for transmitting DIO-2 and DIO-1 in the second collection device 20, the second slave units 20b, 20f and 20g, and the third slave unit 30h in Fig. 47. The second collection device 20, the second slave units 20b, 20f and 20g and the third slave unit 30h transmit DIO-2 and DIO-1 each time a Trickle timer specified by the RPL expires. An administrator 1000 notifies the second collection device 20 via the input interface 930 that the first slave units 10x do not exist in the communication system 503.

When the second multi-hop communication unit 302 of the second collection device 20 receives the notification that the first slave units 10x do not exist from the input interface 930, the second multi-hop communication unit 302 sets and transmits a flag indicating that the first slave units 10x do not exist in DIO-2 after expiration of the next Trickle timer and stops sending DIO-1.

When the second slave units 20b, 20f and 20g and the third slave unit 30h receive the DIO-2 whereto a flag indicating that the first slave units 10x do not exist is set, they set a flag indicating that the first slave units 10x do not exist in DIO-2 after expiration of the next Trickle timer, and stop sending DIO-1.

As described above, in the present embodiment, by notifying the second collection device 20 that the first slave unit does not exist, and by having the second collection device, the second slave unit and the third slave unit retain a flag indicating that the first slave unit does not exist in DIO-2, transmission of DIO-1 is stopped, and efficiency of radio usage is improved.

In Third Embodiment, the administrator 1000 has directly instructed the second collection device 20 that the first slave unit does not exist.

As an alternative instruction method, the second collection device may be connected to an external network like the Internet, and may be instructed to stop the transmission of DIO-1 from an external server or system.

Furthermore, the second collection device may autonomously decide to stop transmission of DIO-1 by confirming the types of nodes participating in the communication system 503, and deciding that the first slave unit does not exist.

Alternatively, the second slave unit and the third slave unit may decide that they have not received DIO-1 from the first slave unit for a fixed period and autonomously decide to stop the transmission of DIO-1.

● Summary and Supplementary Explanation

In First, Second and Third Embodiments, description has been made on the case of realizing migration from existing wireless devices (the first collection device 10, the first slave units 10x) to new wireless devices (the second collection device 20, the second slave units 20x, the third slave units 30x) in a wireless mesh network using RPL.

The communication system 501 calculates only RPL rank 1 (first rank value) to select the master unit.

The communication system 502 calculates both RPL rank 1 (first rank value) and RPL rank 2 (second rank value) to select the master unit.

The new wireless device that becomes the DAGROOT (the second collection device 20: master unit) support both the existing communication method (first PHY/MAC) and existing first protocol, and the new communication system (second PHY/MAC) and new second protocol.

Some of the new wireless devices (the second slave units 20x) support both the existing communication system (first PHY/MAC) and the existing first protocol, and the new communication system (second PHY/MAC) and the new second protocol.

Some of the new wireless devices (the third slave units 30x) support the existing communication system (first PHY/MAC) and the existing first protocol and the new second protocol.

● Control Message (DIO-1 and DIO-2)

The new wireless devices (the second collection device 20: master unit), the new wireless devices (the second slave units 20x), and the new wireless devices (the third slave units 30x) transmit control messages (DIO-2) for the new wireless devices (the second slave units 20x, the third slave units 30x) and control messages (DIO-1) for the existing wireless devices (the first slave units 10x).

The control messages (DIO-2) for the new wireless devices (the second slave units 20x, the third slave units 30x) are formatted to be discarded by the existing wireless devices (the first slave units 10x).

The control messages (DIO-2) for the new wireless devices (the second slave units 20x, the third slave units 30x) include any or all of the following route information.

(1) RPL rank of the own node
(2) On the route from the master unit to the own node,

(2A) The continuation number of new communication system (second PHY/MAC)
(2B) The presence of existing wireless devices (the first slave units 10x)
(2C) The presence of new wireless devices (the third slave units 30x)
By specifying a flag in the control messages (DIO-2) for the new wireless devices (the second slave units 20x, the third slave units 30x), it is possible to stop the control messages (DIO-1) for the existing wireless devices (the first slave units 10x).

● New Wireless Devices (the second slave units 20x, the third slave units 30x)

The new wireless devices (the second slave units 20x, the third slave units 30x) calculate and retain the RPL rank values (RPL rank 2 and RPL rank 1) in each of the control messages (DIO-2) for the new wireless devices (the second slave units 20x, the third slave units 30x) and the control messages (DIO-1) for the existing wireless devices (the first slave units 10x).

The new wireless devices (the second slave units 20x, the third slave units 30x) use the RPL rank value (RPL rank 2) calculated from the control messages (DIO-2) for the new wireless devices (the second slave units 20x, the third slave units 30x) to select the master node.

When only control messages (DIO-1) for the existing wireless devices (the first slave units 10x) can be received in the new wireless devices (the second slave units 20x, the third slave units 30x), the protocol conversion unit 370 assumes that all hops from the master unit traverse the existing wireless devices (the first slave units 10x) and calculates the RPL rank value (RPL rank 2).

When only the control messages (DIO-2) for the new wireless devices (the second slave units 20x, the third slave units 30x) can be received in the new wireless devices (the second slave units 20x, the third slave units 30x), the protocol conversion unit 370 calculates the hop count from the information described in DIO-2, and calculates the RPL rank value (RPL rank 1) of the existing wireless devices (the first slave units 10x).

When the new wireless devices (the second slave units 20x, the third slave units 30x) use the LQL as the link metric of RPL, the new wireless devices obtain the hop count and a metric value per hop from the information described in the LQL, and calculate the RPL rank value (RPL rank 1) of the existing wireless devices (the first slave units 10x).

● Setting and Calculation of Rank Value

The communication system 502 sets the RPL rank value in advance as follows, enabling calculation of RPL rank 2 (second rank value) from RPL rank 1 (first rank value) when calculating the RPL rank value.

(1) Initial rank value stored in advance in the second collection device 20

$$\text{RPL rank } 1 > \text{RPL rank } 2$$

$$\text{RPL rank } 1 = \text{RPL rank } 2 \times 4$$

(2) Minimum increase value per hop stored in advance in the second collection device 20

$$\text{MinimumHopRankIncrease-1} > \text{MinimumHopRankIncrease-2}$$

$$\text{MinimumHopRankIncrease-1} = \text{MinimumHopRankIncrease-2} \times 4$$

(3) Minimum increase value per hop stored in advance in the second slave unit 20x and the third slave unit 30x

$$\text{MinimumHopRankIncrease-1} > \text{MinimumHopRankIncrease-2}$$

$$\text{MinimumHopRankIncrease-1} = \text{MinimumHopRankIncrease-2} \times 4$$

● Priority of Master Unit Selection

A case of selecting a master node by calculating the RPL rank value (RPL rank 2) from a control message (DIO-2) for the new wireless device (a second slave unit 20x, a third slave unit 30x) is as follows.

(1) When calculating RPL rank 2 (second rank value), the minimum increase value incremented per hop of RPL is multiplied by a weighting so that there is a difference in the increase value added to the RPL rank value per hop in RPL between a case of using the new communication system (second PHY/MAC) and a case of using the existing communication system (first PHY/MAC), and the RPL rank 2 (second rank value) is calculated.
(2) When selecting a master node, if there are a plurality of master node candidates with the same RPL rank, the master node is selected in the following order of priority.
(2A) The one with a larger number of continuation of new communication system (second PHY/MAC)
(2B) The one with which no existing wireless device (the first slave unit 10x) exists in the route from the master unit to the own node. Alternatively, the one with which no new wireless device (the third slave unit 30x) exists in the route from the master unit to the own node.

● Notification Message (DAO-1 and DAO-2)

The existing wireless devices (the first slave units 10x) notify the notification message (DAO-1) to be transmitted to the master unit of the ID of the master node.
The new wireless devices (the second slave units 20x, the third slave units 30x) record the ID of the master node and the wireless system (PHY/MAC) used for communication with the master node in the routing table 902.
The new wireless devices (the second slave units 20x, the third slave units 30x) notify the notification message (DAO-2) to be transmitted to the master unit of the ID of the master node, the type of their own nodes, and the wireless system (PHY/MAC) used for communication with the master node.
The master unit retains the ID of the node selected as the master node by the slave node and the wireless system (PHY/MAC) used for transmission to that node in the downward routing table 901.

● Downward Traffic Operation of Master Unit

(1) A new wireless device (master unit) retains the wireless system (PHY/MAC) supported by each wireless device (slave unit) in the downward routing table 901.
(2) When the new wireless device (master unit) transmits downward traffic, the new wireless device designates the wireless device (slave unit) to traverse and the wireless system (PHY/MAC) to use for the hop.
The new wireless device (master unit) uses a bitmap as a method to designate the wireless system. Alternatively, the new wireless device (master unit) uses TLV as a method to designate the wireless system.
(3) When a wireless device (slave unit) whereof the wireless system (PHY/MAC) is unknown exists, the new wireless device (master unit) designates the existing wireless system (first PHY/MAC).

● Downward Traffic Operation of Existing Wireless Device (the first slave unit 10x)

(1) When the existing wireless device (the first slave unit 10x) transfers a downward message in downward traffic, the existing wireless device uses the ID of the wireless device being a transfer destination listed in the downward message and uses the existing wireless system (first PHY/MAC).

● Downward Traffic Operation of New Wireless Device (the second slave unit 20x)

(1) When the new wireless device (the second slave unit 20x) forwards a downward message in downward traffic, the new wireless device uses the ID of the wireless device being a transfer destination listed in the downward message and the wireless system (PHY/MAC) used for transfer.

(2) When the wireless system (PHY/MAC) is not specified, the existing wireless system (first PHY/MAC) is used.

● Downward Traffic Operation of New Wireless Device (the third slave unit 30x)

(1) When the new wireless device (the third slave unit 30x) transfers a downward message in downward traffic, the new wireless device uses the ID of the wireless device being a transfer destination listed in the downward message, and uses the existing wireless system (first PHY/MAC).

The following describes the features of Embodiments described above.

The communication system 501 connects the master unit (the first collection device 10) and the plurality of slave units (the first slave units 10x) to a wireless mesh network constructed based on the first rank value (RPL rank 1) calculated by the first protocol.

The communication system 502 includes the master unit (the second collection device 20) and the plurality of slave units (the first slave units 10x, the second slave units 20x, the third slave units 30x).

The slave units (the first slave units 10x, the second slave units 20x, the third slave units 30x) act as nodes and are connected to the wireless mesh network.

The slave units (the second slave units 20x, the third slave units 30x) replace the first slave units 10x of the communication system 501.

The slave unit (the second slave unit 20x, the third slave unit 30x) includes a communication device (the second communication device 200), the protocol decision unit 330, the upward route construction unit 360 and the multi-hop communication unit 340.

The communication device (the second communication device 200) receives one or more control messages (DIO-1, DIO-2) containing route information related to route construction from one or more neighboring nodes (master unit or slave units). The route information includes the rank information of the nodes.

The protocol decision unit 330 decides processing of the first protocol and the second protocol for the rank information.

The protocol decision unit 330 decides the type of control message (DIO-1 or DIO-2) for each control message among one or more control messages and decides whether to process the control message with the first protocol or the second protocol.

The upward route construction unit 360 calculates the first rank value (RPL rank 1) using the rank information in accordance with the first protocol, and calculates the second rank value (RPL rank 2) using the rank information in accordance with the second protocol on the basis of the decision result by the protocol decision unit 330.

The first rank value (RPL rank 1) and the second rank value (RPL rank 2) are different values.

The upward route construction unit 360 selects one node as the master node from among one or more neighboring nodes based on one or more second rank values (RPL rank 2).

The upward route construction unit 360 records the first rank value (RPL rank 1) and the second rank value (RPL rank 2) calculated using the ID of the master node and the rank information of the master node in the routing table 902.

The multi-hop communication unit 340 creates a notification message to notify of the ID of the master node recorded in the routing table 902 from the slave node, and transmits the notification message to the master unit.

The communication device (second communication device 200) receives from one node, as a control message, a first control message (DIO-1) containing the first rank information of the transmission-source node in the route information, and a second control message (DIO-2) containing the second rank information of the transmission-source node in the route information.

The slave unit has the first upward route construction unit 311 and the second upward route construction unit 321.

The first upward route construction unit 311 calculates the first rank value based on the first rank information of the transmission-source node.

The second upward route construction unit 321 calculates the second rank value based on the second rank information of the transmission-source node.

The rank information includes at least one of the first rank information and the second rank information.

The rank information includes the rank value and the minimum increase value of the rank value.

The first rank information includes the first rank value (RPL rank 1) and the first minimum increase value (MinimumHopRankIncrease-1).

The second rank information includes the second rank value (RPL rank 2) and the second minimum increase value (MinimumHopRankIncrease-2).

When the communication device (the second communication device 200) receives only the first control message containing the first rank information in the route information from one slave unit as a control message,

(1) the first upward route construction unit 311 calculates the first rank value (RPL rank 1) based on the first rank information, and
(2) the protocol conversion unit 370 calculates the second rank value (RPL rank 2) by applying a weighting to the second minimum increase value for all hops from the master unit to the slave unit.

When the communication device (the second communication device 200) receives only the second control message containing the second rank information in the route information from one slave unit as a control message,

(1) the protocol conversion unit 370 calculates the hop count from the route information, and calculates the first rank value based on the hop count, and
(2) the second upward route construction unit 321 calculates the second rank value (RPL rank 2) based on the second rank information.

When the second upward route construction unit 321 calculates the second rank value (RPL rank 2), the second rank value is calculated by being multiplied by a weighting to ensure a difference in the second rank value between the case of using the second communication system and the case of using the first communication system.

The route information includes the continuation number of routes of the second communication system (second PHY/MAC) in the route from the master unit.

The upward route construction unit 360 selects the master node based on the continuation number when there are a plurality of nodes with the same rank value at the time of selecting the master node.

The route information includes presence of nodes with which the second communication system (second PHY/MAC) is impossible in the route from the master unit (only the first communication system (first PHY/MAC) is possible with the first slave unit 10x and the third slave unit 30x).

The upward route construction unit 360 selects the master node based on whether a node (the first slave unit 10x or the third slave unit 30x) with which the second communication system (second PHY/MAC) is impossible when there are a plurality of nodes with the same rank value at the time of selecting the master node.

The route information includes the type of master node (master unit, the first slave unit 10x, the second slave unit 20x, the third slave unit 30x).

The upward route construction unit 360 selects the communication system with the master node based on the type of master node (master unit, the first slave unit 10x, the second slave unit 20x, the third slave unit 30x) and the type of slave node (the first slave unit 10x, the second slave unit 20x, the third slave unit 30x), and records the communication system with the master node in the routing table 902.

Alternatively, the upward route construction unit 360 selects the communication system with the master node based on the communication system of the master node (the first communication system or the second communication system), and the communication system of the slave node (the first communication system or the second communication system), and records the communication system with the master node in the routing table 902.

The upward route construction unit 360 selects the second communication system as the communication system with the master node only when the type of master node is the master unit or the second slave unit 20x, and the type of slave node is the second slave unit 20x.

The upward route construction unit 360 selects the second communication system (second PHY/MAC) as the communication system with the master node when the master node and the slave node support the first communication system (first PHY/MAC) and the second communication system (second PHY/MAC), respectively.

The upward route construction unit 360 selects the first communication system (first PHY/MAC) as the communication system with the master node when each of the master node and the slave node supports the first communication system (first PHY/MAC), and either the master node or the slave node does not support the second communication system (second PHY/MAC).

The communication device of the slave unit (the first communication device 100 or the second communication device 200) receives a downward message that includes the ID of the node present in the route to the slave unit sending the downward message and the communication system with the node.

The first multi-hop communication unit 301 of the first slave unit 10x specifies the ID of the slave node by referring only to the ID of the node included in the downward message, and transfers the downward message to the slave node.

The multi-hop communication units 340 of the second slave unit 20x and the third slave unit 30x identify the IDs of the slave nodes and the communication systems with the slave nodes by referring to the IDs of the nodes and the communication systems with the nodes included in the downward messages, and transfers the downward messages to the slave nodes.

The master unit (the second collection device 20) is connected to a wireless mesh network where the master unit and the plurality of slave units communicate with one another as nodes.

The master unit (the second collection device 20) includes a communication device (the second communication device 200), the downward route construction unit 350, and the multi-hop communication unit 340.

The communication device (the second communication device 200) receives a notification message (DAO-2) that notifies of the ID of the master node and the communication system with the master node from the slave nodes (the second slave units 20x, the third slave units 30x).

The downward route construction unit 350 records in the downward routing table 902 the ID of the master node and the communication system with the master node included in the notification message (DAO-2) in correspondence with the IDs of the slave nodes.

The multi-hop communication unit 340 refers to the downward routing table 902 to identify one or more nodes present in the route to the slave unit transmitting the downward message, and creates a downward message that includes the ID of the node and the communication system with the node.

The downward route construction unit 350 records the first rank information (first rank value and MinimumHopRankIncrease-1) and the second rank information (second rank value and MinimumHopRankIncrease-2) in the rank table 903.

The multi-hop communication unit 340 creates a first control message (DIO-1) that includes the first rank information and a second control message (DIO-2) that includes the second rank information, and transmits the first control message and the second control message to neighboring nodes.

The master unit (the second collection device 20) and the slave units (the second slave units 20x, the third slave units 30x) are connected to a wireless mesh network capable of communicating via the first protocol and the second protocol, and communicate only via the second protocol by stopping communication via the first protocol.

In the communication system 503, the master unit (the second collection device 20) and the slave units (the second slave units 20x, the third slave units 30x) communicate only via the second protocol.

The master unit (the second collection device 20) transmits a downward message that includes the ID of the node and the communication system with the node.

The slave units (the second slave units 20x, the third slave units 30x) receive the downward message, refer to the ID of the node and the communication system with the node included in the downward message to specify the ID of the slave node and the communication system with the slave node, and transfers the downward message to the slave node.

Fourth Embodiment

First Embodiment describes a method to construct the wireless mesh network with the second collection device 20, the first slave units 10x, the second slave units 20x and the third slave units 30x, and to designate the wireless system by the second collection device 20 by referring to the downward routing table 901 at the time of transmitting the downward message from the second collection device 20.

In Fourth Embodiment, description will be made on different points from First Embodiment.

In the present embodiment, a method to determine a downward route and a wireless system by a downward routing table in a different form from the downward routing table 901 at the time of transmitting a downward message by the second collection device 20 is described.

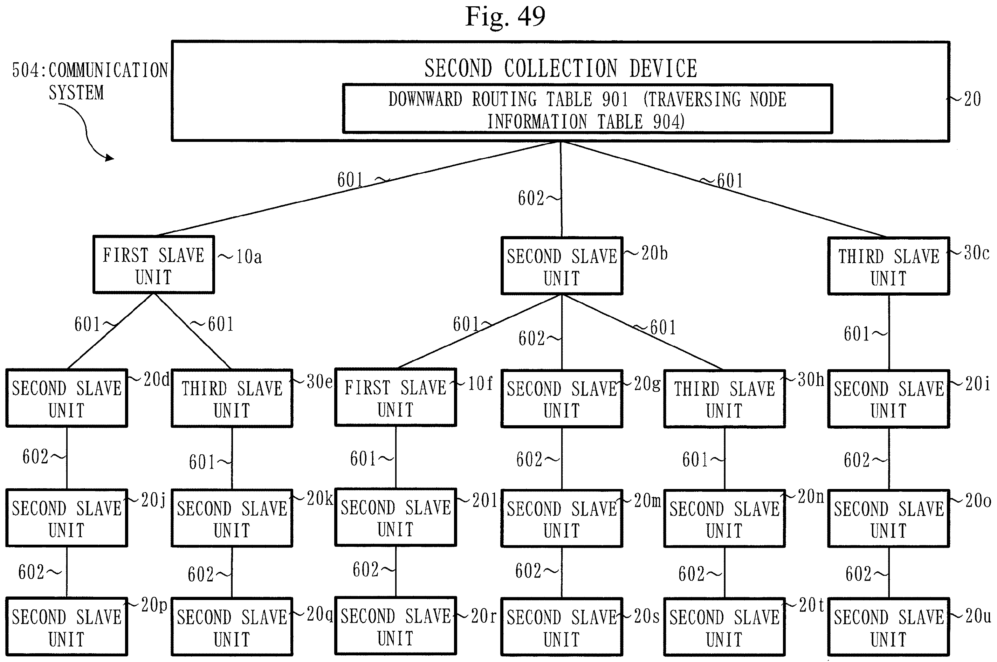

Fig. 49 illustrates a network in which the first slave units 10x, the second slave units 20x and the third slave units 30x are mixed in the communication system 504.

In Fig. 49, it is assumed that the first slave units 10x, the second slave units 20x and the third slave units 30x can use IPv6 (Internet Protocol Version 6) Hop-by-Hop extension headers.

The Hop-by-Hop header is an area defined as an extension part of a header in the IPv6 format.

The Hop-by-Hop extension header is an area capable of storing information that should be referred to, or must be processed by all nodes in the route of an IPv6 packet.

●Second Slave Unit 20b

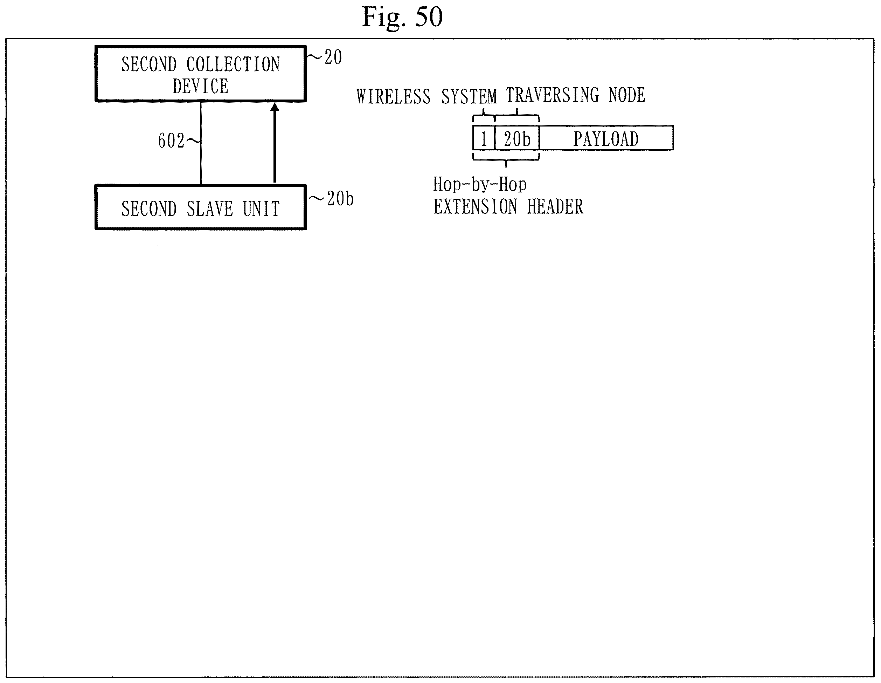

Fig. 50 illustrates a situation in which the node traversed to the second collection device and the wireless system of the link are described in an upward message transmitted by the second slave unit 20b using the IPv6 Hop-by-Hop extension header.

●Operation of Slave Unit (Assigning ID of Slave Unit and Wireless System)

The second slave unit 20b indicates, in the multi-hop communication unit 340, 1 as an identifier indicating that the second PHY/MAC is used for the wireless system of transmission to the master node (the second collection device 20 in Fig. 50), and 20b as an ID of the second slave unit 20b in the Hop-by-Hop extension header and transmits an upward message to the second collection device 20 being the master node, by the multi-hop communication unit 340.

The second slave unit 20b may transmit the upward message of the present embodiment to the master node at any time only if it is after the second slave unit 20b completes the operation to enter the communication system 504.

Specifically, the following cases can be considered:

(1) When a slave unit completes the operation to enter the communication system 504;
(2) At the time of changing the route when the slave unit changes the master node;
(3) At the transmission time of all the upward messages from the slave unit to the master unit;
(4) At the periodic transmission time for periodical transmission from the slave unit to the master unit; and
(5) Combinations of (1) through (4) above.

●Operation of Master Unit (Receiving the ID of the slave unit and the wireless system)

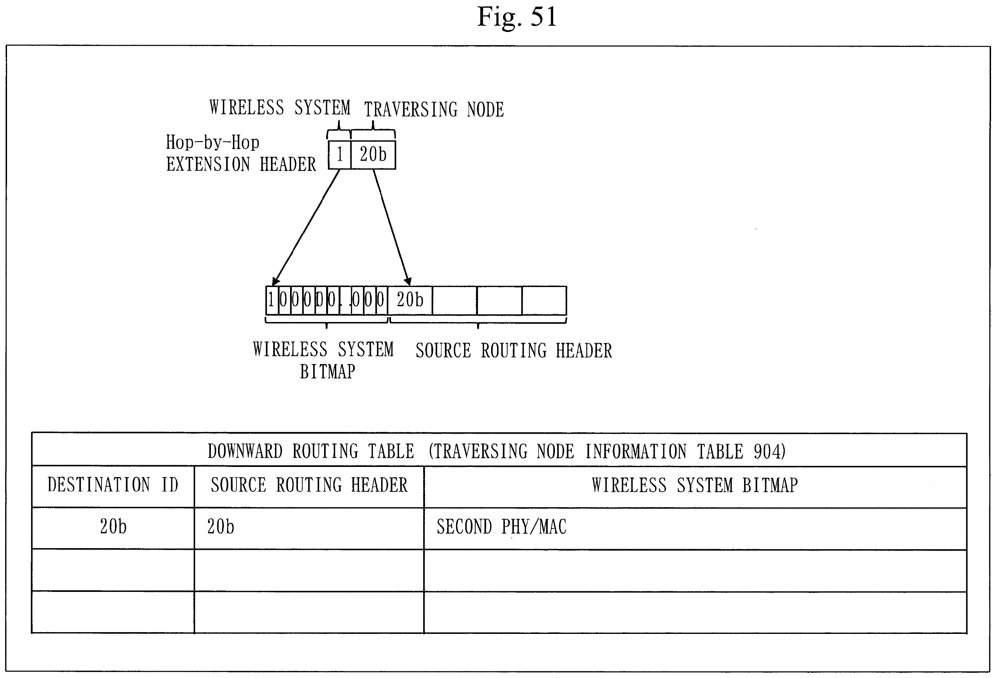

Fig. 51 illustrates a situation in which the second collection device 20 that has received the upward message from the second slave unit 20b registers a wireless system bitmap used for a downward message to the second slave unit 20b and a traversing node in a traversing node information table 904 being a part of the downward routing table.

When the second collection device 20 receives the upward message from the second slave unit 20b by the second downward routing construction unit 320, the second collection device 20 acquires the wireless system and the traversing node from the Hop-by-Hop extension header, and creates a wireless system bitmap and a source routing header addressed to the second slave unit 20b.

The second collection device 20 registers the information of the source routing header and the wireless system bitmap as a source routing header and a wireless system bitmap addressed to the second slave unit 20b in the traversing node information table 904, by the second downward route construction unit 320.

The destination ID, the source routing header and the wireless system bitmap are registered in the traversing node information table 904.

The traversing node information table 904 is also referred to as a source routing table.

Fig. 51 illustrates a case in which only the second slave unit 20b is registered in the traversing node information table 904.

When the second collection device 20 transmits the downward message to the second slave unit 20b, if the second slave unit 20b has been registered in the traversing node information table 904, the second collection device 20 uses the source routing header and the wireless system bitmap of the second slave unit 20b.

●Second Slave unit 20r

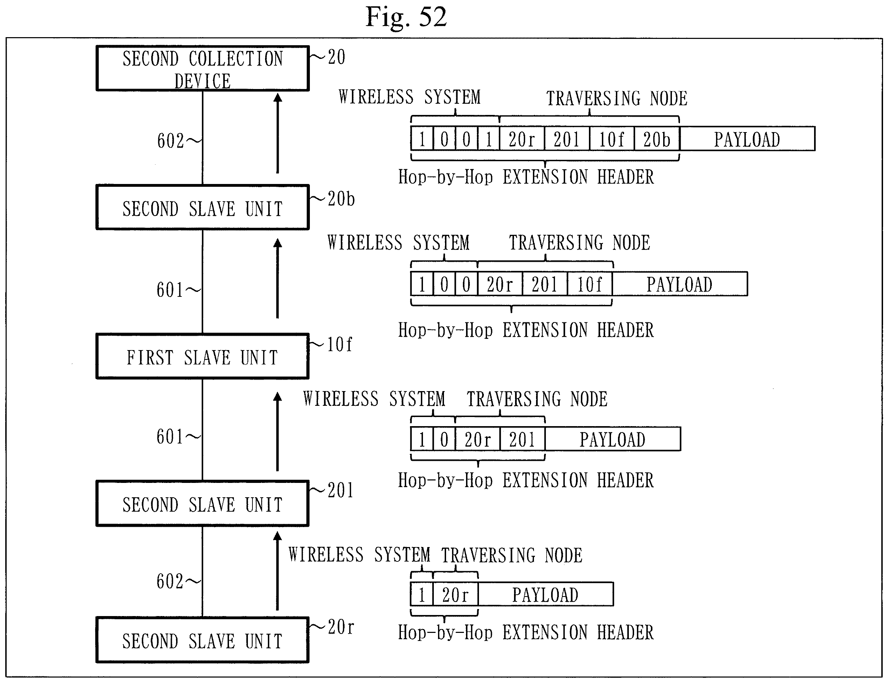

Fig. 52 illustrates a situation in which the node traversed to the second collection device and the wireless system of the link are indicated in the upward message transmitted by the second slave unit 20r using the IPv6 Hop-by-Hop extension header.

In Fig. 52, it is assumed that the second slave unit 20s, the first slave unit 10f and the second slave unit 20l have already completed the operation to enter the communication system 504.

The wireless systems for transmission to the master node of the second slave unit 20s, the first slave unit 10f and the second slave unit 20l are assumed to be the second PHY/MAC, the first PHY/MAC and the first PHY/MAC, respectively.

●Operation of Slave Unit (Assigning the ID of the slave unit and the wireless system)

The second slave unit 20r indicates 1 as the identifier to indicate that the second PHY/MAC is used for the wireless system for transmission to the master node, and 20r as the ID of the second slave unit 20r in the Hop-by-Hop extension header by the multi-hop communication unit 340, and transmits the upward message to the second slave unit 20l being the master node.

The second slave unit 20l that has received the upward message from the second slave unit 20r to the second collection device 20 indicates, in the Hop-by-Hop extension header, 0 as the identifier to indicate that the first PHY/MAC is used for the wireless system for transmission to the master node, and 20l as the ID of the second slave unit 20l, and transmits the upward message to the first slave unit 10f being the master node, by the multi-hop communication unit 340.

The first slave unit 10f that has received the upward message from the second slave unit 20l to the second collection device 20 indicates, in the Hop-by-Hop extension header, 0 as the identifier to indicate that the first PHY/MAC is used for the wireless system for transmission to the master node, and 10f as the ID of the first slave unit 10f, and transmits the upward message to the second slave unit 20b being the master node, by the first multi-hop communication unit 301.

The second slave unit 20b that has received the upward message from the first slave unit 10f to the second collection device 20 indicates, in the Hop-by-Hop extension header, 1 as the identifier to indicate that the second PHY/MAC is used for the wireless system for transmission to the master node, and 20b as the ID of the second slave unit 20b, and transmits the upward message to the second collection device 20 being the master node, by the multi-hop communication unit 340.

The second slave unit 20r may transmit the upward message according to the present embodiment to the master node whenever after completion of the operation for the second slave unit 20r to enter the communication system 504.

The second slave unit 20r may transmit the upward message according to the present embodiment to the maser node before the time when the second slave unit 201, the first slave unit 10f and the second slave unit 20b transmit the upward message according to the present embodiment to the master node.

●Operation of Master Unit (Receiving the ID of the slave unit and the wireless system)

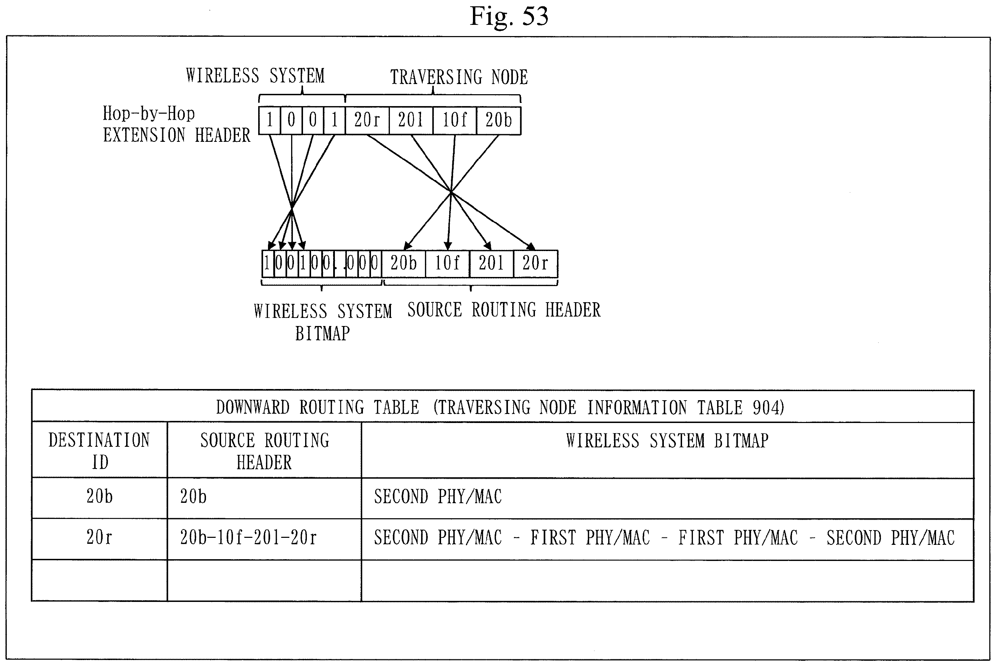

Fig. 53 expresses the situation in which the second collection device 20 that has received the upward message from the second slave unit 20r registers a wireless system bitmap used for a downward message to the second slave unit 20r, and the traversing node in the traversing node information table 904 being a part of the downward routing table.

When the second collection device 20 receives the upward message from the second slave unit 20r, the second collection device 20 acquires the wireless systems and the traversing nodes from the Hop-by-Hop extension header, and by sorting each in reverse order, creates a wireless system bitmap and a source routing header addressed to the second slave unit 20r, by the second downward route construction unit 320.

The second collection device 20 registers the information of the source routing header and the wireless system bitmap in the traversing node information table 904 as the source routing header and the wireless system bitmap addressed to the second slave unit 20r, by the second downward route construction unit 320.

The traversing node information table 904 registers the destination ID, the source routing header and the wireless system bitmap.

The source routing header indicates all traversing nodes from the second collection device 20 to the destination node in the order of traverse.

The wireless system bitmap indicates the wireless systems with the master node of all the traversing nodes from the second collection device 20 to the destination node, in the order of the traversing nodes.

Fig. 53 illustrates a case in which the second slave unit 20b and the second slave unit 20r are registered in the traversing node information table 904 as a result of transmitting the upward message of the present embodiment to the master node by the second slave unit 20b and the second slave unit 20r.

The traversing node information table 904 is capable of registering the second slave unit 20r even in a case in which the second slave unit 201 and the first slave unit 10f have not transmitted the upward message of the present embodiment to the master node.

When the multi-hop communication unit 340 of the second collection device 20 transmits the downward message addressed to the second slave unit 20r, the multi-hop communication unit 340 uses the source routing header and the wireless system bitmap of the second slave unit 20r if the second slave unit 20r has been registered in the traversing node information table 904.

As described above, the slave unit in the communication system 504 of Fourth Embodiment indicates IDs and wireless systems of nodes of slave units in an upward message so as to show the traversing order of the slave units at the transmission time and the transfer time of the upward message addressed to the master unit.

The master unit stores the IDs and the wireless systems of the nodes indicated in the upward message in a memory unit or a storage device, and by using the IDs and the wireless systems stored, creates a downward message for the slave unit that has transmitted the upward message addressed to the master unit.

● Summary of Fourth Embodiment

The communication system 504 of Fourth Embodiment is characterized by recording the wireless systems used in the wireless multi-hop network, and using the wireless systems recorded as they are in the downward route.

The communication system 504 of Fourth Embodiment is characterized by constructing a downward route including the wireless systems using information on the upward route when the information on the upward route including the wireless systems is received.

When the multi-hop communication unit 340 (including the first multi-hop communication unit 301) of the slave unit (slave node) creates and transmits to the master unit an upward message addressed to the master unit, the multi-hop communication unit 340 creates and transmits an upward message indicating the ID of its own node and the communication system with the master node to the master unit.

When the multi-hop communication unit 340 (including the first multi-hop communication unit 301) of the slave unit (slave node) receives and transfers the upward message to the maser unit, the multi-hop communication unit 340 indicates the ID of its own node and the communication system with the master node in the upward message, and transmits the upward message to the master unit.

When the slave units (slave nodes) transmit or transfer the upward message addressed to the master node, the slave units sequentially assign the IDs of the slave units (slave nodes) and the wireless systems with the master node to the upward message.

The upward message to the master unit notifies the master unit of the route (all the traversing nodes the upward message has traversed) used in transfer of the upward message and the communication systems.

The downward route construction unit 350 of the master unit acquires the traversing nodes and the communication systems assigned to the upward message received from the slave node, and records the contents sorted in reverse order in the traversing node information table 904 (source routing table).

When the downward route construction unit 320 of the master unit transmits a downward message to the slave node, the downward route construction unit 320 searches for the subject node ID from the traversing node information table 904 (source routing table), and acquires the route and the wireless systems to be used.

When the second downward route construction unit 320 of the master unit receives the upward message indicating the IDs of traversing nodes and the wireless systems of the traversing nodes that have been traversed by the upward message, the second downward route construction unit 320 records in the traversing node information table 904 the IDs of the traversing nodes and the wireless systems of the traversing nodes indicated in the upward message in a manner associated with the ID of the slave node.

When the multi-hop communication unit 340 of the master unit creates a downward message for the slave node, the multi-hop communication unit 340 refers to the IDs of the traversing nodes and the communication systems of the traversing nodes indicated in the traversing node information table 904, and creates the downward message including the IDs of the traversing nodes and the communication systems with the traversing nodes present in the route to the slave unit transmitting the downward message.

● Effect of Fourth Embodiment

According to the present embodiment, the master unit (the second collection device 20) is capable of omitting the process of tracing the combination of the address ID and the master node indicated in the downward routing table 901 at the transmission time of a downward message to the slave unit, and creating the source routing header and the wireless system bitmap.

According to the present Fourth Embodiment, the second collection device 20 is capable of creating the downward message using the source routing header and the wireless system bitmap indicated in the traversing node information table 904.

● Another Example of Fourth Embodiment

In the present embodiment, description has been made by using the first slave units 10x and the second slave units 20x; however, the third slave units 30x also perform a similar operation as the first slave units 10x.

Further, in the present embodiment, in order to assign information at the transmission time and the transfer time of upward messages, an IPv6 Hop-by-Hop extension header is used; however, any method is enough as long as the method can notify of the combination of the wireless systems and the traversing nodes used in the transmission time and the transfer time of upward messages. For example, a method to add the combination as an option header may be adopted.

Further, in the present embodiment, two types of wireless systems of the first PHY/MAC and the second PHY/MAC are expressed by 0 or 1; however, more than two types of wireless systems may be designated by using a plurality of bits.

Furthermore, as an embodiment, an upward message of the present embodiment may be transmitted instead of the notification message (DAO message (DAO-2)) transmitted when the slave unit completes the operation to enter the communication system 504. The second collection device 20 is capable of creating both of the downward routing table 901 and the traversing node information table 904 from the upward message by the second downward route construction unit 320.

Fifth Embodiment

In Fourth Embodiment, description has been made on the method in which the slave unit assigns an identifier indicating the ID of the slave unit and the wireless system with the master node at the time of transmission and transfer time of an upward message, and the master unit determines a downward route and a wireless system used for a downward message using the information of the upward message.

In Fifth Embodiment, different points from Fourth Embodiment will be described.

In the present embodiment, the ID of the slave unit is assigned at the time of transmission and the transfer time of the upward message; however, the method to determine the downward route and the wireless system when the communication system is not assigned will be described.

Fig. 49 expresses a network wherein the first slave unit 10x, the second slave unit 20x and the third slave unit 30x are mixed in the communication system 504.

● Operation of Slave Unit (Assigning only the ID of the slave unit)

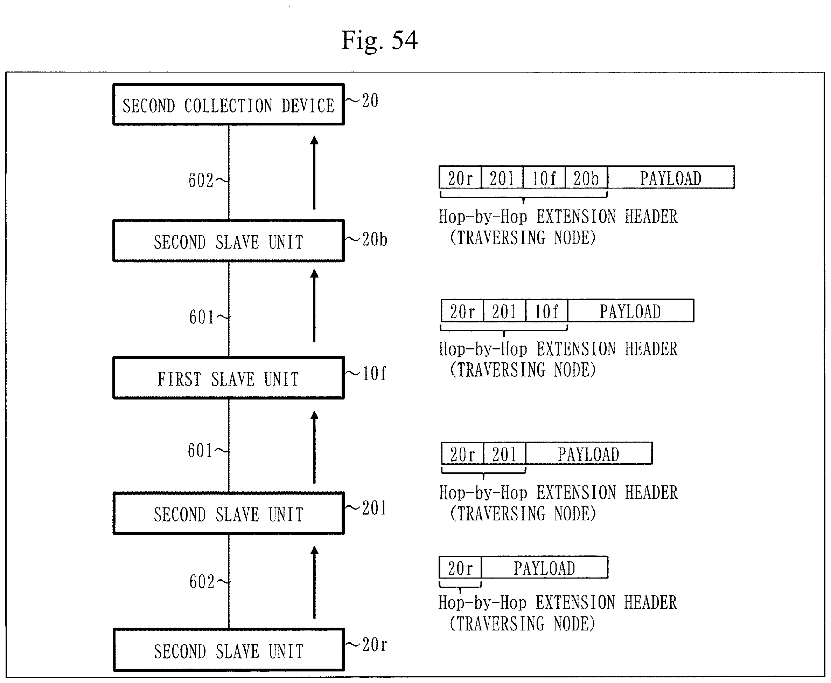

Fig. 54 illustrates a situation in which nodes traversed to the second collection device are added to the upward message transmitted by the second slave unit 20r using the IPv6 Hop-by-Hop extension header.

The second slave unit 20r indicates 20r as the ID of the second slave unit 20r in the Hop-by-Hop extension header, and transmits the upward message to the second slave unit 20l being the master node, by the multi-hop communication unit 340.

The second slave unit 20l that has received the upward message from the second slave unit 20r to the second collection device 20 indicates 20l as the ID of the second slave unit 20l in the Hop-by-Hop extension header, and transmits the upward message to the first slave unit 10f being the master node, by the multi-hop communication unit 340.

The first slave unit 10f that has received the upward message from the second slave unit 20l to the second collection device 20 indicates 10f as the ID of the first slave unit 10f in the Hop-by-Hop extension header, and transmits the upward message to the second slave unit 20b being the master node, by the first multi-hop communication unit 301.

The second slave unit 20b that has received the upward message from the first slave unit 10f to the second collection device 20 indicates 20b as the ID of the second slave unit 20b in the Hop-by-Hop extension header, and transmits the upward message to the second collection device 20 being the master node, by the multi-hop communication unit 340.

● Operation of Master Unit (Receiving only the ID of the slave unit)

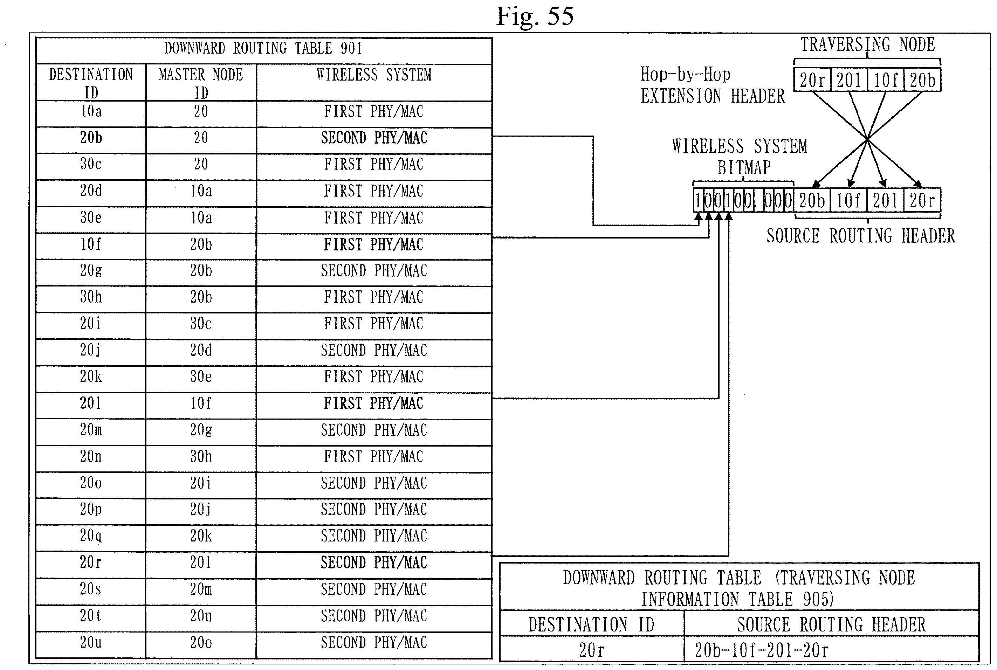

Fig. 55 expresses a situation in which the second collection device 20 that has received the upward message from the second slave unit 20r registers the traversing nodes used for downward traffic to the second slave unit 20r in the traversing node information table 905 being a part of the downward routing table.

When the second collection device 20 receives the upward message from the second slave unit 20r, the second collection device 20 acquires the traversing nodes from the Hop-by-Hop extension header, and by sorting the traversing nodes in reverse order, creates a source routing header addressed to the second slave unit 20r, by the second downward route construction unit 320.

The second collection device 20 registers the information on the source routing header and the wireless system bitmap in the traversing node information table 905 as the source routing header addressed to the second slave unit 20r, by the second downward route construction unit 320.

When the second collection device 20 transmits a downward message addressed to the second slave unit 20r, if the second slave unit 20r has been registered in the traversing node information table 905, the second collection device 20 uses the source routing header.

Further, the multi-hop communication unit 340 of the second collection device 20 creates a wireless system bitmap by searching for the destination ID indicated in the source routing header from the downward routing table 901.

As described above, at the transmission time and the transfer time of the upward message toward the master unit, the slave unit in the communication system 504 of Fifth Embodiment indicates the IDs of the nodes being the slave units in the upward message so as to show the traversing order.

The master unit stores the IDs of the nodes indicated in the upward message in a memory unit or a storage device, and creates a downward message for the slave unit that has transmitted the upward message to the master unit using the IDs of the nodes stored.

● Summary of Fifth Embodiment

The communication system 504 of Fifth Embodiment is characterized by using the information of an upward route, and constructing a downward route when the information on the upward route is received.

When the multi-hop communication unit 340 of the slave unit (slave node) creates and transmits an upward message addressed to the master unit to the master unit, the multi-hop communication unit 340 creates the upward message indicating the ID of the own node, and transmits the upward message to the master unit.

When the multi-hop communication unit 340 of the slave unit (slave node) receives and transfers the upward message to the master unit, the multi-hop communication unit 340 indicates the ID of the own node in the upward message, and transmits the upward message to the master node.

When the slave unit (slave node) transmits or transfers the upward message addressed to the master unit, the slave unit assigns the ID of the slave unit to the upward message.

The upward message addressed to the master unit notifies the master unit of the route (all traversing nodes) used for transferring the message.

The second downward route construction unit 320 of the master unit acquires the traversing nodes assigned to the upward message received from the slave node, and records the contents sorted in reverse order in the traversing node information table 905 (source routing table).

When the second downward route construction unit 320 of the master unit receives the upward message indicating the IDs of traversing nodes from the slave node, the second downward route construction unit 320 records the IDs of traversing nodes indicated in the upward message in a manner associated with the ID of the slave node in the traversing node information table 905.

When the multi-hop communication unit 340 of the master unit transmits a downward message to the slave node, the multi-hop communication unit 340 searches for the target node from the traversing node information table 905 (source routing table), and acquires the route to be used.

When the multi-hop communication unit 340 of the master unit creates the downward message for the slave node, the multi-hop communication unit 340 refers to the IDs of the traversing nodes indicated in the traversing node information table 905, and specifies the traversing nodes present in the route to the slave unit to be transmitted the downward message.

The multi-hop communication unit 340 of the master unit acquires the wireless systems by the IDs of the traversing nodes in the route from the downward routing table 901.

The multi-hop communication unit 340 of the master unit refers to the downward routing table 901, and specifies the communication system corresponding to the traversing nodes present in the route to the slave unit to be transmitted the downward message.

The multi-hop communication unit 340 of the master unit creates the downward message including the IDs of the traverse nodes and the communication systems of the traversing nodes.

● Effect of Fifth Embodiment

According to this Fifth Embodiment, the master unit (the second collection device 20) is capable of omitting the process to trace the combination of the destination ID and the master node indicated in the downward routing table 901, and to create the source routing header and the wireless system bitmap at the time of transmitting the downward message to the slave unit.

According to this Fifth Embodiment, the master unit (the second collection device 20) can easily create the source routing header by the traversing node information table 905.

● Another Example of Fifth Embodiment

In the present embodiment, description has been made by using the first slave units 10x and the second slave units 20x; however, the third slave units 30x also perform a similar operation as the first slave units 10x.

Further, in the present embodiment, the IPv6 Hop-by-Hop extension header is used to assign the information at the time of transmitting and transferring the upward message; however, any method is enough as long as the method can notify of the combination of the wireless systems and the traversing nodes used at the time of transmitting and transferring the upward message, and may be a method to add the combination as an option header, for example.

Furthermore, in the present embodiment, the method to express two types of wireless systems of the first PHY/MAC and the second PHY/MAC is used; however, more than two types of wireless systems may be specified by using a plurality of bits.

Additionally, the item of "wireless system bitmap" may be provided in the traversing node information table 905, and the traversing node information table 905 may be made to have a similar format as the traversing node information table 904.

When the multi-hop communication unit 340 of the master unit refers to the downward routing table 901, and specifies the communication systems of nodes, the multi-hop communication unit 340 writes the communication systems specified in order in "wireless system bitmap". As a result, "wireless system bitmap" similar to the traversing node information table 904 is created.

Description has been made above on a plurality of configurations; however, two or more of these configurations may be configured and implemented. Meanwhile, one configuration or a combination of two or more configurations of these configurations may be partially implemented. The present disclosure is not limited to the embodiments, and various modifications can be made as necessary.

**Reference Signs List**

10: first collection device; 20: second collection device; 10x: first slave unit; 20x: second slave unit; 30x: third slave unit; 100: first communication device; 101: antenna; 102: first PHY; 103: first MAC; 111: sensor device; 112: actuator device; 113: timekeeping calendar; 200: second communication device; 201: antenna; 202: second PHY; 203: second MAC; 300: processor; 301: first multi-hop communication unit; 302: second multi-hop communication unit; 310: first downward route construction unit; 311: first upward route construction unit; 320: second downward route construction unit; 321: second upward route construction unit; 330: protocol decision unit; 340: multi-hop communication unit; 350: downward route construction unit; 360: upward route construction unit; 370: protocol conversion unit; 501: communication system; 502: communication system; 503: communication system; 504: communication system; 601: wireless link; 602: wireless link; 900: memory unit; 901: downward routing table; 902: routing table; 903: rank table; 904: traversing node information table; 905: traversing node information table; 922: auxiliary storage device; 930: input interface; 940: output interface.

**Claims**

1. A slave unit connected to a wireless mesh network constructed based on a first rank value calculated by a first protocol, the slave unit comprising:

    a communication device to receive one or more control messages indicating route information including rank information of a node, from one or more neighboring nodes;
    a protocol decision unit to decide to perform a process in accordance with a second protocol with respect to the rank information;
    an upward route construction unit to calculate a second rank value using the rank information in accordance with the second protocol based on a decision result by the protocol decision unit, to select one node from among the one or more neighboring nodes based on one or more second rank values as a master node, and to record in a routing table an ID of the master node and the second rank value calculated using rank information of the master node; and
    a multi-hop communication unit to create a notification message to notify of the ID of the master node recorded in the routing table, and to transmit the notification message to a master unit.

2. The slave unit as defined in claim 1, wherein

    the protocol decision unit decides to perform a process in accordance with the first protocol with respect to the rank information, and
    the upward route construction unit calculates the first rank value using the rank information in accordance with the first protocol based on a decision result by the protocol decision unit, and records a first rank value calculated by using rank information of the master node, in the routing table.

3. The slave unit as defined in claim 1 or claim 2, wherein

    the rank information includes at least either of first rank information and second rank information,
    the first rank information includes the first rank value and a first minimum increase value, and
    the second rank information includes the second rank value and a second minimum increase value.

4. The slave unit as defined in claim 3, wherein

    the communication device receives from one node, as the control message,
    a first control message including the first rank information of a transmission-source node of the control message, and
    a second control message including the second rank information of the transmission-source node of the control message, and wherein
    the upward route construction unit includes
    a first upward route construction unit to calculate the first rank value based on the first rank information of the transmission-source node, and

a second upward route construction unit to calculate the second rank value based on the second rank information of the transmission-source node.

5. The slave unit as defined in claim 3, wherein the upward route construction unit includes a protocol conversion unit to calculate the second rank value by applying a weighting to all hops from the master unit to the slave unit when only a first control message including the first rank information of the transmission-source node of the control message is received from one node, and to calculate the first rank value based on a hop count of a route when only a second control message including the second rank information of the transmission-source node of the control message is received from one node.

6. The slave unit as defined in any one of claim 1 through claim 5, wherein
in calculating the second rank value, the upward route construction unit calculates the second rank value by being multiplied by a weighting so that a difference occurs in the second rank value in a case of using a different communication system.

7. The slave unit as defined in any one of claim 1 through claim 6, wherein

the route information includes a continuation number of routes in the second communication system in a route from the master unit, and
when a plurality of nodes having a same second rank value exist, the upward route construction unit selects the master node by the continuation number.

8. The slave unit as defined in any one of claim 1 through claim 7, wherein

the route information includes presence or absence of a node which can communicate only with a first communication system in a route from the master unit, and
when a plurality of nodes having a same second rank values exist, the upward route construction unit selects the master node in accordance with presence or absence of the node which can communicate only with the first communication system.

9. The slave unit as defined in any one of claim 1 through claim 8, wherein

the route information includes a type of the master node or a communication system of the master node, and
only when the master node and the slave node respectively correspond to a first communication system and a second communication system, the upward route construction unit selects a second communication system as a communication system with the master node, from the type of the master node and a type of the slave node, or by referring to the communication system of the master node and a communication system of the slave node, and records the communication system with the master node in the routing table.

10. The slave unit as defined in claim 9, wherein the multi-hop communication unit indicates, in the notification message, the communication system with the master node recorded in the routing table, and transmits the notification message to the master unit.

11. The slave unit as defined in any one of claim 1 through claim 10, wherein

the communication device receives a downward message including an ID of a node present in a route to a slave unit to be transmitted the downward message, and a communication system with the node, and
the multi-hop communication unit refers to the ID of the node and the communication system with the node included in the downward message, specifies an ID of a slave node and a communication system with the slave node, and transfers the downward message to the slave node.

12. The slave unit as defined in any one of claim 1 through claim 11, wherein

when the multi-hop communication unit creates and transmits to the master unit an upward message addressed to the master unit, the multi-hop communication unit creates the upward message indicating an ID of own node and a communication system with the master node, and transmits the upward message to the master unit, and when the multi-hop communication unit receives the upward message, and transfers the upward message to the master unit, the multi-hop communication unit indicates the ID of the own node and the communication system with the master node in the upward message, and transmits the upward message to the master unit.

13. The slave unit as defined in any one of claim 1 through claim 11, wherein

when the multi-hop communication unit creates and transmits to the master unit an upward message addressed to the master unit, the multi-hop communication unit creates the upward message indicating an ID of own node, and transmits the upward message to the master unit, and
when the multi-hop communication unit receives the upward message and transfers the upward message to the master unit, the multi-hop communication unit indicates the ID of the own node in the upward message and transmits the upward message to the master unit.

14. A master unit connected to a wireless mesh network having a plurality of slave units as nodes, the master unit comprising:

a communication device to receive a notification message to notify of an ID of a master node and a communication system with the master node from a slave node;
a downward route construction unit to record, in a downward routing table, the ID of the master node, the communication system with the master node included in the notification message, and an ID of the slave node in an associated manner; and
a multi-hop communication unit to refer to the downward routing table, to specify one or more nodes present in a route to a slave unit to be transmitted a downward message, and to create the downward message including an ID of a node and a communication system with the node.

15. The master unit as defined in claim 14, wherein

the downward route construction unit records first rank information and second rank information in a rank table, and
the multi-hop communication unit creates a first control message including the first rank information and a second control message including the second rank information, and transmits the first control message and the second control message to a neighboring node.

16. The master node as defined in claim 14 or claim 15, wherein

when the downward route construction unit receives an upward message indicating an ID of a traversing node, and a communication system of the traversing node from a slave node, the downward route construction unit records, in a traversing node information table, the ID of the traversing node and the communication system of the traversing node indicated in the upward message in a manner associated with an ID of the slave node and when the multi-hop communication unit creates a downward message for the slave node, the multi-hop communication unit refers to the ID of the traversing node and the communication system of the traversing node indicated in the traversing node information table, and creates the downward message including the ID of the traversing node and the communication system with the traversing node present in a route to the slave unit to be transmitted the downward message.

17. The master unit as defined in claim 14 or claim 15, wherein

when the downward route construction unit receives an upward message indicating an ID of a traversing node from the slave node, the downward route construction unit records, in a traversing node information table, the ID of the traversing node indicated in the upward message in a manner associated with an ID of the slave node, and
when the multi-hop communication unit creates a downward message for the slave node, the multi-hop communication unit specifies a traversing node present in a route to the slave node by referring to the ID of the traversing node indicated in the traversing node information table, specifies a communication system of the traversing node corresponding to the traversing node present in the route to the slave node by referring to the downward routing table, and creates the downward message including the ID of the traversing node and the communication system of the traversing node.

**18.** A communication system comprising:

> a master unit to transmit a downward message including an ID of a node and a communication system with the node, and
> a slave unit to receive the downward message, to specify an ID of a slave node and a communication system with the slave node by referring to the ID of the node and the communication system with the node included in the downward message, and to transfer the downward message to the slave node.

**19.** The communication system as defined in claim 18, wherein

> when the slave unit transmits and transfers an upward message addressed to the master unit, the slave unit indicates an ID of a node and a communication system of the slave unit in the upward message, and
> the master unit stores the ID of the node and the communication system indicated in the upward message, and creates a downward message using the ID of the node and the communication system stored.

**20.** The communication system as defined in claim 18, wherein

> when the slave unit transmits and transfers an upward message addressed to the master unit, the slave unit indicates the ID of the node of the slave unit in the upward message, and
> the master unit stores the ID of the node indicated in the upward message, and creates a downward message using the ID of the node stored.

**21.** The communication system as defined in claim 18, wherein

> the master unit and the slave unit are connected to a wireless mesh network which can be communicated via a first protocol and a second protocol, and
> the master unit and the slave unit communicate only via the second protocol by stopping communication via the first protocol.

**22.** A communication method of a slave unit that is connected to a wireless mesh network constructed based on a first rank value calculated by a first protocol, the communication method comprising:

> by a communication device, receiving one or more control messages indicating route information including rank information of a node, from one or more neighboring nodes;
> by a protocol decision unit, deciding to perform a process in accordance with a second protocol with respect to the rank information;
> by an upward route construction unit, calculating a second rank value using the rank information in accordance with the second protocol based on a decision result by the protocol decision unit, selecting one node from among the one or more neighboring nodes as a master node based on one or more second rank values, and recording an ID of the master node and a second rank value calculated using rank information of the master node, in a routing table; and
> by a multi-hop communication unit, creating and transmitting to a master unit a notification message notifying of the ID of the master node recorded in the routing table.

**23.** A communication method of a master unit that is connected to a wireless mesh network having a plurality of slave units as nodes, the communication method comprising:

> by a communication device, receiving a notification message to notify of an ID of a master node and a communication system with the master node, from a slave node;
> by a downward route construction unit, recording, in a downward routing table, the ID of the master node and the communication system with the master node included in the notification message, and an ID of the slave node in an associated manner; and
> by a multi-hop communication unit, referring to the downward routing table, specifying one or more nodes present in a route to a slave unit to be transmitted a downward message, and creating the downward message including an ID of a node and a communication system with the node.

**24.** A program to cause a slave unit that is connected to a wireless mesh network constructed based on a first rank value calculated by a first protocol, wherein a communication device receives one or more control messages indicating route information including rank information of a node from one or more neighboring nodes,to perform:

a protocol decision process to decide to perform a process in accordance with a second protocol with respect to the rank information;

an upward route construction process to calculate a second rank value using the rank information in accordance with the second protocol based on a decision result by the protocol decision process, to select one node from among the one or more neighboring nodes based on one or more second rank values as a master node, and to record an ID of the master node and a second rank value calculated using rank information of the master node, in a routing table; and

a multi-hop communication process to create and transmit to a master unit a notification message to notify of the ID of the master node recorded in the routing table.

25. A program to cause a master unit that is connected to a wireless mesh network having a plurality of slave units as nodes to perform a communication process to receive a notification message to notify of an ID of a master node and a communication system with the master node, from a slave node, and

to cause the master unit that is connected to the wireless mesh network having the plurality of slave units as nodes, wherein a communication device receives the notification message to notify of the ID of the master node and the communication system with the master node from the slave node, to perform:

a downward route construction process to record in a downward routing table the ID of the master node and the communication system with the master node included in the notification message, and an ID of the slave node in an associated manner; and

a multi-hop communication process to refer to the downward routing table, to specify one or more nodes present in a route to a slave unit to be transmitted a downward message, and to create the downward message including an ID of a node and a communication system with the node.

# Fig. 1

501:COMMUNICATION SYSTEM

FIRST COLLECTION
DEVICE (MASTER UNIT) ~10

~601 ~601 ~601

FIRST SLAVE
UNIT ~10a

FIRST SLAVE
UNIT ~10b

FIRST SLAVE
UNIT ~10c

~601 ~601

~601 ~601 ~601

~601

FIRST SLAVE
UNIT ~10d

FIRST SLAVE
UNIT ~10e

FIRST SLAVE
UNIT ~10f

FIRST SLAVE
UNIT ~10g

FIRST SLAVE
UNIT ~10h

FIRST SLAVE
UNIT ~10i

# Fig. 2

EP 4 648 482 A1

10:FIRST COLLECTION DEVICE

FIRST COMMUNICATION DEVICE ~100

| ANTENNA | ~101 |

FIRST PHY ~102

FIRST MAC ~103

TIMEKEEPING CALENDAR ~113

PROCESSOR ~300

FIRST MULTI-HOP COMMUNICATION UNIT ~301

FIRST DOWNWARD ROUTE CONSTRUCTION UNIT ~310

AUXILI-ARY STORAGE DEVICE ~922

INPUT INTER-FACE ~930

OUTPUT INTER-FACE ~940

MEMORY UNIT ~900

## Fig. 3

10x:FIRST SLAVE UNIT

FIRST COMMUNICATION DEVICE ~100

| ANTENNA | ~101 |

FIRST PHY ~102

FIRST MAC ~103

SENSOR DEVICE ~111

ACTUATOR DEVICE ~112

TIMEKEEPING CALENDAR ~113

PROCESSOR ~300

FIRST MULTI-HOP COMMUNICATION UNIT ~301

FIRST UPWARD ROUTE CONSTRUCTION UNIT ~311

AUXILI-ARY STORAGE DEVICE ~922

INPUT INTER-FACE ~930

OUTPUT INTER-FACE ~940

MEMORY UNIT ~900

EP 4 648 482 A1

# Fig. 4

502:COMMUNICATION SYSTEM

SECOND COLLECTION DEVICE (MASTER UNIT) ~20
RPLrank1=128
RPL RANK 2= 32

~601   ~602   ~601

FIRST SLAVE UNIT ~10a
RPLrank1=256

SECOND SLAVE UNIT ~20b
RPLrank1=256
RPLrank2= 64

THIRD SLAVE UNIT ~30c
RPLrank1=256
RPLrank2= 96

~601   ~601   ~601   ~602   ~601   ~601

SECOND SLAVE UNIT ~20d
RPLrank1=384
RPLrank2=160

THIRD SLAVE UNIT ~30e
RPLrank1=384
RPLrank2=160

FIRST SLAVE UNIT ~10f
RPLrank1=384

SECOND SLAVE UNIT ~20g
RPLrank1=384
RPLrank2= 96

THIRD SLAVE UNIT ~30h
RPLrank1=384
RPLrank2=128

SECOND SLAVE UNIT ~20i
RPLrank1=384
RPLrank2=160

EP 4 648 482 A1

Fig. 5

20:SECOND COLLECTION DEVICE

SECOND COMMUNICATION DEVICE ~200

ANTENNA ~201

FIRST PHY ~102     SECOND PHY ~202

FIRST MAC ~103     SECOND MAC ~203

TIMEKEEPING CALENDAR ~113

PROCESSOR ~300

PROTOCOL DECISION UNIT ~330

MULTI-HOP COMMUNICATION UNIT ~340

FIRST MULTI-HOP COMMUNICATION UNIT ~301     SECOND MULTI-HOP COMMUNICATION UNIT ~302

DOWNWARD ROUTE CONSTRUCTION UNIT ~350

SECOND DOWNWARD ROUTE CONSTRUCTION UNIT ~320

AUXILI-ARY STORAGE DEVICE ~922

INPUT INTER-FACE ~930

OUTPUT INTER-FACE ~940

MEMORY UNIT ~900

DOWNWARD ROUTING TABLE ~901

RANK TABLE ~903

EP 4 648 482 A1

Fig. 6

20x:SECOND SLAVE UNIT

SECOND COMMUNICATION DEVICE ~200

ANTENNA ~201

| FIRST PHY ~102 | SECOND PHY ~202 |
| FIRST MAC ~103 | SECOND MAC ~203 |

SENSOR DEVICE ~111

ACTUATOR DEVICE ~112

TIMEKEEPING CALENDAR ~113

PROCESSOR ~300

PROTOCOL DECISION UNIT ~330

MULTI-HOP COMMUNICATION UNIT ~340

FIRST MULTI-HOP COMMUNICATION UNIT ~301

SECOND MULTI-HOP COMMUNICATION UNIT ~302

UPWARD ROUTE CONSTRUCTION UNIT ~360

FIRST UPWARD ROUTE CONSTRUCTION UNIT ~311

SECOND UPWARD ROUTE CONSTRUCTION UNIT ~321

PROTOCOL CONVERSION UNIT ~370

AUXILI-ARY STORAGE DEVICE ~922

INPUT INTER-FACE ~930

OUTPUT INTER-FACE ~940

MEMORY UNIT ~900

ROUTING TABLE ~902

EP 4 648 482 A1

Fig. 7

30x: THIRD SLAVE UNIT

FIRST COMMUNICATION DEVICE ~100

ANTENNA ~101

FIRST PHY ~102

FIRST MAC ~103

SENSOR DEVICE ~111

ACTUATOR DEVICE ~112

TIMEKEEPING CALENDAR ~113

PROCESSOR ~300

PROTOCOL DECISION UNIT ~330

MULTI-HOP COMMUNICATION UNIT ~340

FIRST MULTI-HOP COMMUNICATION UNIT ~301

SECOND MULTI-HOP COMMUNICATION UNIT ~302

UPWARD ROUTE CONSTRUCTION UNIT ~360

FIRST UPWARD ROUTE CONSTRUCTION UNIT ~311

SECOND UPWARD ROUTE CONSTRUCTION UNIT ~321

PROTOCOL CONVERSION UNIT ~370

AUXILIARY STORAGE DEVICE ~922

INPUT INTERFACE ~930

OUTPUT INTERFACE ~940

MEMORY UNIT ~900

ROUTING TABLE ~902

EP 4 648 482 A1

Fig. 8

Fig. 9

| RANK TABLE 903 OF SECOND COLLECTION DEVICE 20 | |
|---|---|
| RPL RANK 1 | 128 |
| RPL RANK 2 | 32 |
| MinHopRankIncrease-1 | 128 |
| MinHopRankIncrease-2 | 32 |

EP 4 648 482 A1

EP 4 648 482 A1

## Fig. 10

| ROUTING TABLE 902 OF FIRST SLAVE UNIT 10 a | |
|---|---|
| RPL RANK 1 | 256 (128 +128 +0) |
| MASTER NODE ID | 20 |
| MinHopRankIncrease-1 | 128 |

Fig. 11

| DOWNWARD ROUTING TABLE 901 | | |
|---|---|---|
| DESTINATION ID | MASTER NODE ID | WIRELESS SYSTEM |
| 10a | 20 | FIRST PHY/MAC |
| | | |
| | | |
| | | |

EP 4 648 482 A1

Fig. 12

WIRELESS SYSTEM
BITMAP

SOURCE ROUTING HEADER

SECOND COLLECTION DEVICE ～20

FIRST PHY／MAC

FIRST SLAVE UNIT ～10a

EP 4 648 482 A1

## Fig. 13

| ROUTING TABLE 902 OF SECOND SLAVE UNIT 20d | |
|---|---|
| RPL RANK 1 | 384 (256 +128 +0) |
| RPL RANK 2 | 160 (32 +32x2x2 +0) |
| MASTER NODE ID | 10a |
| MASTER NODE TYPE | FIRST SLAVE UNIT |
| WIRELESS SYSTEM WITH MASTER NODE | FIRST PHY/MAC |
| CONTINUATION OF HIGH-TRANSMISSION RATE | 0 |
| PRESENCE OF THIRD SLAVE UNIT | No |
| PRESENCE OF FIRST SLAVE UNIT | Yes |

EP 4 648 482 A1

# Fig. 14

| DOWNWARD ROUTING TABLE 901 | | |
|---|---|---|
| DESTINATION ID | MASTER NODE ID | WIRELESS SYSTEM |
| 10a | 20 | FIRST PHY/MAC |
| 20d | 10a | FIRST PHY/MAC |
| | | |
| | | |

EP 4 648 482 A1

# Fig. 15

WIRELESS SYSTEM BITMAP | SOURCE ROUTING HEADER

`0 0 0 0 0 0 . 0 0 0 | 10a | 20d`

SECOND COLLECTION DEVICE ~20

FIRST PHY／MAC

FIRST SLAVE UNIT ~10a

FIRST PHY／MAC

SECOND SLAVE UNIT ~20d

EP 4 648 482 A1

## Fig. 16

| ROUTING TABLE 902 OF THIRD SLAVE UNIT 30e | |
|---|---|
| RPL RANK 1 | 384 (256 +128 +0) |
| RPL RANK 2 | 160 (32 +32x2x2 +0) |
| MASTER NODE ID | 10a |
| MASTER NODE TYPE | FIRST SLAVE UNIT |
| WIRELESS SYSTEM WITH MASTER NODE | FIRST PHY/MAC |
| CONTINUATION OF HIGH-TRANSMISSION RATE | 0 |
| PRESENCE OF THIRD SLAVE UNIT | No |
| PRESENCE OF FIRST SLAVE UNIT | Yes |

EP 4 648 482 A1

## Fig. 17

| DOWNWARD ROUTING TABLE 901 | | |
|---|---|---|
| DESTINATION ID | MASTER NODE ID | WIRELESS SYSTEM |
| 10a | 20 | FIRST PHY/MAC |
| 20d | 10a | FIRST PHY/MAC |
| 30e | 10a | FIRST PHY/MAC |
|  |  |  |

# Fig. 18

| 0 | 0 | 0 | 0 | 0 | 0 | . | 0 | 0 | 0 | 10a | 30e |

WIRELESS SYSTEM
BITMAP  ·  SOURCE ROUTING HEADER

SECOND COLLECTION DEVICE  ~20

FIRST PHY/MAC

FIRST SLAVE UNIT  ~10a

FIRST PHY/MAC

THIRD SLAVE UNIT  ~30e

EP 4 648 482 A1

Fig. 19

EP 4 648 482 A1

## Fig. 20

| ROUTING TABLE 902 OF SECOND SLAVE UNIT 20b | |
|---|---|
| RPL RANK 1 | 256 (128 +128 +0) |
| RPL RANK 2 | 64 (32 +32 +0) |
| MASTER NODE ID | 20 |
| MASTER NODE TYPE | SECOND COLLECTION DEVICE |
| WIRELESS SYSTEM WITH MASTER NODE | SECOND PHY/MAC |
| CONTINUATION OF HIGH-TRANSMISSION RATE | 1 |
| PRESENCE OF THIRD SLAVE UNIT | No |
| PRESENCE OF FIRST SLAVE UNIT | No |

# Fig. 21

| DOWNWARD ROUTING TABLE 901 | | |
|---|---|---|
| DESTINATION ID | MASTER NODE ID | WIRELESS SYSTEM |
| 10a | 20 | FIRST PHY/MAC |
| 20d | 10a | FIRST PHY/MAC |
| 30e | 10a | FIRST PHY/MAC |
| 20b | 20 | SECOND PHY/MAC |

EP 4 648 482 A1

Fig. 22

EP 4 648 482 A1

```
┌─┬─┬─┬─┬─┬─┬─┬─┬─┬─┬──────┐
│1│0│0│0│0│0│.│0│0│0│ 20b  │
└─┴─┴─┴─┴─┴─┴─┴─┴─┴─┴──────┘
 └──────────────┘ └─────────┘
 WIRELESS SYSTEM   SOURCE ROUTING HEADER
     BITMAP
```

┌────────────────────┐
│ SECOND COLLECTION  │ ～20
│      DEVICE        │
└────────────────────┘
          │
          │ SECOND PHY／MAC
          │
┌────────────────────┐
│ SECOND SLAVE UNIT  │ ～20b
└────────────────────┘

Fig. 23

| ROUTING TABLE 902 OF FIRST SLAVE UNIT 10 f | |
|---|---|
| RPL RANK 1 | 384 (256 +128 +0) |
| MASTER NODE ID | 20b |
| MinHopRankIncrease-1 | 128 |

EP 4 648 482 A1

## Fig. 24

| DOWNWARD ROUTING TABLE 901 | | |
|---|---|---|
| DESTINATION ID | MASTER NODE ID | WIRELESS SYSTEM |
| 10a | 20 | FIRST PHY/MAC |
| 20d | 10a | FIRST PHY/MAC |
| 30e | 10a | FIRST PHY/MAC |
| 20b | 20 | SECOND PHY/MAC |
| 10f | 20b | FIRST PHY/MAC |

EP 4 648 482 A1

## Fig. 25

SECOND COLLECTION DEVICE ～20

SECOND PHY／MAC

SECOND SLAVE UNIT ～20b

FIRST PHY／MAC

FIRST SLAVE UNIT ～10f

| 1 | 0 | 0 | 0 | 0 | 0 | . | 0 | 0 | 0 | 20b | | 10f | |

WIRELESS SYSTEM BITMAP          SOURCE ROUTING HEADER

## Fig. 26

| ROUTING TABLE 902 OF SECOND SLAVE UNIT 20g | |
|---|---|
| RPL RANK 1 | 384 (256 +128 +0) |
| RPL RANK 2 | 96 (64 +32 +0) |
| MASTER NODE ID | 20b |
| MASTER NODE TYPE | SECOND SLAVE UNIT |
| WIRELESS SYSTEM WITH MASTER NODE | SECOND PHY/MAC |
| CONTINUATION OF HIGH-TRANSMISSION RATE | 2 |
| PRESENCE OF THIRD SLAVE UNIT | No |
| PRESENCE OF FIRST SLAVE UNIT | No |

EP 4 648 482 A1

Fig. 27

| DOWNWARD ROUTING TABLE 901 | | |
|---|---|---|
| DESTINATION ID | MASTER NODE ID | WIRELESS SYSTEM |
| 10a | 20 | FIRST PHY/MAC |
| 20d | 10a | FIRST PHY/MAC |
| 30e | 10a | FIRST PHY/MAC |
| 20b | 20 | SECOND PHY/MAC |
| 10f | 20b | FIRST PHY/MAC |
| 20g | 20b | SECOND PHY/MAC |

EP 4 648 482 A1

Fig. 28

| 1 | 1 | 0 | 0 | 0 | 0 | . | 0 | 0 | 0 | 20b | 20g |

WIRELESS SYSTEM
BITMAP            SOURCE ROUTING HEADER

SECOND COLLECTION
DEVICE                    ~20

SECOND PHY／MAC

SECOND SLAVE UNIT        ~20b

SECOND PHY／MAC

SECOND SLAVE UNIT        ~20g

EP 4 648 482 A1

Fig. 29

| ROUTING TABLE 902 OF THIRD SLAVE UNIT 30h | |
|---|---|
| RPL RANK 1 | 384 (256 +128 +0) |
| RPL RANK 2 | 128 (64 +32x2 +0) |
| MASTER NODE ID | 20b |
| MASTER NODE TYPE | SECOND SLAVE UNIT |
| WIRELESS SYSTEM WITH MASTER NODE | FIRST PHY/MAC |
| CONTINUATION OF HIGH-TRANSMISSION RATE | 1 |
| PRESENCE OF THIRD SLAVE UNIT | Yes |
| PRESENCE OF FIRST SLAVE UNIT | No |

EP 4 648 482 A1

# Fig. 30

| DOWNWARD ROUTING TABLE 901 | | |
|---|---|---|
| DESTINATION ID | MASTER NODE ID | WIRELESS SYSTEM |
| 10a | 20 | FIRST PHY/MAC |
| 20d | 10a | FIRST PHY/MAC |
| 30e | 10a | FIRST PHY/MAC |
| 20b | 20 | SECOND PHY/MAC |
| 10f | 20b | FIRST PHY/MAC |
| 20g | 20b | SECOND PHY/MAC |
| 30h | 20b | FIRST PHY/MAC |

EP 4 648 482 A1

# Fig. 31

WIRELESS SYSTEM BITMAP: `1 0 0 0 0 0 . 0 0 0`  SOURCE ROUTING HEADER: `20b  30h`

SECOND COLLECTION DEVICE ~20

SECOND PHY/MAC

SECOND SLAVE UNIT ~20b

FIRST PHY/MAC

THIRD SLAVE UNIT ~30h

Fig. 32

SECOND SLAVE UNIT 20i

THIRD SLAVE UNIT 30c

SECOND COLLECTION DEVICE 20

DIO RECEPTION STANDBY

DIO RECEPTION STANDBY

DIS-1
DIO-2
DIO-1
DIO-1
DAO-2

DIS-1
DIO-2
DIO-1
DAO-2

# Fig. 33

| ROUTING TABLE 902 OF THIRD SLAVE UNIT 30c | |
|---|---|
| RPL RANK 1 | 256 (128 +128 +0) |
| RPL RANK 2 | 96 (32 +32x2 +0) |
| MASTER NODE ID | 20 |
| MASTER NODE TYPE | SECOND COLLECTION DEVICE |
| WIRELESS SYSTEM WITH MASTER NODE | FIRST PHY/MAC |
| CONTINUATION OF HIGH-TRANSMISSION RATE | 0 |
| PRESENCE OF THIRD SLAVE UNIT | Yes |
| PRESENCE OF FIRST SLAVE UNIT | No |

EP 4 648 482 A1

## Fig. 34

| DOWNWARD ROUTING TABLE 901 | | |
|---|---|---|
| DESTINATION ID | MASTER NODE ID | WIRELESS SYSTEM |
| 10a | 20 | FIRST PHY/MAC |
| 20d | 10a | FIRST PHY/MAC |
| 30e | 10a | FIRST PHY/MAC |
| 20b | 20 | SECOND PHY/MAC |
| 10f | 20b | FIRST PHY/MAC |
| 20g | 20b | SECOND PHY/MAC |
| 30h | 20b | FIRST PHY/MAC |
| 30c | 20 | FIRST PHY/MAC |

EP 4 648 482 A1

## Fig. 35

SECOND COLLECTION DEVICE ~20

FIRST PHY／MAC

THIRD SLAVE UNIT ~30c

0 0 0 0 0 . 0 0 0 30c

WIRELESS SYSTEM    SOURCE ROUTING HEADER
BITMAP

## Fig. 36

| ROUTING TABLE 902 OF SECOND SLAVE UNIT 20i | |
|---|---|
| RPL RANK 1 | 384 (256 +128 +0) |
| RPL RANK 2 | 160 (96 +32x2 +0) |
| MASTER NODE ID | 30c |
| MASTER NODE TYPE | THIRD SLAVE UNIT |
| WIRELESS SYSTEM WITH MASTER NODE | FIRST PHY/MAC |
| CONTINUATION OF HIGH-TRANSMISSION RATE | 0 |
| PRESENCE OF THIRD SLAVE UNIT | Yes |
| PRESENCE OF FIRST SLAVE UNIT | No |

EP 4 648 482 A1

## Fig. 37

| DOWNWARD ROUTING TABLE 901 | | |
| --- | --- | --- |
| DESTINATION ID | MASTER NODE ID | WIRELESS SYSTEM |
| 10a | 20 | FIRST PHY/MAC |
| 20d | 10a | FIRST PHY/MAC |
| 30e | 10a | FIRST PHY/MAC |
| 20b | 20 | SECOND PHY/MAC |
| 10f | 20b | FIRST PHY/MAC |
| 20g | 20b | SECOND PHY/MAC |
| 20g | 20b | FIRST PHY/MAC |
| 30c | 20 | FIRST PHY/MAC |
| 20i | 30c | FIRST PHY/MAC |

EP 4 648 482 A1

# Fig. 38

```
┌─┬─┬─┬─┬─┬─┬─┬─┬─┬─┬────┬────┐
│0│0│0│0│0│0│.│0│0│0│30c │20i │
└─┴─┴─┴─┴─┴─┴─┴─┴─┴─┴────┴────┘
└──────────────┘ └──────────┘
  WIRELESS SYSTEM   SOURCE ROUTING HEADER
      BITMAP
```

```
┌──────────────────────┐
│  SECOND COLLECTION    │~20
│       DEVICE          │
└──────────────────────┘
           │
      FIRST PHY/MAC
           │
┌──────────────────────┐
│   THIRD SLAVE UNIT    │~30c
└──────────────────────┘
           │
      FIRST PHY/MAC
           │
┌──────────────────────┐
│   SECOND SLAVE UNIT   │~20i
└──────────────────────┘
```

EP 4 648 482 A1

# Fig. 39

START

ONLY ONE MASTER NODE CANDIDATE WITH SMALLEST RPL RANK 2? (S001)

No →

Yes ↓

ONLY ONE MASTER NODE CANDIDATE WITH LARGEST CONTINUATION NUMBER OF HIGH-TRANSMISSION RATE FROM COLLECTION DEVICE? (S003)

No →

Yes ↓

MASTER NODE CANDIDATE WITHOUT FIRST SLAVE UNIT IN ROUTE FROM COLLECTION DEVICE EXISTS? (S005)

No →

Yes ↓

NODE WITH SMALLEST RPL RANK 2 IS SELECTED AS MASTER NODE (S002)

NODE WITH SMALLEST RPL RANK 2 AND LARGEST CONTINUATION NUMBER OF HIGH-TRANSMISSION RATE FROM COLLECTION DEVICE IS SELECTED AS MASTER NODE (S004)

SELECT MASTER NODE RANDOMLY FROM NODES WITH SMALLEST RPL RANK 2 AND LARGEST CONTINUATION NUMBER OF HIGH-TRANSMISSION RATE FROM COLLECTION DEVICE, WITH WHICH FIRST SLAVE UNIT DOES NOT EXIST IN ROUTE (S006)

SELECT MASTER NODE RANDOMLY FROM NODES WITH SMALLEST RPL RANK 2 (S007)

END

EP 4 648 482 A1

# Fig. 40

SECOND COLLECTION DEVICE 20

602:WIRELESS LINK

601:WIRELESS LINK

FIRST SLAVE UNIT 10a

SECOND SLAVE UNIT 20b

~602

601:WIRELESS LINK

SECOND SLAVE UNIT 20c

SECOND SLAVE UNIT 20d

602:WIRELESS LINK

| ROUTING TABLE 902 OF FIRST SLAVE UNIT 10a | |
|---|---|
| RPLRANK1 | 256 (128+128+0) |
| MASTER NODE ID | 20 |

| ROUTING TABLE 902 OF SECOND SLAVE UNIT 20b | |
|---|---|
| RPL RANK 2 | 64 (32 + 32 +0) |
| MASTER NODE ID | 20 |
| MASTER NODE TYPE | SECOND COLLECTION DEVICE |
| WIRELESS SYSTEM WITH MASTER NODE | SECOND PHY/MAC |
| CONTINUATION OF HIGH-TRANSMISSION RATE | 1 |
| PRESENCE OF THIRD SLAVE UNIT | No |
| PRESENCE OF FIRST SLAVE UNIT | No |

| ROUTING TABLE 902 OF SECOND SLAVE UNIT 20d | | |
|---|---|---|
| MASTER NODE CANDIDATE | FIRST SLAVE UNIT 10a | SECOND SLAVE UNIT 20c |
| RPL RANK 2 | 160 (32+ 32x2x2 +0) | _128_ (96 + 32 +0) |
| MASTER NODE ID | 10a | 20c |
| MASTER NODE TYPE | FIRST SLAVE UNIT | SECOND SLAVE UNIT |
| WIRELESS SYSTEM WITH MASTER NODE | FIRST PHY/MAC | SECOND PHY/MAC |
| CONTINUATION OF HIGH-TRANSMISSION RATE | UNKNOWN | 3 |
| PRESENCE OF THIRD SLAVE UNIT | UNKNOWN | No |
| PRESENCE OF FIRST SLAVE UNIT | Yes | No |

| ROUTING TABLE 902 OF SECOND SLAVE UNIT 20c | |
|---|---|
| RPL RANK 2 | 96 (64 + 32 +0) |
| MASTER NODE ID | 20b |
| MASTER NODE TYPE | SECOND SLAVE UNIT |
| WIRELESS SYSTEM WITH MASTER NODE | SECOND PHY/MAC |
| CONTINUATION OF HIGH-TRANSMISSION RATE | 2 |
| PRESENCE OF THIRD SLAVE UNIT | No |
| PRESENCE OF FIRST SLAVE UNIT | No |

EP 4 648 482 A1

## Fig. 41

SECOND COLLECTION DEVICE 20

602:WIRELESS LINK

601:WIRELESS LINK

SECOND SLAVE UNIT 20b

FIRST SLAVE UNIT 10a

601:WIRELESS LINK

~601

THIRD SLAVE UNIT 30c

SECOND SLAVE UNIT 20d

~601:WIRELESS LINK

| ROUTING TABLE 902 OF FIRST SLAVE UNIT 10a | |
|---|---|
| RPLRANK1 | 256 (128+128+0) |
| MASTER NODE ID | 20 |

| ROUTING TABLE 902 OF SECOND SLAVE UNIT 20d | | |
|---|---|---|
| MASTER NODE CANDIDATE | FIRST SLAVE UNIT 10a | THIRD SLAVE UNIT 30c |
| RPL RANK 2 | <u>160 (32+32x2x2+0)</u> | 192 (128+32x2+0) |
| MASTER NODE ID | 10a | 30c |
| MASTER NODE TYPE | FIRST SLAVE UNIT | THIRD SLAVE UNIT |
| WIRELESS SYSTEM WITH MASTER NODE | FIRST PHY/MAC | FIRST PHY/MAC |
| CONTINUATION OF HIGH-TRANSMISSION RATE | UNKNOWN | 1 |
| PRESENCE OF THIRD SLAVE UNIT | UNKNOWN | Yes |
| PRESENCE OF FIRST SLAVE UNIT | Yes | No |

| ROUTING TABLE 902 OF SECOND SLAVE UNIT 20b | |
|---|---|
| RPL RANK 2 | 64 (32+32+0) |
| MASTER NODE ID | 20 |
| MASTER NODE TYPE | SECOND COLLECTION DEVICE |
| WIRELESS SYSTEM WITH MASTER NODE | SECOND PHY/MAC |
| CONTINUATION OF HIGH-TRANSMISSION RATE | 1 |
| PRESENCE OF THIRD SLAVE UNIT | No |
| PRESENCE OF FIRST SLAVE UNIT | No |

| ROUTING TABLE 902 OF THIRD SLAVE UNIT 30c | |
|---|---|
| RPL RANK 2 | 128 (64+32x2+0) |
| MASTER NODE ID | 20b |
| MASTER NODE TYPE | SECOND SLAVE UNIT |
| WIRELES SYSTEM WITH MASTER NODE | FIRST PHY/MAC |
| CONTINUATION OF HIGH-TRANSMISSION RATE | 1 |
| PRESENCE OF THIRD SLAVE UNIT | No |
| PRESENCE OF FIRST SLAVE UNIT | No |

Fig. 42

| ROUTING TABLE 902 OF SECOND SLAVE UNIT 20b | |
|---|---|
| RPL RANK 2 | 64 (32+32+0) |
| MASTER NODE ID | 20 |
| MASTER NODE TYPE | SECOND COLLECTION DEVICE |
| WIRELESS SYSTEM WITH MASTER NODE | SECOND PHY/MAC |
| CONTINUATION OF HIGH-TRANSMISSION RATE | 1 |
| PRESENCE OF THIRD SLAVE UNIT | No |
| PRESENCE OF FIRST SLAVE UNIT | No |

| ROUTING TABLE 902 OF SECOND SLAVE UNIT 20c | |
|---|---|
| RPL RANK 2 | 96 (64+32+0) |
| MASTER NODE ID | 20b |
| MASTER NODE TYPE | SECOND SLAVE UNIT |
| WIRELESS SYSTEM WITH MASTER NODE | SECOND PHY/MAC |
| CONTINUATION OF HIGH-TRANSMISSION RATE | 2 |
| PRESENCE OF THIRD SLAVE UNIT | No |
| PRESENCE OF FIRST SLAVE UNIT | No |

SECOND COLLECTION DEVICE 20

602:WIRELESS LINK

SECOND SLAVE UNIT 20b

602:WIRELESS LINK

SECOND SLAVE UNIT 20c

602:WIRELESS LINK

SECOND SLAVE UNIT 20e

602:WIRELESS LINK

601:WIRELESS LINK

FIRST SLAVE UNIT 10a

601:WIRELESS LINK

SECOND SLAVE UNIT 20d

# Fig. 43

| FIRST SLAVE UNIT 10a | |
|---|---|
| RPL RANK 1 | 256 (128+128+0) |
| MASTER NODE ID | 20 |

| SECOND SLAVE UNIT 20e | |
|---|---|
| RPL RANK 2 | 128 (96+32+0) |
| MASTER NODE ID | 20c |
| MASTER NODE TYPE | SECOND SLAVE UNIT |
| WIRELESS SYSTEM WITH MASTER NODE | SECOND PHY/MAC |
| CONTINUATION OF HIGH-TRANSMISSION RATE | 3 |
| PRESENCE OF THIRD SLAVE UNIT | No |
| PRESENCE OF FIRST SLAVE UNIT | No |

| SECOND SLAVE UNIT 20d | | |
|---|---|---|
| MASTER NODE CANDIDATE | FIRST SLAVE UNIT 10a | SECOND SLAVE UNIT 20e |
| RPL RANK 2 | 160 (32+32x2x2+0) | 160 (128+32+0) |
| MASTER NODE ID | 10a | 20e |
| MASTER NODE TYPE | FIRST SLAVE UNIT | SECOND SLAVE UNIT |
| WIRELESS SYSTEM WITH MASTER NODE | FIRST PHY/MAC | SECOND PHY/MAC |
| CONTINUATION OF HIGH-TRANSMISSION RATE | UNKNOWN | 4 |
| PRESENCE OF THIRD SLAVE UNIT | No | No |
| PRESENCE OF FIRST SLAVE UNIT | Yes | No |

EP 4 648 482 A1

## Fig. 44

| THIRD SLAVE UNIT 30b | |
|---|---|
| RPL RANK 2 | 96 (32 + 32x2 +0) |
| MASTER NODE ID | 20 |
| MASTER NODE TYPE | SECOND COLLECTION DEVICE |
| WIRELESS SYSTEM WITH MASTER NODE | FIRST PHY/MAC |
| CONTINUATION OF HIGH-TRANSMISSION RATE | 0 |
| PRERSENCE OF THIRD SLAVE UNIT | No |
| PRESENCE OF FIRST SLAVE UNIT | No |

| THIRD SLAVE UNIT 30c | |
|---|---|
| RPL RANK 2 | 160 (96 + 32x2 +0) |
| MASTER NODE ID | 30b |
| MASTER NODE TYPE | THIRD SLAVE UNIT |
| WIRELESS SYSTEM WITH MASTER NODE | FIRST PHY/MAC |
| CONTINUATION OF HIGH-TRANSMISSION RATE | 0 |
| PRESENCE OF THIRD SLAVE UNIT | Yes |
| PRESENCE OF FIRST SLAVE UNIT | No |

EP 4 648 482 A1

# Fig. 45

| ROUTING TABLE 902 OF THIRD SLAVE UNIT 30e | |
|---|---|
| RPL RANK 2 | 160 (32 + 32x2x2 +0) |
| MASTER NODE ID | 10a |
| MASTER NODE TYPE | FIRST SLAVE UNIT |
| WIRELESS SYSTEM WITH MASTER NODE | FIRST PHY/MAC |
| CONTINUATION OF HIGH-TRANSMISSION RATE | UNKNOWN |
| PRESENCE OF THIRD SLAVE UNIT | UNKNOWN |
| PRESENCE O F FIRST SLAVE UNIT | Yes |

| ROUTING TABLE 902 OF FIRST SLAVE UNIT 10a | |
|---|---|
| RPL RANK 1 | 256 (128+128+0) |
| MASTER NODE ID | 20 |

| ROUTING TABLE 902 OF SECOND SLAVE UNIT 20d | | |
|---|---|---|
| MASTER NODE CANDIDATE | THIRD SLAVE UNIT 30e | THIRD SLAVE UNIT30c |
| RPL RANK 2 | 224 (160+ 32x2 +0) | 224 (160 + 32x2 +0) |
| MASTER NODE ID | 30e | 30c |
| MASTER NODE TYPE | THIRD SLAVE UNIT | THIRD SLAVE UNIT |
| WIRELESS SYSTEM WITH MASTER NODE | FIRST PHY/MAC | FIRST PHY/MAC |
| CONTINUATION OF HIGH-TRANSMISSION RATE | UNKNOWN | 0 |
| PRESENCE OF THIRD. SLAVE UNIT | Yes | Yes |
| PRESENCE OF FIRST SLAVE UNIT | Yes | No |

EP 4 648 482 A1

# Fig. 46

| ROUTING TABLE 902 OF FIRST SLAVE UNIT 10a | |
|---|---|
| RPL RANK 1 | 256 (128+128+0) |
| MASTER NODE ID | 20 |

| ROUTING TABLE 902 OF FIRST SLAVE UNIT 10e | |
|---|---|
| RPL RANK 1 | 384 (256+128+0) |
| MASTER NODE ID | 10a |

| ROUTING TABLE 902 OF FIRST SLAVE UNIT 10b | |
|---|---|
| RPL RANK 1 | 256 (128+128+0) |
| MASTER NODE ID | 20 |

| ROUTING TABLE 902 OF FIRST SLAVE UNIT 10c | |
|---|---|
| RPL RANK 1 | 384 (256+128+0) |
| MASTER NODE ID | 10b |

SECOND COLLECTION DEVICE 20

601:WIRELESS LINK

~601:WIRELESS LINK

FIRST SLAVE UNIT 10a

FIRST SLAVE UNIT 10b

~601:WIRELESS LINK

~601:WIRELESS LINK

FIRST SLAVE UNIT 10e

FIRST SLAVE UNIT 10c

601:WIRELESS LINK

~601:WIRELESS LINK

SECOND SLAVE UNIT 20d

| ROUTING TABLE 902 OF SECOND SLAVE UNIT 20d | | |
|---|---|---|
| MASTER NODE CANDIDATE | FIRST SLAVE UNIT 10e | FIRST SLAVE UNIT 10c |
| RPL RANK 2 | 224 (32+ 32x3x2 +0) | 224 (32 + 32x3x2 +0) |
| MASTER NODE ID | 10a | 10c |
| MASTER NODE TYPE | FIRST SLAVE UNIT | FIRST SLAVE UNIT |
| WIRELESS SYSTEM WITH MASTER NODE | FIRST PHY/MAC | FIRST PHY/MAC |
| CONTINUATION OF HIGH-TRANSMISSION RATE | UNKNOWN | UNKNOWN |
| PRESENCE OF THIRD SLAVE UNIT | UNKNOWN | UNKNOWN |
| PRESENCE OF FIRST SLAVE UNIT | Yes | Yes |

EP 4 648 482 A1

Fig. 47

503:COMMUNICATION SYSTEM

Fig. 48

EP 4 648 482 A1

## Fig. 49

504:COMMUNICATION SYSTEM

```
┌──────────────────────────────────────────────────────────────┐
│                  SECOND COLLECTION DEVICE                      │
│  ┌────────────────────────────────────────────────────────┐  │  ～20
│  │  DOWNWARD ROUTING TABLE 901  (TRAVERSING NODE          │  │
│  │           INFORMATION TABLE 904)                        │  │
│  └────────────────────────────────────────────────────────┘  │
└──────────────────────────────────────────────────────────────┘
```

601～    602～    ～601

| FIRST SLAVE UNIT ～10a | SECOND SLAVE UNIT ～20b | THIRD SLAVE UNIT ～30c |

601～  ～601    601～  602～  ～601    601～

| SECOND SLAVE UNIT ～20d | THIRD SLAVE UNIT ～30e | FIRST SLAVE UNIT ～10f | SECOND SLAVE UNIT ～20g | THIRD SLAVE UNIT ～30h | SECOND SLAVE UNIT ～20i |

602～  601～  601～  602～  601～  602～

| SECOND SLAVE UNIT ～20j | SECOND SLAVE UNIT ～20k | SECOND SLAVE UNIT ～20l | SECOND SLAVE UNIT ～20m | SECOND SLAVE UNIT ～20n | SECOND SLAVE UNIT ～20o |

602～  602～  602～  602～  602～  602～

| SECOND SLAVE UNIT ～20p | SECOND SLAVE UNIT ～20q | SECOND SLAVE UNIT ～20r | SECOND SLAVE UNIT ～20s | SECOND SLAVE UNIT ～20t | SECOND SLAVE UNIT ～20u |

EP 4 648 482 A1

# Fig. 50

SECOND COLLECTION DEVICE 〜20

602〜

SECOND SLAVE UNIT 〜20b

WIRELESS SYSTEM TRAVERSING NODE

| 1 | 20b | PAYLOAD |

Hop-by-Hop
EXTENSION HEADER

EP 4 648 482 A1

## Fig. 51

WIRELESS SYSTEM   TRAVERSING NODE

Hop-by-Hop
EXTENSION HEADER     | 1 | 20b |

WIRELESS SYSTEM
BITMAP                SOURCE ROUTING HEADER

| 1 | 0 | 0 | 0 | 0 | 0 | . | 0 | 0 | 0 | 20b | | | |

| DOWNWARD ROUTING TABLE  (TRAVERSING NODE INFORMATION TABLE 904) | | |
|---|---|---|
| DESTINATION ID | SOURCE ROUTING HEADER | WIRELESS SYSTEM BITMAP |
| 20b | 20b | SECOND PHY/MAC |
| | | |
| | | |

## Fig. 52

SECOND COLLECTION DEVICE ~20

602~

WIRELESS SYSTEM     TRAVERSING NODE

| 1 | 0 | 0 | 1 | 20r | 20l | 10f | 20b | PAYLOAD |

Hop-by-Hop EXTENSION HEADER

SECOND SLAVE UNIT ~20b

601~

WIRELESS SYSTEM     TRAVERSING NODE

| 1 | 0 | 0 | 20r | 20l | 10f | PAYLOAD |

Hop-by-Hop EXTENSION HEADER

FIRST SLAVE UNIT ~10f

601~

WIRELESS SYSTEM    TRAVERSING NODE

| 1 | 0 | 20r | 20l | PAYLOAD |

Hop-by-Hop EXTENSION HEADER

SECOND SLAVE UNIT ~20l

602~

WIRELESS SYSTEM TRAVERSING NODE

| 1 | 20r | PAYLOAD |

SECOND SLAVE UNIT ~20r    Hop-by-Hop EXTENSION HEADER

EP 4 648 482 A1

## Fig. 53

WIRELESS SYSTEM   TRAVERSING NODE

Hop-by-Hop
EXTENSION HEADER

| 1 | 0 | 0 | 1 | 20r | 201 | 10f | 20b |

| 1 | 0 | 0 | 1 | 0 | 0 | 0 | 0 | 0 | 20b | 10f | 201 | 20r |

WIRELESS SYSTEM  SOURCE ROUTING HEADER
BITMAP

| DOWNWARD ROUTING TABLE (TRAVERSING NODE INFORMATION TABLE 904) | | |
|---|---|---|
| DESTINATION ID | SOURCE ROUTING HEADER | WIRELESS SYSTEM BITMAP |
| 20b | 20b | SECOND PHY/MAC |
| 20r | 20b-10f-201-20r | SECOND PHY/MAC - FIRST PHY/MAC - FIRST PHY/MAC - SECOND PHY/MAC |
| | | |

## Fig. 54

SECOND COLLECTION DEVICE ～20

602～

20r | 201 | 10f | 20b | PAYLOAD

Hop-by-Hop EXTENSION HEADER
(TRAVERSING NODE)

SECOND SLAVE UNIT ～20b

601～

20r | 201 | 10f | PAYLOAD

Hop-by-Hop EXTENSION HEADER
(TRAVERSING NODE)

FIRST SLAVE UNIT ～10f

601～

20r | 201 | PAYLOAD

Hop-by-Hop EXTENSION HEADER
(TRAVERSING NODE)

SECOND SLAVE UNIT ～201

602～

20r | PAYLOAD

Hop-by-Hop EXTENSION HEADER
(TRAVERSING NODE)

SECOND SLAVE UNIT ～20r

EP 4 648 482 A1

# Fig. 55

| DOWNWARD ROUTING TABLE 901 | | |
|---|---|---|
| DESTINATION ID | MASTER NODE ID | WIRELESS SYSTEM |
| 10a | 20 | FIRST PHY/MAC |
| **20b** | **20** | **SECOND PHY/MAC** |
| 30c | 20 | FIRST PHY/MAC |
| 20d | 10a | FIRST PHY/MAC |
| 30e | 10a | FIRST PHY/MAC |
| **10f** | **20b** | **FIRST PHY/MAC** |
| 20g | 20b | SECOND PHY/MAC |
| 30h | 20b | FIRST PHY/MAC |
| 20i | 30c | FIRST PHY/MAC |
| 20j | 20d | SECOND PHY/MAC |
| 20k | 30e | FIRST PHY/MAC |
| **20l** | **10f** | **FIRST PHY/MAC** |
| 20m | 20g | SECOND PHY/MAC |
| 20n | 30h | FIRST PHY/MAC |
| 20o | 20i | SECOND PHY/MAC |
| 20p | 20j | SECOND PHY/MAC |
| 20q | 20k | SECOND PHY/MAC |
| **20r** | **20l** | **SECOND PHY/MAC** |
| 20s | 20m | SECOND PHY/MAC |
| 20t | 20n | SECOND PHY/MAC |
| 20u | 20o | SECOND PHY/MAC |

TRAVERSING NODE

Hop-by-Hop
EXTENSION HEADER

| 20r | 20l | 10f | 20b |

WIRELESS SYSTEM
BITMAP

| 1 | 0 | 0 | 1 | 0 | 0 | 0 | 0 | 0 | 20b | 10f | 20l | 20r |

SOURCE ROUTING HEADER

| DOWNWARD ROUTING TABLE (TRAVERSING NODE INFORMATION TABLE 905) | |
|---|---|
| DESTINATION ID | SOURCE ROUTING HEADER |
| 20r | 20b-10f-20l-20r |

EP 4 648 482 A1

## INTERNATIONAL SEARCH REPORT

International application No.

**PCT/JP2024/003775**

### A. CLASSIFICATION OF SUBJECT MATTER

*H04W 40/02*(2009.01)i; *H04W 4/38*(2018.01)i; *H04W 40/12*(2009.01)i; *H04W 40/24*(2009.01)i; *H04W 84/18*(2009.01)i

FI: H04W40/02; H04W4/38; H04W40/12; H04W40/24; H04W84/18

According to International Patent Classification (IPC) or to both national classification and IPC

### B. FIELDS SEARCHED

Minimum documentation searched (classification system followed by classification symbols)

H04W40/02; H04W4/38; H04W40/12; H04W40/24; H04W84/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/168327 A1 (MITSUBISHI ELECTRIC CORPORATION) 11 August 2022 (2022-08-11)<br>paragraphs [0035]-[0101], fig. 12-18 | 1-25 |
| A | US 2022/0377643 A1 (MITSUBISHI ELECTRIC RESEARCH LABORATORIES, INC.) 24 November 2022 (2022-11-24)<br>paragraph [0081] | 1-25 |
| A | 川島 佑毅 KAWASHIMA, Yuki. 電子情報通信学会２０２１年総合大会講演論文集 通信1 PROCEEDINGS OF THE 2021 IEICE GENERAL CONFERENCE. 23 February 2021, p. 448<br>entire text | 1-25 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/003775**

| Patent document cited in search report | | | Publication date (day/month/year) | Patent family member(s) | | | Publication date (day/month/year) |
|---|---|---|---|---|---|---|---|
| WO | 2022/168327 | A1 | 11 August 2022 | CN | 116888949 | A | |
| US | 2022/0377643 | A1 | 24 November 2022 | WO | 2022/239478 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6752383 B

**Non-patent literature cited in the description**

- **T. WINTER et al.** RPL: IPv6 Routing Protocol for Low Power and Lossy Networks. *IFTF(Internet Engineering Task Force) Trust*, March 2012, ISSN 2070-1721, https://www.rfc-editor.org/rfc/rfc6550>